(19) Europäisches Patentamt
European Patent Office
Office européen des brevets

(11) EP 0 915 462 A1

(12) EUROPEAN PATENT APPLICATION
published in accordance with Art. 158(3) EPC

(43) Date of publication:
12.05.1999 Bulletin 1999/19

(51) Int. Cl.$^6$: G11B 11/10

(21) Application number: 97930772.5

(86) International application number:
PCT/JP97/02420

(22) Date of filing: 11.07.1997

(87) International publication number:
WO 98/02878 (22.01.1998 Gazette 1998/03)

(84) Designated Contracting States:
AT BE CH DE DK ES FI FR GB GR IE IT LI LU MC
NL PT SE

(30) Priority: 12.07.1996 JP 182901/96
18.09.1996 JP 267840/96
19.09.1996 JP 269363/96

(71) Applicants:
• HITACHI MAXELL, LTD.
Osaka-fu 567 (JP)
• SANYO ELECTRIC Co., Ltd.
Moriguchi-shi, Osaka 570 (JP)

(72) Inventors:
• AWANO, Hiroyuki
Noda-shi, Chiba 278 (JP)
• SHIRAI, Hiroshi
Kitasouma-gun, Ibaraki 302-01 (JP)
• YOSHIHIRO, Masafumi
Kitasouma-gun, Ibaraki 302-01 (JP)
• OONUKI, Satoru
Toride-shi, Ibaraki 302 (JP)
• OHTA, Norio
Tsukuba-0un, Ibaraki 300-24 (JP)
• SHIMAZAKI, Katsusuke
Kitasouma-gun, Ibaraki 302-01 (JP)
• NAGAI, Nobuyuki
Tsukuba-gun, Ibaraki 300-24 (JP)
• SUMI, Satoshi
Gifu-city, Gifu 501-31 (JP)
• YAMAGUCHI, Atsushi
Ogaki-city, Gifu 503 (JP)

(74) Representative:
Wiebusch, Manfred
TER MEER STEINMEISTER & PARTNER GbR,
Patentanwälte,
Artur-Ladebeck-Strasse 51
33617 Bielefeld (DE)

(54) MAGNETO-OPTICAL RECORDING MEDIUM, ITS REPRODUCING METHOD AND REPRODUCER

(57) A magneto-optical recording medium 11 is irradiated with a reproducing light beam 13 so that only a minute magnetic domain 313b, which is subjected to recording in a recording layer 18 and which is smaller than 1/2 of a spot radius of the recording light beam 13, is selected by a gate layer 17 and transferred to a magnetic domain-magnifying and reproducing layer 3. The magnetic domain transferred to the magnetic domain-magnifying and reproducing layer 3 is magnified by using a magnifying and reproducing magnetic field 411 of an alternating magnetic field. A large reproduction signal is obtained from the magnified magnetic domain 419, and the minute magnetic domain can be subjected to reproduction at a high resolving power and at a high S/N ratio. The magnified magnetic domain 419 is reduced by using a reducing reproducing magnetic field 415 of the alternating magnetic field. The gate layer 17 has a thickness which is not less than a thickness of a magnetic wall of the magnetic domain. A non-magnetic layer may be used in place of the gate layer 17.

Fig. 4A

REPRODUCING LIGHT BEAM

419
3
4
16
17
5
18
313a
313b
411 (MAGNIFYING REPRODUCING MAGNETIC FIELD)
311
413 (MAGNIFIED MAGNETIC DOMAIN)

EP 0 915 462 A1

## Description

### TECHNICAL FIELD

The present invention relates to a magneto-optical recording medium which makes it possible to reproduce information recorded in minute magnetic domains, with high resolving power and high S/N ratio. In particular, the present invention relates to a magneto-optical recording medium which makes it possible to perform reproduction individually in a magnified manner from a plurality of minute magnetic domains existing within a reproducing laser spot when reproduction is performed for the magneto-optical recording medium including minute magnetic domains which have been recorded. The present invention also relates to a reproducing method therefor, and a reproducing apparatus suitable for the magneto-optical recording medium and the reproducing method.

### BACKGROUND ART

Magneto-optical recording media such as magneto-optical disks are known as an optical memory having a large storage capacity on which information is rewritable. In order to allow such a magneto-optical recording medium to have a high density, it is conceived that minute recording magnetic domains are used to perform recording. It is possible to perform recording with minute recording magnetic domains by using the magneto-optical field modulation system. However, in order to reproduce each minute magnetic domain independently, it is desired to decrease the spot size of a reproducing light beam. However, the spot size is limited by NA of an optical head. Therefore, a technique is demanded, which makes it possible to reproduce information from minute magnetic domains while maintaining the present spot size. When it is intended to reproduce information from extremely minute recording magnetic domains while maintaining the present size of the spot size of the reproducing laser beam, it is necessary to solve the following problems.

(1) Since the spot size of the reproducing light beam is too large as compared with the size of the recording magnetic domain (recording mark), it is impossible to individually detect a plurality of magnetic domains existing within the reproducing light beam spot. Namely, the reproducing resolving power is insufficient. For this reason, it is impossible to reproduce information from individual recording magnetic domains.

(2) Each of recording magnetic domains has a small areal size, and hence the reproduction signal has a small output. For this reason, the reproduction signal has low S/N.

The magnetically induced super resolution technique, which has been suggested, for example, in Journal of Magnetic Society of Japan, Vol. 17, Supplement, No. S1, p. 201 (1993), is one of methods to solve the foregoing problem (1). A magneto-optical recording medium used for the magnetically induced super resolution generally comprises a reproducing layer for magnetically induced super resolution, an exchange force control layer, and information-recording layer. When the magneto-optical recording medium for the magnetically induced super resolution is subjected to reproduction by using a reproducing laser beam, if a certain area on the disk on which information to be reproduced is recorded is located outside the light beam spot, all magnetic domains subjected to recording in the information-recording layer undergo transfer to the reproducing layer for magnetically induced super resolution. When this area enters the light beam spot, two magnetic domains exist in an identical light beam spot. A reproduction signal is given as a sum of signals formed by the respective magnetic domains. Therefore, it is impossible to separate and reproduce, from the sum signal, the signals originating from the individual magnetic domains. Accordingly, one of the magnetic domains is masked so that it is not observed, and thus only the other magnetic domain can be used for reproduction. Thus, the magnetically induced super resolution technique is a method in which the reproducing resolving power is improved by narrowing the effective field of the radius of the light beam spot. However, the foregoing problem (2) cannot be solved even by using the magnetically induced super resolution technique, because the intensity of the reproduction signal from each of the magnetic domains does not change.

A reproducing apparatus has been contrived in order to perform reproduction from recording domains having been subjected to high density recording. Such an apparatus is exemplified by those based on the optical super resolution technique in which a shielding element is inserted into an optical path so that a light-collecting spot which exceeds the diffraction limit of the laser beam is obtained by means of optical super resolution. This technique is discussed in detail in Yamanaka et al., "High Density Optical Recording by Super Resolution", Jan. J. Appl. Phys., 28, Supplement 28-3, 1989, pp. 197-200. Besides, a method is also known, in which an ordinary laser beam or a laser beam comprising a main lobe and a pair of side lobes produced by means of the optical super resolution technique is allowed to have a pulsed waveform to decrease an area on a medium on which the temperature is raised so that high density recording/reproduction is realized.

The present inventors have disclosed, in Japanese Laid-Open Patent Publication No. 8-7350, a magneto-optical recording medium comprising, on a substrate, a reproducing layer and a recording layer, which makes it possible to magnify and reproduce a magnetic domain transferred to the reproducing layer, by transferring (or transmitting) the magnetic domain in the recording layer to the reproducing layer, and applying a reproducing magnetic field during reproduction. An alternating magnetic field is used as the reproducing magnetic field. Namely, a magnetic field in a direction to magnify the magnetic domain and a magnetic field in a direction opposite thereto are applied alternately to magnify and reduce (or shrink) respective magnetic domains. The use of the magneto-optical recording medium makes it possible to solve the foregoing problem (2) and amplify the reproduction signal obtained from the magnetic domain. However, it is not easy to control the reproducing magnetic field which is used to magnify the magnetic domain in the reproducing layer. In this viewpoint, this technique requires further improvement.

On the other hand, as disclosed in Japanese Laid-Open Patent Publication No. 8-7850, when the magnetic domain is transferred by the aid of the exchange coupling force, the magnification for the magnetic domain effected in the reproducing layer for transferring the magnetic domain thereto is restricted by the size of the magnetic domain in the recording layer. Namely, the size of the magnetic domain cannot be magnified to be larger than that of the magnetic domain in the recording layer, at a portion of the reproducing layer on the side of the recording layer. The size of the magnetic domain increases as the separating distance from the recording layer becomes large. Therefore, the following problem arises. Namely, in an area of the reproducing layer just over the magnetic domain in the recording layer intended to be reproduced, magnetization is in a direction identical with that in the recording layer in the depth direction for all concerning magnetic domains, however, in an area deviated in the in-plane direction from the magnetic domain intended to be reproduced, a state tends to occur, in which magnetic domain portions having a direction identical with that of magnetization in the recording layer in the depth direction and magnetic domain portions having a direction different therefrom co-exist in a mixed manner.

In order to respond to the multimedia technology developed for the recent information instruments and systems, it is demanded to realize a magneto-optical recording medium on which recording can be performed at a higher recording density. Moreover, it is necessary to develop a technique with which minute magnetic domains subjected to recording on such a high density recording medium can be reproduced at a higher resolving power, at a higher sensitivity, and with higher reliability.

A first object of the present invention is to solve the foregoing problem (1) and provide a magneto-optical recording medium on which control can be easily performed when magnetic domains are magnified by the aid of a reproducing magnetic field.

A second object of the present invention is to simultaneously solve the foregoing problems (1) and (2) and provide a novel magneto-optical recording medium on which minute magnetic domains can be used for recording, and a reproduction signal can be obtained from minute magnetic domains which have been recorded, at a high resolving power and at a high sensitivity.

A third object of the present invention is to simultaneously solve the foregoing problems (1) and (2) and provide a novel reproducing method for a magneto-optical recording medium, with which minute magnetic domains recorded can be subjected to reproduction at a high sensitivity.

A fourth object of the present invention is to provide a reproducing apparatus suitable for reproduction on a magneto-optical recording medium which achieves the foregoing first and second objects.

DISCLOSURE OF THE INVENTION

According to a first aspect of the present invention, there is provided a magneto-optical recording medium comprising, on a substrate, an information-recording layer, and a magnetic domain-magnifying and reproducing layer capable of magnifying and reproducing a magnetic domain transferred from the information-recording layer, by applying an external magnetic field having a polarity identical with that of magnetization of the magnetic domain, characterized in that:

the information-recording layer has a thickness h which satisfies $h/d > 0.5$ for a radius d of a minimum magnetic domain which has been recorded.

Awano, who is one of the inventors of the present invention, has been disclosed, in Japanese Laid-Open Patent Publication No. 8-7350, a magneto-optical recording medium comprising a reproducing layer and a recording layer, which is capable of transferring a magnetic domain from the recording layer to the reproducing layer during reproduction of information, magnifying the size of the magnetic domain in the reproducing layer to be larger than the size of the magnetic domain in the recording layer, and reproducing the magnetic domain by applying an external magnetic field having a polarity identical with that of magnetization of the magnetic domain. The first aspect of the present invention, which is relevant to the magneto-optical recording medium disclosed in Japanese Laid-Open Patent Publication No. 8-7350, specifies the magneto-optical recording medium having a structure which is more appropriate to magnify the magnetic domain transferred to the reproducing layer by applying the external magnetic field. Namely, when the magneto-optical recording medium of the present invention, which is constructed so that the thickness of the information-recording layer satisfies $h/d > 0.5$, is used, the magnification of the magnetic domain is realized in a suitable manner. Thus, it is possible to easily control the change in size of the magnetic domain in the magnetic domain-magnifying and reproducing layer, with respect to the reproducing magnetic field.

In a preferred embodiment of the magneto-optical recording medium according to the first aspect of the present invention, the magnetic domain-magnifying and reproducing layer can be composed of a rare earth transition metal having a compensation temperature within a range of -100 to 50 °C. In accordance with this preferred embodiment, when the magnetic domain transferred from the information-recording layer to the magnetic domain-magnifying and reproducing layer is magnified and reproduced, the obtained magneto-optical recording medium provides a high resolving power and high S/N.

According to a second aspect of the present invention, there is provided a magneto-optical recording medium comprising at least an information-recording layer on a substrate, for reproducing information by irradiating the magneto-optical recording medium with a reproducing light beam spot, characterized in that:

the magneto-optical recording medium comprises, on the substrate, a magnetic domain-magnifying and reproducing layer, a gate layer, and the information-recording layer in this order;
only one magnetic domain of a plurality of magnetic domains, subjected to recording in the information-recording layer and existing within the reproducing light beam spot, is transferred to the gate layer from the information-recording layer on the basis of a temperature distribution in the gate layer generated within the reproducing light beam spot when the magneto-optical recording medium is irradiate with the reproducing light beam spot; and
the magnetic domain-magnifying and reproducing layer enables the magnetic domain transferred from the gate layer to be magnified by applying an external magnetic field having a polarity identical with that of magnetization of the magnetic domain.

According to the second aspect of the present invention, one recording magnetic domain of the plurality of recording magnetic domains in the information-recording layer included in the reproducing light beam spot is transferred to the gate layer by utilizing the temperature distribution characteristic of the gate layer, the magnetic domain transferred to the gate magnetic layer is transferred to the magnetic domain-magnifying and reproducing layer, and the one domain transferred to the magnetic domain-magnifying and reproducing layer is magnified by using the reproducing magnetic field and detected. Accordingly, the reproducing resolving power is improved by the gate magnetic layer, and the intensity of the reproduction signal is increased by means of the magnetic domain-magnifying and reproducing technique. Thus, it is possible to improve S/N.

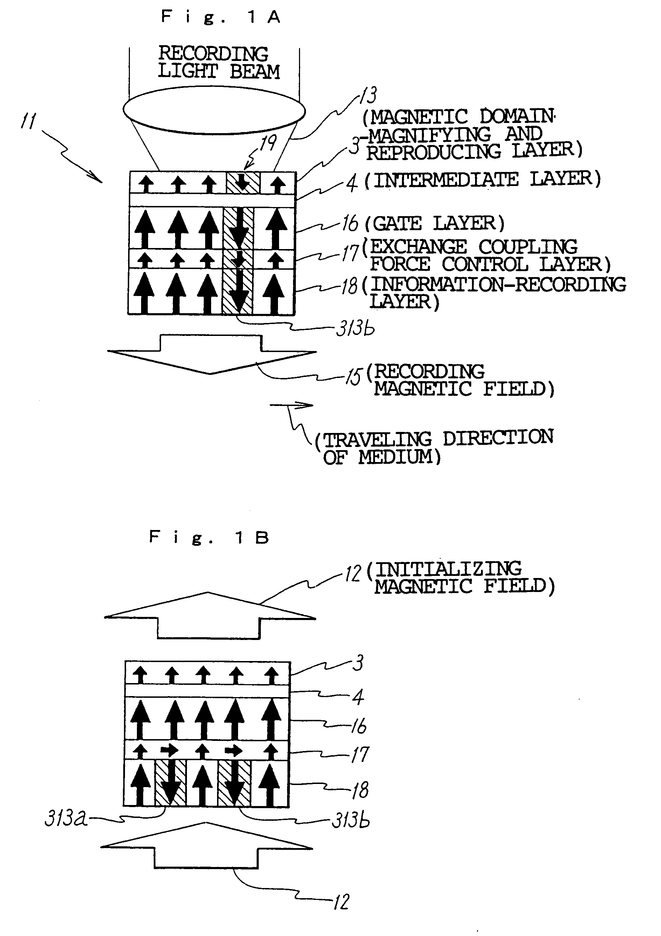

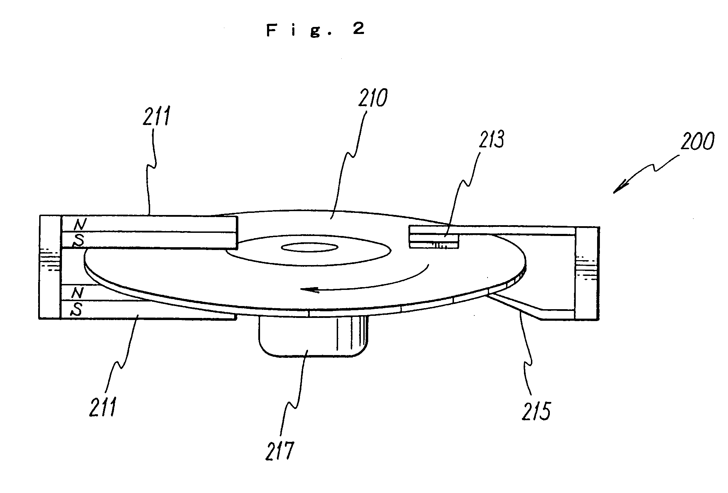

At first, explanation will be made for the principle of the magneto-optical recording medium according to the second aspect of the present invention and a method for reproduction thereon, with reference to Figs. 1 to 5. Fig. 1A illustratively shows a concept for recording information as minute magnetic domains on a magneto-optical recording medium 11 of the present invention by applying a recording magnetic field 15 while irradiating the magneto-optical recording medium 11 with a recording laser beam 13. The magneto-optical recording medium 11 comprises a magnetic domain-magnifying and reproducing layer 3, an intermediate layer 4, a gate layer 16, an exchange coupling force control layer 17, and an information-recording layer 18. Information can be recorded on the magneto-optical recording medium 11 based on the use of the magneto-optical field modulation system, wherein the magneto-optical recording medium 11 is irradiated with a laser pulse synchronized with a recording clock while applying a magnetic field having a polarity corresponding to a recording signal. The magneto-optical recording medium 11 is moved in a traveling direction indicated by an arrow in Fig. 1A with respect to a recording laser beam 13. Therefore, an area 19, which is deviated backward from the spot center, is heated to a higher temperature. The coercivity of the area 19 in the information-recording layer 18 is lowered due to the heating. Accordingly, a minute magnetic domain, which has a direction of magnetization directed in the direction of the recording magnetic field 15, is formed during its cooling process. It is assumed in the description of the principle that the magneto-optical recording medium is subjected to recording and reproduction by using, for example, a magneto-optical recording and reproducing apparatus 200 conceptually illustrated in Fig. 2. With reference to Fig. 2, the magneto-optical recording medium 210 is rotationally movable with respect to an optical head 213 and a flying magnetic head 215 by the aid of a spindle motor 217, and an initializing magnetic field is applied to the magneto-optical recording medium 210 by the aid of an initializing magnet 211 upon reproduction.

As shown in Fig. 1B, the initializing magnetic field 12 is applied to the magneto-optical recording medium 11, in a direction opposite to the direction of the recording magnetic field 15. The coercivity of the gate layer 16 at room temperature is smaller than the initializing magnetic force. Therefore, the magnetic domains subjected to recording in the gate layer 16 are inverted, and all of them are directed in the direction of the initializing magnetic field 12. On the contrary, the coercivity of the information-recording layer 18 is extremely larger than the coercivity of the gate layer 16. Therefore, magnetization of a recording magnetic domain 313b in the information-recording layer 18 remains as it is. Magnetization of the gate layer 16 is antiparallel to that of the magnetic domain 313b in the information-recording layer 18. Therefore, an interface therebetween is in an unstable magnetization state.

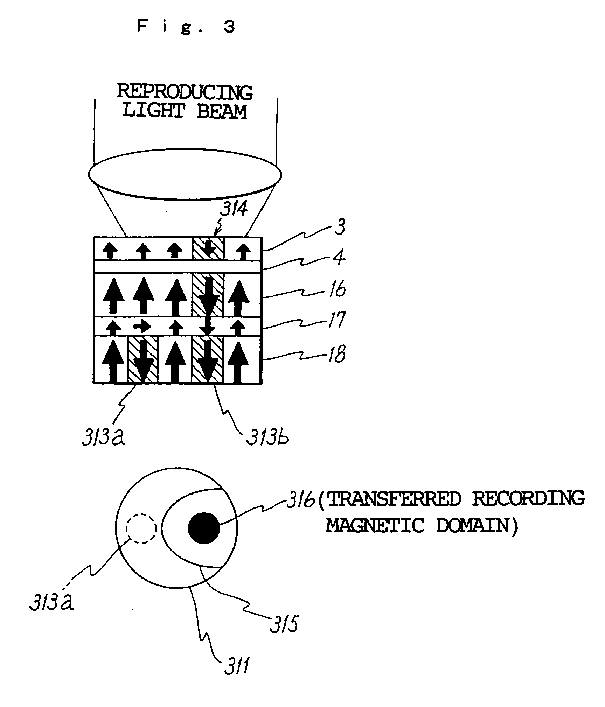

After the gate layer 16 is initialized as described above, the magneto-optical recording medium 11 is subjected to reproduction under a reproducing light beam as shown in Fig. 3. During reproduction, the magneto-optical recording medium 11 is irradiated with the reproducing light beam having a power lower than that of the recording light beam. An area 314, which is deviated backward from the spot center, is heated to a higher temperature in the same manner as heated by the recording light beam. The coercivity of the gate layer 16, which corresponds to the area 314 heated to the higher temperature, is lowered. The magnetic domain 313b in the information-recording layer 18 is transferred to the gate layer 16 via the exchange force control layer 17 by the aid of the exchange coupling force between the information-recording layer 18 and the gate layer 16, and it is further transferred to the magnetic domain-magnifying and reproducing layer 3. On the other hand, another recording magnetic domain 313a in the information-recording layer 18 is not transferred to the gate layer 16, because an area in the gate layer 16 corresponding to the magnetic domain 313a has a relatively low temperature, and its coercivity is not lowered. Therefore, as shown in a lower part of Fig. 3, when the magneto-optical recording medium 11 is enlarged and viewed from an upward position, only an area 315, which has arrived at a high temperature in the laser spot 311, undergoes decrease in magnetic energy. Accordingly, the recording magnetic domain 313b in the information-recording layer 18 appears as a recording mark 316 on the gate layer 16, and it appears on the magnetic domain-magnifying and reproducing layer 3. On the other hand, the other magnetic domains 313 are prevented from transfer by the gate layer 16, in areas other than the area 315 in the spot 311. Therefore, the recording magnetic domain 313a in the information-recording layer 18 remains latent.

Accordingly, it is possible to independently reproduce only one minute magnetic domain of a plurality of minute magnetic domains existing within the spot size, by irradiating the magneto-optical recording medium with the reproducing light beam in accordance with the principle as shown in Fig. 3.

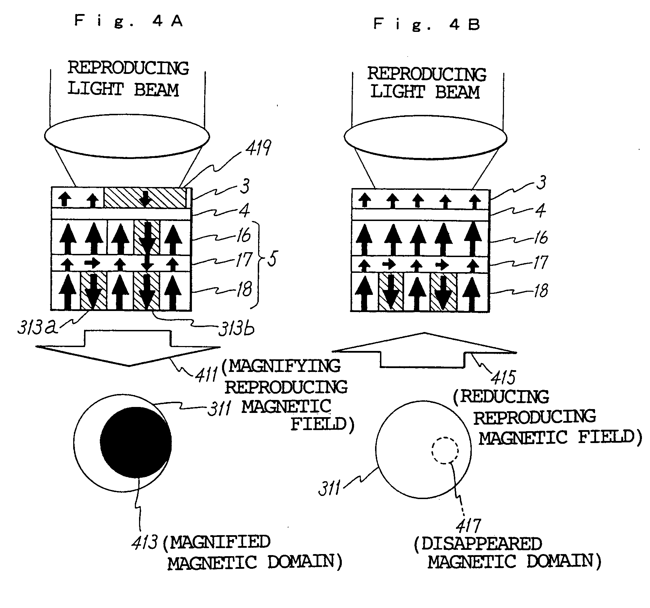

According to the present invention, one minute magnetic domain, which is focused by using the gate layer 16 as described above, can be transferred to the magnetic domain-magnifying and reproducing layer 3, and it can be magnified within the reproducing laser spot. This process is performed in the magnetic domain-magnifying and reproducing layer 3 of the magneto-optical recording medium 11. This principle will be explained with reference to Fig. 4A. It is noted that the magnetic domain-magnifying and reproducing layer 3 is a magnetic layer to which a minute magnetic domain is transferred from the gate layer 16, and on which the transferred magnetic domain can be magnified by the aid of the reproducing magnetic field. The magnetic domain-magnifying and reproducing layer 3 is a perpendicularly magnetizable film having a magnetic force resistance of the magnetic wall which is smaller than the force of the reproducing magnetic field upon being irradiated with the reproducing light beam so that the magnetic wall is moved by application of the reproducing magnetic field to magnify the magnetic domain. When a magnifying reproducing magnetic field 411 is applied in a direction identical with that of magnetization of the minute magnetic domain 313b in the reproducing state shown in Fig. 3, i.e., in the state in which the minute magnetic domain 313b is transferred from the information-recording layer 18 to the gate layer 16 and the magnetic domain-magnifying and reproducing layer 3, then the magnetic wall is moved in a direction to magnify the magnetic domain, because the magnetic force resistance of the magnetic wall is small in the magnetic domain-magnifying and reproducing layer 3. Thus, a magnified magnetic domain 419 is formed. As a result, as shown in a lower part of Fig. 4A, it is possible to observe a magnified mark 413 (the magnetic domain 419 magnified in the magnetic domain-magnifying and reproducing layer) magnified within the reproducing spot 311. As described above, the minute magnetic domain which has been magnified appears on the surface of the magneto-optical recording medium. Therefore, a reproduction signal having a sufficient intensity can be obtained from the magnified magnetic domain.

After the magnified magnetic domain 419 in the information-recording layer 18 is subjected to reproduction, a reducing reproducing magnetic field 415 is applied in a direction opposite to that of the magnifying reproducing magnetic field 411 as shown in Fig. 4B. Accordingly, the magnified magnetic domain 419 in the magnetic domain-magnifying and reproducing layer 3 is reduced. As a result, areas having a direction of magnetization identical with the direction of the magnetic field of the reducing reproducing magnetic field 415 are predominant. The reducing reproducing magnetic field 415 and the magnifying reproducing magnetic field 411 can be applied by using an alternating magnetic field. A reproduction signal with amplification for each of the minute magnetic domains can be obtained by synchronizing the period of the alternating magnetic field with a recording clock.

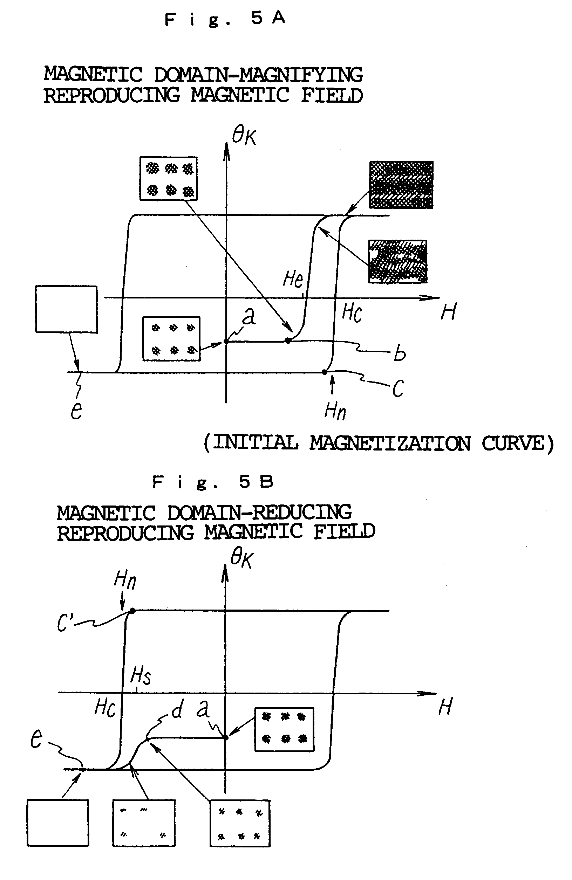

Now, explanation will be made with reference to a hysteresis curve shown in Fig. 5A for the relationship among the magnitude of the magnifying reproducing magnetic field applied during reproduction, the applied magnetic field, and the size of the mark appearing on the magnetic domain-magnifying and reproducing layer 3. The hysteresis curve shown in Fig. 5A illustrates the change in Kerr rotation angle $\theta_K$ of the magnetic domain-magnifying and reproducing layer 3 with respect to the magnetic field H. The Kerr rotation angle $\theta_K$ is observed when various magnetic fields H are applied to the magneto-optical recording medium while irradiating the magneto-optical recording medium with a reproducing light beam having the same power as that used during reproduction. It is noted that the hysteresis curve shows a hysteresis curve of the magnetic domain-magnifying and reproducing layer of the magneto-optical recording medium having the structure shown in Figs. 3 to 6, to which the recording magnetic domain in the underlying information-recording layer is transferred by being irradiated with the reproducing light beam. A predetermined Kerr rotation angle θ is provided (point **a** in Fig. 5) even when the magnetic field H is zero, because the magnetic domain in the information-recording layer has been transferred. When the magnetic field H having a polarity identical with the polarity of magnetization of the recording magnetic domain is gradually applied, the initial magnetization curve rises. The point **b** represents an initial rising point. The rise of the initial magnetization curve corresponds to magnification of the magnetic domain in the layer (the magnetic domain 419 in Fig. 4A) as a result of movement of the magnetic wall of the magnetic domain-magnifying and reproducing layer 3 from the center of the magnetic domain toward the outside depending on the magnitude of the magnetic field H. In the initial magnetization curve, no more increase in Kerr rotation angle occurs when magnetization is saturated. In Fig. 5A, conceptual photomicrographs of magnetic domain patterns are shown, in which the magnetic domain-magnifying and reproducing layer 3 is viewed from an upward position, at respective points including the points **a** and **b** on the initial magnetization curve of the hysteresis curve. The magnetic domain pattern (black circle pattern) at the point **a** concerns magnetic domains obtained when magnetic domains (seed magnetic domains) in the information-recording layer 18 are transferred via the gate layer 16 to the magnetic domain-magnifying and reproducing layer 3 by the aid of irradiation with the reproducing light beam. The patterns at the respective points comprehensively suggest the situation in which the magnetic domains are magnified in accordance with the increase of the magnetic field on the initial magnetization curve starting from the state represented by the point **a**. When the Kerr rotation angle θ is saturated, the magnetic domains are inverted on the entire surface of the magnetic domain-magnifying and reproducing layer 3.

In the hysteresis curve shown in Fig. 5A, the magnetic field at the rising point **c** of the major loop of the hysteresis curve (outer loop which represents a locus after the initial magnetization curves is once saturated), which has the same polarity as that of the magnetic field applied in the direction to magnify the magnetization of the magnetic domain-magnifying and reproducing layer, is referred to as "new creation magnetic field". The absolute value thereof is represented by Hn. The magnetic field at the initial rising point **b** of the initial magnetization curve, which is obtained by applying the magnetic field in the direction to expand the recording magnetic domain in the magnetic domain-magnifying and reproducing layer 3 transferred from the information-recording layer 5 via the gate layer 16, is referred to as "magnetic wall-magnifying magnetic field". The absolute value thereof is represented by He. Assuming that the reproducing magnetic field has its absolute value Hr, it is desirable to apply the reproducing magnetic field within a range of He < Hr < Hn because of the following reason. Namely, if Hr is smaller than He, the recording magnetic domain transferred to the magnetic domain-magnifying and reproducing layer 3 is not magnified. If Hr is larger than Hn, even when no recording magnetic domain (seed magnetic domain) exists in the information-recording layer 18, then the magnetic domain in the magnetic domain-magnifying and reproducing layer 3 disposed thereover is inverted, and it is read as a signal.

Fig. 5B shows an initial magnetization curve obtained when the magnetic field is applied in a direction to reduce the recording magnetic domain in the magnetic domain-magnifying and reproducing layer 3 transferred via the gate layer 16 from the information-recording layer 18, in the hysteresis curve shown in Fig. 5A. The magnetic field at the initial dropping point **c'** of the major loop (outer loop which represents a locus after the initial magnetization curve is once saturated) of the hysteresis curve, which is located on the side of the same polarity as that of the initial magnetization curve, is referred to as "new creation magnetic field". The absolute value thereof is represented by Hn. The magnetic field at the dropping point **d** on the initial magnetization curve is referred to as "magnetic wall-reducing magnetic field". The absolute value thereof is represented by Hs. When the magnetic field is applied within a range of Hs < Hr, the magnetic field having been subjected to magnification and reproduction can be reduced. In Fig. 5B, conceptual photomicrographs of magnetic domain patterns are also shown, in which the magnetic domain-magnifying and reproducing layer is viewed from an upward position, at respective points including the points **a** and **d** on the initial magnetization curve of the hysteresis curve. Since the magnetic field in the reducing direction is too large at the point **e**, the recording magnetization transferred to the magnetic domain-magnifying and reproducing layer completely disappears. Therefore, when it is intended to reliably erase the recording magnetization, it is appropriate to adjust the magnetic field to satisfy Hs < Hn < Hr. The hysteresis curves depicted in Fig. 5A and Fig. 5B and hysteresis curves referred to herein are hysteresis curves obtained under the condition in which magneto-optical reproduction is performed in accordance with the reproducing method for the magneto-optical recording medium of the present invention, and they represent characteristics of the Kerr rotation angle (or magnetization) with respect to various magnetic fields, obtained when the reproducing light beam is radiated and the temperature is raised by actually using the recording and reproducing apparatus for the magneto-optical recording medium. Therefore, the hysteresis curves, Hs, Hn, and Hr to be applied are observed by using a practical magneto-optical recording and reproducing apparatus while radiating the reproducing light beam having the power for reproduction.

According to the present invention, owing to the provision of the gate layer as described above, only one magnetic domain is allowed to emerge on the gate layer 16, or it can be transferred to the gate layer 16 even when a plurality of magnetic domains exist in the information-recording layer. Further, the one minute magnetic domain having been transferred to the gate layer 16 can be transferred to the magnetic domain-magnifying and reproducing layer 3, and it can be magnified and detected (reproduced) by using the reproducing magnetic field. Therefore, the minute magnetic domain formed in accordance with the magneto-optical field modulation system can be subjected to reproduction at a high resolving power and at high S/N.

The principle has been explained by illustrating the gate layer as the magnetic layer which undergoes temperature distribution of the gate layer generated in the reproducing light beam spot, in which the magnetic domain in the information-recording layer is transferred to the gate layer in a high temperature area having a temperature higher than a predetermined temperature. However, it is possible to use a magnetic layer which undergoes the temperature distribution in the gate layer generated in the reproducing light beam spot, in which the magnetic domain in the information-recording layer is transferred to the gate layer in a low temperature area having a temperature lower than a predetermined temperature. Alternatively, it is possible to use a magnetic layer which undergoes the temperature distribution in the gate layer generated in the reproducing light beam spot, in which the magnetic domain in the information-recording layer is transferred to the gate layer in a predetermined temperature range.

According to a third aspect of the present invention, there is provided a magneto-optical recording medium comprising a recording layer for recording information therein, a non-magnetic layer, and a reproducing layer, characerized in that:

magnetization is transferred from the recording layer to the reproducing layer in accordance with magnetostatic coupling force by heating the magneto-optical recording medium to a predetermined temperature, and a magnetic domain having the transferred magnetization is magnified for reproduction to be larger than a magnetic domain subjected to recording in the recording layer under a reproducing external magnetic field.

In the magnetic domain-magnifying and reproducing technique disclosed in Japanese Laid-Open Patent Publication No. 8-7350, the recording layer, the intermediate magnetic layer, and the reproducing layer are magnetically coupled to one another by allowing the intermediate magnetic layer to intervene between the recording layer and the reproducing layer. However, in the magneto-optical recording medium according to the third aspect of the present invention, the recording layer and the reproducing layer are magnetostatically coupled to one another by allowing the non-magnetic layer to intervene between the recording layer and the reproducing layer. Thus, transfer is effected from the recording layer to the reproducing layer.

In the magneto-optical recording medium according to the third aspect of the present invention, the reproducing layer may be a magnetic layer which behaves as an in-plane magnetizable film at room temperature and which behaves as a perpendicularly magnetizable film at a temperature not less than the predetermined temperature described above. In this aspect, the temperature coefficient for making the change from the in-plane magnetizable film to the perpendicularly magnetizable film may be not less than 8.0. The magnetic domain subjected to recording in the reproducing layer may have a minimum length in the track direction which is not more than 1/2 of a size of the reproducing light beam spot.

According to a fourth aspect of the present invention, there is provided a magneto-optical recording medium comprising a recording layer for recording information therein, an intermediate layer, and a reproducing layer, for reproducing information by detecting a magnetization state of a magnetic domain transferred from the recording layer to the reproducing layer, characterized in that:

a minimum stable magnetic domain radius in the reproducing layer is larger than a size of a magnetic domain subjected to recording in the recording layer.

In the magneto-optical recording medium according to the fourth aspect of the present invention, the minimum stable magnetic domain radius in the reproducing layer is larger than the size of the magnetic domain subjected to recording in the recording layer. Therefore, the magnetic domain transferred to the reproducing layer is magnified to be larger than the recording magnetic domain. Accordingly, a reproduction signal having high C/N is obtained by reading magnetization information from the magnified magnetic domain as described above. The magneto-optical recording medium according to this aspect is different from the magneto-optical recording media according to the first to third aspects, in which the magnetic domain transferred from the recording layer to the reproducing layer can be magnified even when no reproducing magnetic field is applied. Accordingly, reproduction can be performed by using a reproducing apparatus constructed in the same manner as the conventional technique. The term "minimum stable magnetic domain radius" means a radius of the minimum magnetic domain which can stably exist in the magnetic thin film. The minimum stable magnetic domain radius is given by the following expression (1).

$$d_{min} = \sigma_w / (2M_s H_c) \qquad (1)$$

wherein $\sigma_w$ represents energy density of the magnetic wall, $M_s$ represents saturation magnetization, and $H_c$ represents coercivity.

The intermediate layer of the magneto-optical recording medium according to the fourth aspect of the present invention may be a magnetic layer or a non-magnetic layer. Namely, when the intermediate layer is a magnetic layer, the recording magnetic domain in the recording layer is transferred to the reproducing layer by the aid of the exchange coupling effected by the recording layer, the intermediate layer, and the reproducing layer. When the intermediate layer is a non-magnetic layer, the recording magnetic domain in the recording layer is transferred to the reproducing layer by the aid of the magnetostatic coupling effected between the recording layer and the reproducing layer.

In the magneto-optical recording medium according to the first, second, and fourth aspects of the present invention, the intermediate layer (the intermediate magnetic layer or the gate layer), which is inserted between the reproducing layer (the magnifying and reproducing layer) and the recording layer (the information-recording layer), is a magnetic layer, it is desirable that the thickness of the intermediate layer is not less than the thickness of the magnetic wall of the magnetic domain in the intermediate layer, because of the following reason. Namely, for example, when a magnetic film, which exhibits in-plane magnetization at room temperature and which makes transition from in-plane magnetization to perpendicular magnetization at a temperature not less than a predetermined temperature (critical temperature), is used for the intermediate layer, it is necessary that the magnetic spin is twisted by 90 degrees in the magnetic wall (hereinafter referred to as "magnetic wall of the intermediate layer") between the magnetic domain in which the transition occurs and the magnetic domain adjacent to the foregoing magnetic domain, in order to effect the transition. The thickness of the magnetic wall can be measured, for example, in accordance with the following operation based on the use of the Hall effect. The intermediate layer, the reproducing layer, and the recording layer are magnetized in one direction to measure the Hall voltage ($V_2$) at this time. Assuming that the Hall resistances and the thicknesses of the films (layers) of the intermediate layer, the reproducing layer, and the recording layer are $\rho_1$, $\rho_2$, $\rho_3$, $t_1$, $t_2$, and $t_3$ respectively, the Hall voltage $V_3$ obtained when there is no interface magnetic wall is $V_3 = I \times (t_1\rho_1 + t_2\rho_2 + t_3\rho_3)/(t_1 + t_2 + t_3)^2$, wherein I represents the current flowing into the film (layer). Therefore, the difference ($V_4$) between the absolute value $|V_1 - V_2|$ of the voltage including the interface

magnetic wall and $2V_3$ represents the thickness of the interface magnetic wall. It is also possible to estimate the magnetic spin state which indicates the Hall voltage $V_4$, by using the exchange stiffness constant, the perpendicular magnetically anisotropic energy constant, and the saturation magnetization of the respective layers. Such a method for calculating the extent of the interface magnetic wall is described in R. Malmhall, et al., Proceedings of Optical Data Strange, 1993, pp. 204-213. Reference may be made to this document. In the present invention, it is desirable that the thickness of the intermediate layer is not less than the thickness of the magnetic wall measured in accordance with the measuring method based on the use of the Hall effect as described above. For example, when the magnetic material of the intermediate layer is composed of a GdFeCo system such as $Gd_X Fe_Y Co_Z$ ($20 \leq X \leq 35$, $50 \leq Y \leq 100$, $0 \leq Z \leq 50$), the thickness of the magnetic wall is calculated to be about 50 nm on the basis of the calculating method described above. Therefore, when the intermediate layer is composed of $Gd_X Fe_Y Co_Z$ ($20 \leq X \leq 35$, $50 \leq Y \leq 100$, $0 \leq Z \leq 50$), the thickness of the magnetic layer is required to be not less than 50 nm.

As described above, the thickness of the magnetic wall differs depending on the type and the composition of the magnetic material for the intermediate layer (or the gate layer). However, in the case of the magnetic material to be used for a magnetic layer of the magneto-optical recording medium, the thickness is generally required to be 10 nm at minimum. Therefore, it is preferable that the thickness of the intermediate layer exceeds 10 nm. The upper limit of the thickness of the intermediate layer is preferably less than 100 nm, due to the limitation for the semiconductor laser power. Accordingly, it is preferable for the thickness t of the intermediate layer to satisfy $10 < t < 100$ nm.

In the magneto-optical recording media according to the first, second, and fourth aspects of the present invention, when the intermediate layer is the magnetic layer, it is preferable that the size of the magnetic domain magnetically transferred from the recording layer to the intermediate layer (gate layer) is smaller than the size of the recorded magnetic domain, in order to stabilize the magnetic domain transferred from the recording layer to the intermediate layer (gate layer).

According to a fifth aspect of the present invention, there is provided a reproducing method for reproducing information recorded on the magneto-optical recording medium according to the first aspect of the present invention, comprising the steps of transferring a magnetic domain subjected to recording in an information-recording layer to a magnetic domain-magnifying and reproducing layer by irradiating the magneto-optical recording medium with a reproducing light beam, and magnifying the transferred magnetic domain to be larger than a size of the magnetic domain subjected to recording in the information-recording layer to perform reproduction by applying a reproducing magnetic field having a polarity identical with that of magnetization of the transferred magnetic domain.

In this aspect, it is preferable that an alternating magnetic field synchronized with a reproducing clock is used as the reproducing magnetic field, the transferred magnetic domain is magnified by using a magnetic field having a polarity identical with that of magnetization of the magnetic domain subjected to recording in the information-recording layer, and the magnified magnetic domain is reduced by using a magnetic field having a polarity opposite thereto.

In the method of the present invention, a plurality of recording magnetic domains in the information-recording layer capable of being included in a spot of the reproducing light beam may be individually transferred to the magnetic domain-magnifying and reproducing layer, and the transferred magnetic domain may be magnified to be larger than the size of the magnetic domain subjected to recording in the information-recording layer to perform reproduction by applying a reproducing magnetic field having a polarity identical with that of magnetization of the transferred magnetic domain.

According to a sixth aspect of the present invention, there is provided a reproducing method for reproducing information recorded in a recording area of the magneto-optical recording medium according to the second aspect of the present invention, comprising the steps of transferring a magnetic domain subjected to recording in an information-recording layer to a magnetic domain-magnifying and reproducing layer via a gate magnetic layer by irradiating the magneto-optical recording medium with a reproducing light beam, and magnifying the transferred magnetic domain to be larger than a size of the magnetic domain subjected to recording in the information-recording layer to perform reproduction by applying a reproducing magnetic field having a direction identical with that of magnetization of the transferred magnetic domain.

According to this method, one magnetic domain is selected via the gate layer from a plurality of recording magnetic domains in the information-recording layer included in the spot of the reproducing light beam during reproduction, the generated one magnetic domain is transferred to the magnetic domain-magnifying and reproducing layer, and the transferred magnetic domain can be magnified to be larger than the size of the magnetic domain subjected to recording in the information-recording layer to perform reproduction by applying the reproducing magnetic field in the same direction as that of the magnetization of the transferred magnetic domain.

According to a seventh aspect of the present invention, there is provided a reproducing method for a magneto-optical recording medium, for reproducing information recorded on the magneto-optical recording medium by the aid of the magneto-optical effect, characterized in that:

a magneto-optical recording medium comprising, on a substrate, an information-recording layer, and a magnetic domain-magnifying and reproducing layer for transferring a magnetic domain in the information-recording layer thereto and magnifying the transferred magnetic domain by the aid of an external magnetic field is used as the magneto-optical recording medium; and

the magnetic domain transferred from the information-recording layer to the magnetic domain-magnifying and reproducing layer is magnified to be larger than a size of the magnetic domain subjected to recording in the information-recording layer to perform reproduction by applying, during the reproduction, at least one of a reproducing magnetic field modulated on the basis of a reproducing clock and a reproducing light beam modulated on the basis of the reproducing clock, to the magneto-optical recording medium.

The intensities of the reproducing magnetic field and the reproducing light beam may be simultaneously modulated during the reproduction, and thus the error rate of a reproduction signal can be further lowered.

In the reproducing methods according to the fifth to seventh aspects of the present invention, the reproducing magnetic field has its absolute value Hr which relates to an absolute value Hn of the new creation magnetic field of the hysteresis curve of the magnetic domain-magnifying and reproducing layer as explained with reference to Fig. 5, an absolute value He of the magnetic wall-magnifying magnetic field, and an absolute value Hs of the magnetic wall-reducing magnetic field, as measured by using a reproducing power of a recording and reproducing apparatus, such that the reproducing magnetic field is applied to satisfy He < Hr < Hn in a magnifying direction and Hs < Hr in an erasing direction. If a magnifying magnetic field having an intensity not less than Hn is applied, then the magnetization in the reproducing layer is inverted even at portions in which no information is recorded in the magnetic domain transferred to the reproducing layer of the magneto-optical recording medium of the present invention and reproduce information. The reproducing apparatus also functions as a recording apparatus by controlling the magnetic head and the optical head in accordance with a recording signal.

It is necessary for the reproducing apparatus of the present invention to control the timing for giving the magnetic domain-magnifying magnetic field during reproduction. Namely, it is necessary that when the magnetic domain transferred from the information-recording layer to the magnetic domain-magnifying and reproducing layer appears, the magnetic field is applied in the direction to magnify the magnetic domain, and then the polarity of the magnetic field is inverted to reduce the magnified magnetic domain. It is preferable to use, as the magnetic field, an alternating magnetic field having the same period as that of the reproducing clock or modulated with a second synchronization signal generated from a second synchronization signal-generating circuit (reproducing magnetic field pulse width/phase-adjusting circuit 131) on the basis of the reproducing clock. Such a period makes it possible not only to magnify and reproduce portions in which seed magnetic domains (magnetic domains subjected to recording in the recording direction) exist, but also recognize portions in which no seed magnetic domains exist (magnetic domains subjected to recording in the erasing direction). When the reproducing light beam is continuously radiated, the temperature of the central portion of the track of the magnetic domain-magnifying and reproducing layer increases along the track. Therefore, the portion, in which no seed magnetic domain exist in the information-recording layer, tends to be inverted, because the coercivity of the central portion of the magnetic domain-magnifying and reproducing layer is decreased at a high temperature. In order to avoid this phenomenon, the temperature of the track center is lowered in the present invention by modulating the intensity of the reproducing light beam in synchronization with the reproducing clock or by using a first synchronization signal generated from a first synchronization signal-generating circuit (reproducing light beam pulse width/phase-adjusting circuit 53) on the basis of the reproducing clock. In an alternative method, for example, when a rare earth transition metal is used for the magnetic domain-magnifying and reproducing layer, the compensation temperature is set to be about 80 to 200 °C considered to be the temperature of the track center under the reproducing light beam so that the coercivity is increased. Alternatively, information may be recorded by using a short wavelength laser, and information may be reproduced by using a long wavelength laser in order to lower the temperature of the track center during reproduction.

An internal clock or an external clock may be used as the reproducing clock. The external clock can be generated, for example, from a detection signal from pits or fine clock marks formed on the magneto-optical recording medium, or a wobble period of the magneto-optical recording medium formed with wobble-shaped grooves (lands).

The use of the magneto-optical recording apparatus of the present invention makes it possible to magnify and reproduce recording domains of 0.1 micron. Therefore, it is possible to densify not only the linear density but also the track density. Accordingly, it is possible to achieve recording and reproduction at an areal recording density of 50 Gbit/inch$^2$. In such an aspect, it is conceived that the present invention may be applied for animation editing and so-called electronic refrigerators. The present invention is also advantageous in that a compact information processing system can be constructed.

According to a ninth aspect of the present invention, there is provided a reproducing apparatus for a magneto-optical recording medium, for reproducing information recorded on the magneto-optical recording medium, characterized in that:

the reproducing apparatus comprises;
an optical head for irradiating the magneto-optical recording medium with a reproducing light beam,
an optical head-driving unit for driving the optical head,
a clock-generating unit for generating a reproducing clock, and
a control unit for controlling the optical head-driving unit to perform pulse modulation for the reproducing light beam on the basis of the reproducing clock; wherein
the magneto-optical recording medium comprises a recording layer for recording information therein, an intermediate layer, and a reproducing layer, the reproducing layer has a minimum stable magnetic domain radius which is larger than a size of a magnetic domain subjected to recording in the recording layer, and the information is reproduced by detecting a magnetization state of the magnetic domain magnified and transferred from the recording layer to the reproducing layer.

This reproducing apparatus is preferably used for performing reproduction on the magneto-optical recording medium according to the fourth aspect of the present invention.

BRIEF DESCRIPTION OF THE DRAWINGS

Figs. 1A and 1B explain the principle of recording and reproduction on the magneto-optical recording medium of the present invention, wherein Fig. 1A illustrates the principle of information recording, and Fig. 1B illustrates the principle of initialization for a magnifying and reproducing layer.

Fig. 2 shows a schematic arrangement of a recording and reproducing apparatus used for recording and reproduction on the magneto-optical recording medium of the present invention.

Fig. 3 explains the principle of magnetic transfer in which only one magnetic domain of a plurality of recording magnetic domains in an information-recording layer existing within a reproducing light beam spot is selected by the aid of a gate layer during reproduction on the magneto-optical recording medium of the present invention.

Figs. 4A and 4B explain the principle of magnification and reproduction for a minute magnetic domain during reproduction on the magneto-optical recording medium of the present invention, wherein Fig.

4A illustrates a situation in which the magnetic domain is magnified by using a magnifying reproducing magnetic field, and Fig. 4B illustrates a situation in which the magnetic domain is reduced by using a reducing reproducing magnetic field.

Figs. 5A and 5B show graphs illustrating hysteresis curves of a magnifying and reproducing layer of the magneto-optical recording medium of the present invention, wherein Fig. 5A illustrates an initial magnetization curve upon application of the magnifying magnetic field, and Fig. 5B illustrates an initial magnification curve upon application of the reducing magnetic field.

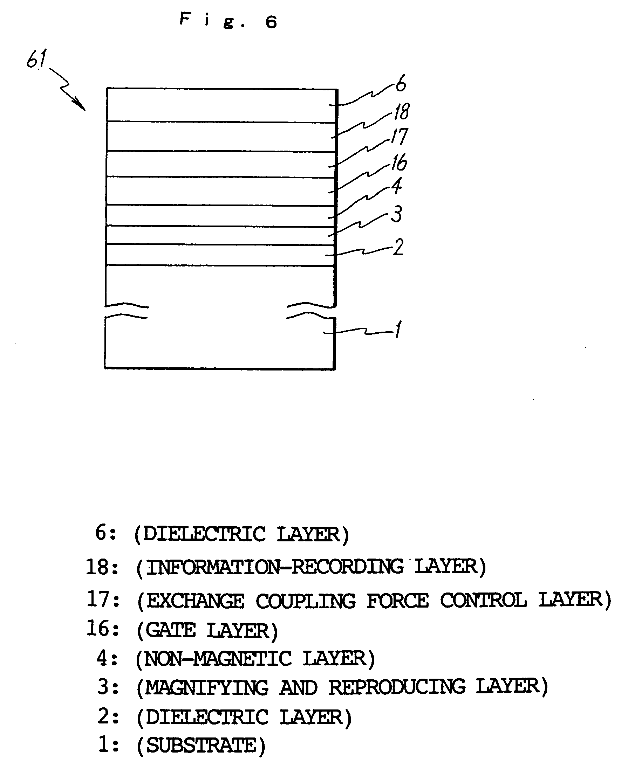

Fig. 6 shows a cross-sectional view illustrating a specified embodiment of a magneto-optical recording medium according to the second aspect of the present invention.

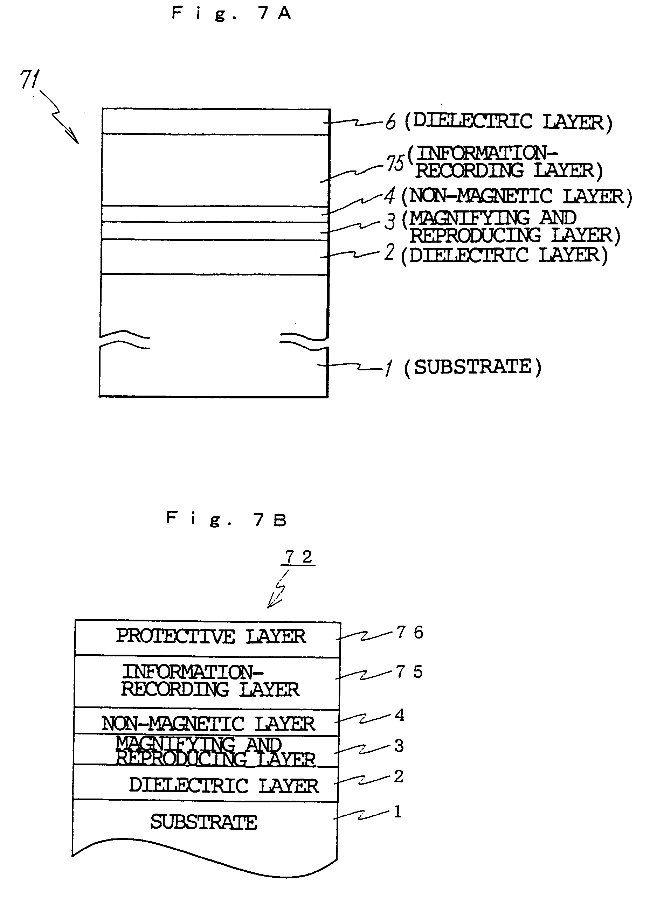

Figs. 7A and 7B show cross-sectional views illustrating specified embodiments of the magneto-optical recording medium according to first embodiments (A) and (B) of the present invention respectively.

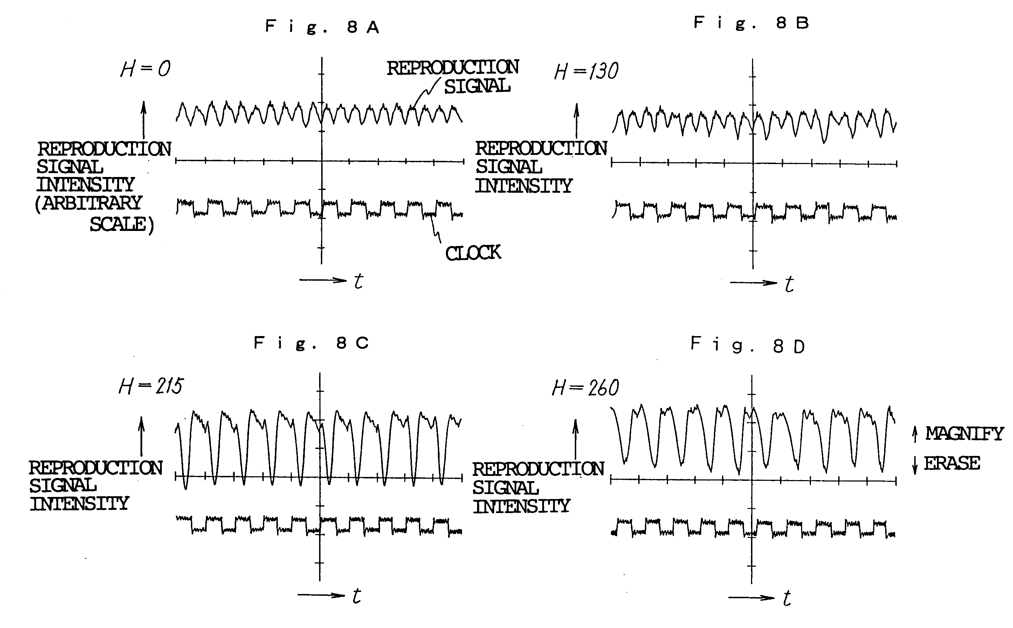

Figs. 8A to 8D shows graphs illustrating reproduction signals obtained from the magneto-optical recording medium according to the first embodiment of the present invention, wherein Figs. 8A, 8B, 8C, and 8D illustrate those obtained for intensities of the reproducing magnetic field H = 0 (Oe), H = 130 (Oe), H = 215 (Oe), and H = 260 (Oe) respectively.

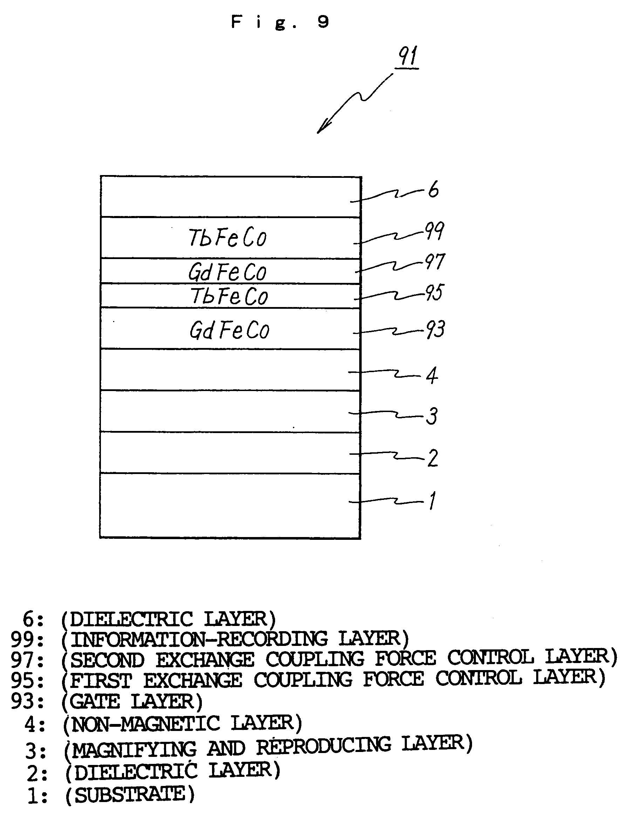

Fig. 9 shows a cross-sectional view of a specified embodiment of a magneto-optical recording medium according to a second embodiment of the present invention.

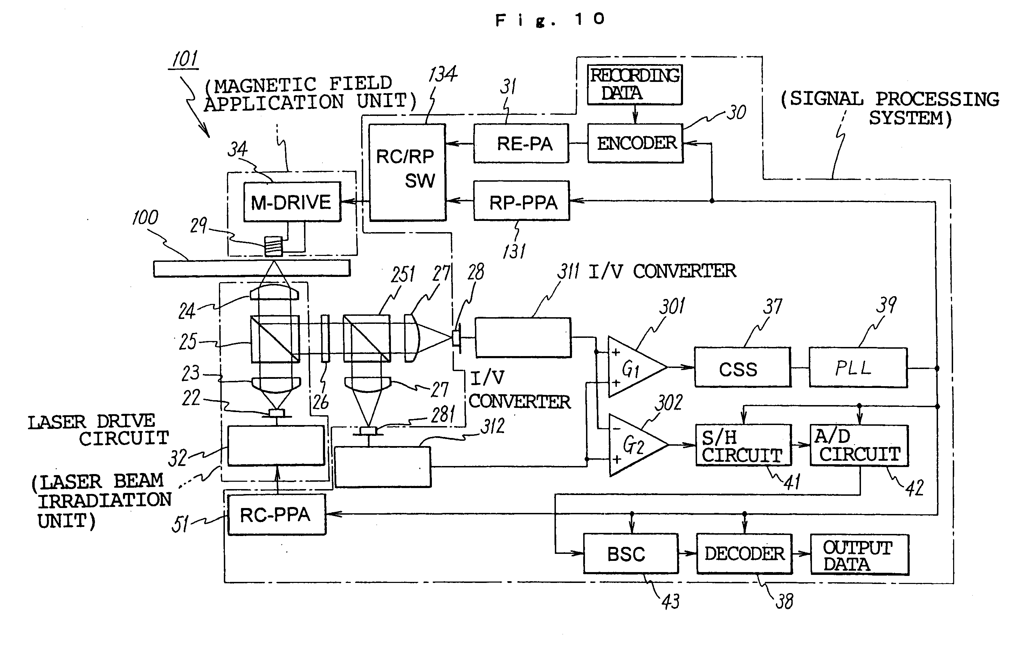

Fig. 10 shows a schematic arrangement of a magneto-optical recording and reproducing apparatus according to a third embodiment of the present invention.

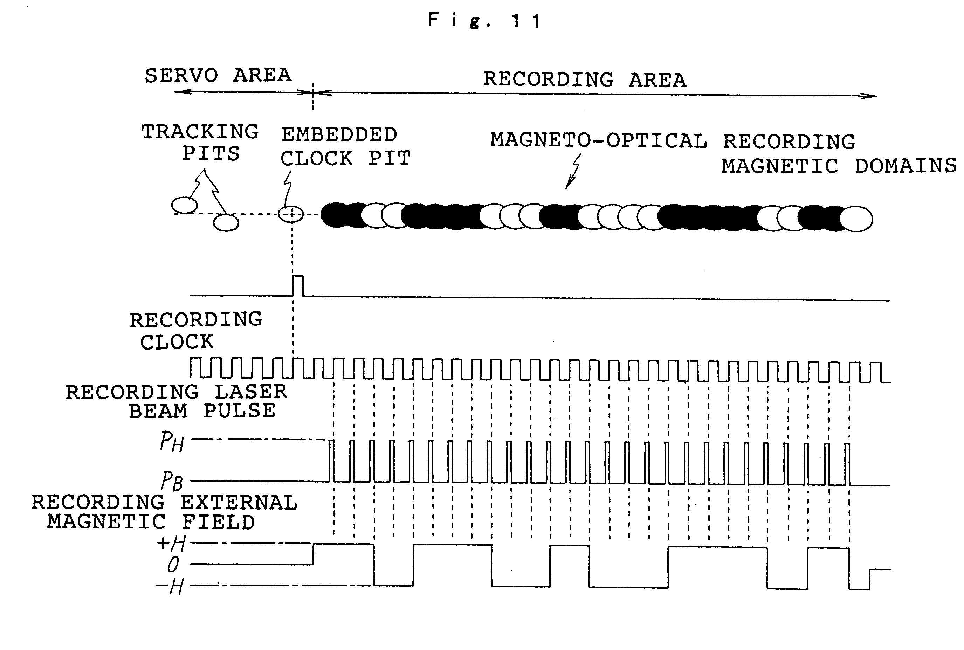

Fig. 11 shows a timing chart illustrating a relationship between a recording laser pulse, a recording external magnetic field, and recording magnetic domains concerning an magneto-optical field modulation recording method referred to in third and fourth embodiments of the present invention.

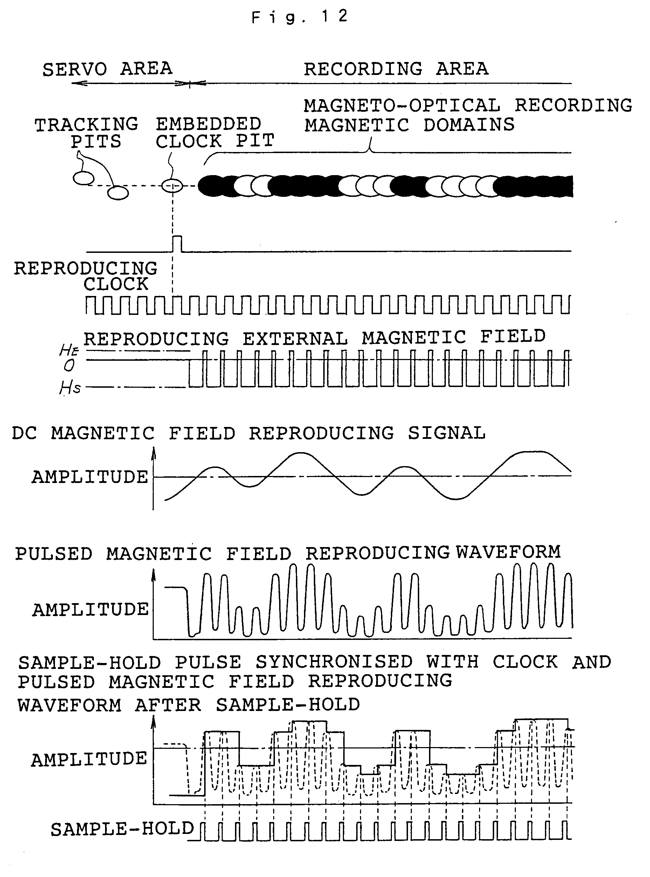

Fig. 12 shows a timing chart illustrating a reproducing clock, a reproducing external magnetic field, a reproduction signal waveform obtained by using the pulsed magnetic field, and a reproduction signal waveform after sampling and holding in the reproducing method according to the third embodiment of the present invention.

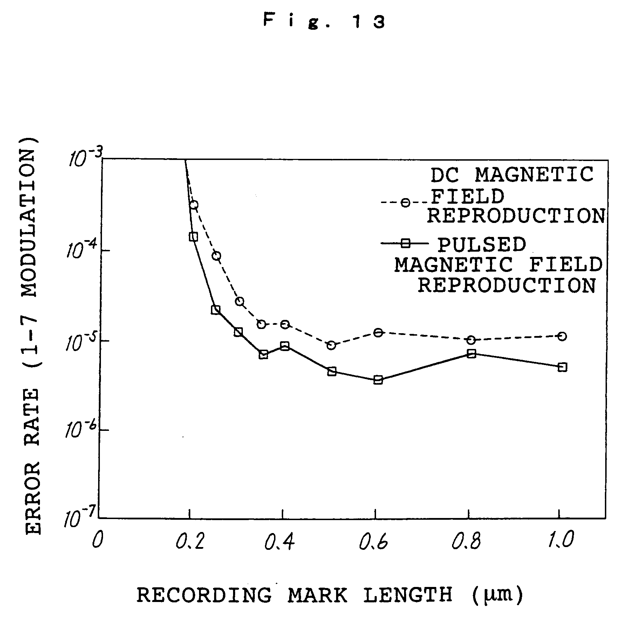

Fig. 13 shows a graph illustrating a relationship between the error rate and the recording mark length in 1-7 modulation in the reproducing method according to the third embodiment of the present invention.

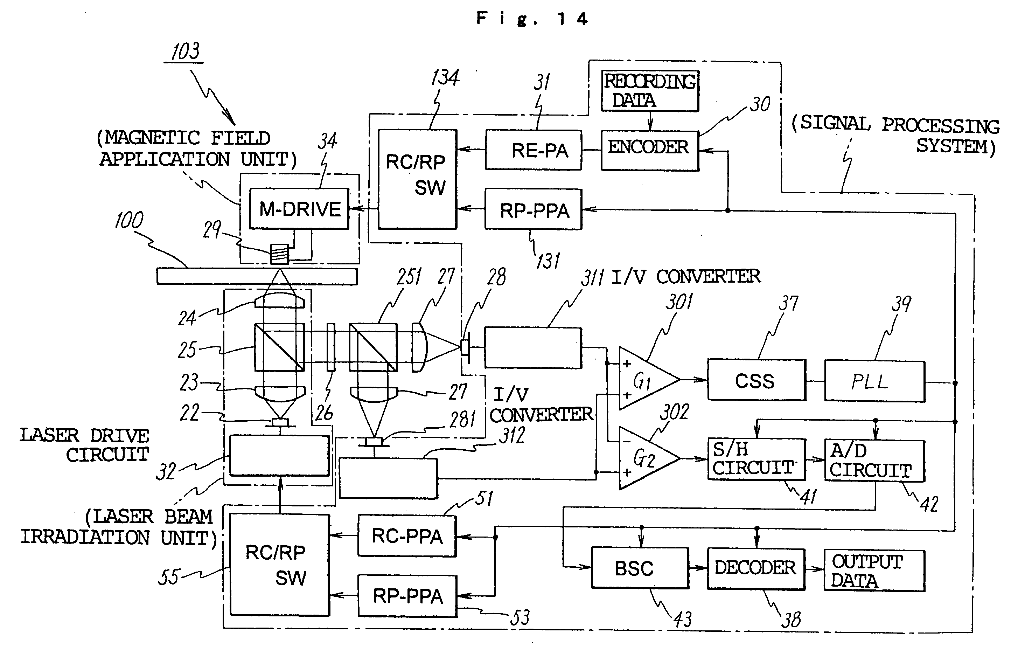

Fig. 14 shows a schematic arrangement of a magneto-optical recording and reproducing apparatus according to a fourth embodiment of the present invention.

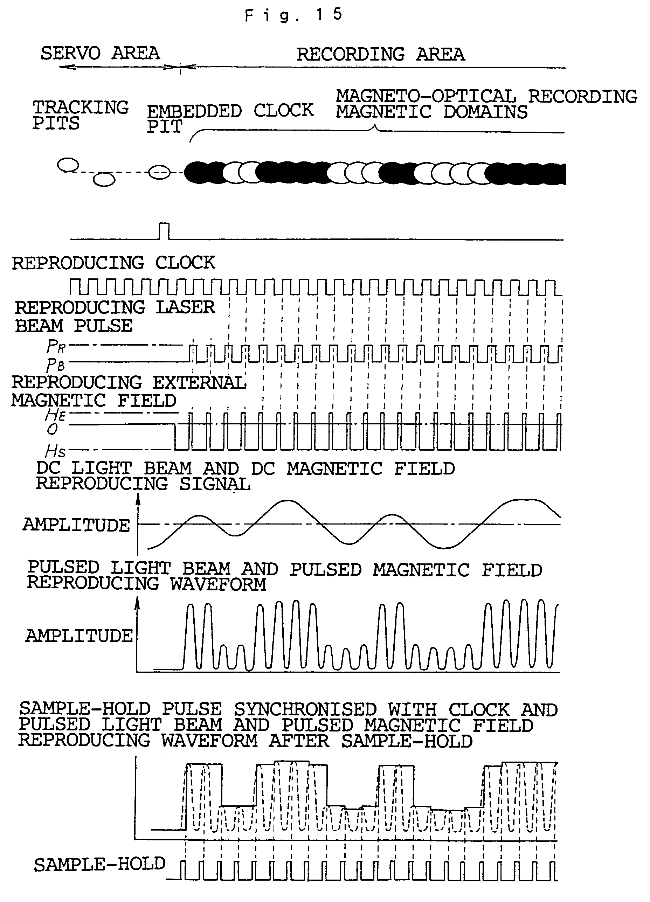

Fig. 15 shows a timing chart illustrating a reproducing clock, a reproducing external magnetic field, a reproduction signal waveform obtained by using the pulsed light beam/pulsed magnetic field, and a reproduction signal waveform after sampling and holding in the reproducing method according to the fourth embodiment of the present invention.

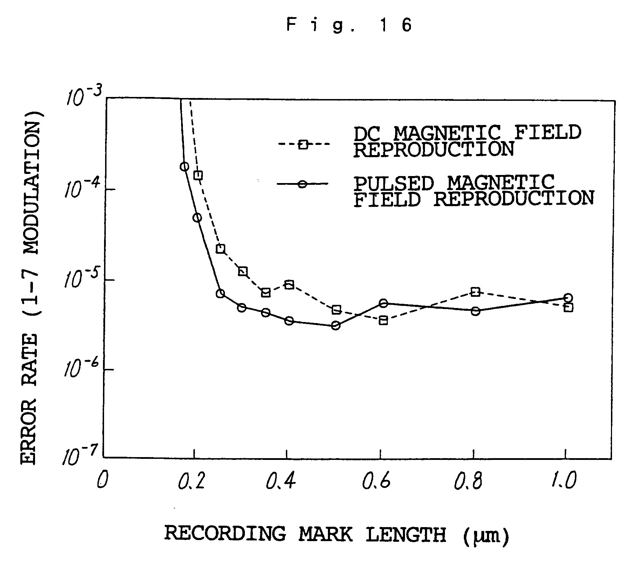

Fig. 16 shows a graph illustrating a relationship between the error rate and the recording mark length in 1-7 modulation in the reproducing method according to the fourth embodiment of the present invention.

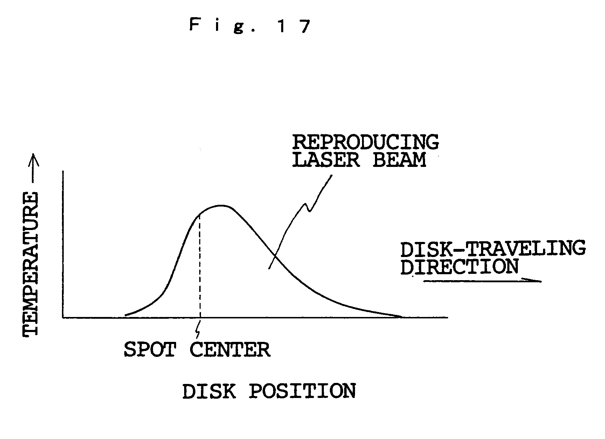

Fig. 17 shows a temperature distribution depending on the position on the disk, of a reproducing laser light beam spot.

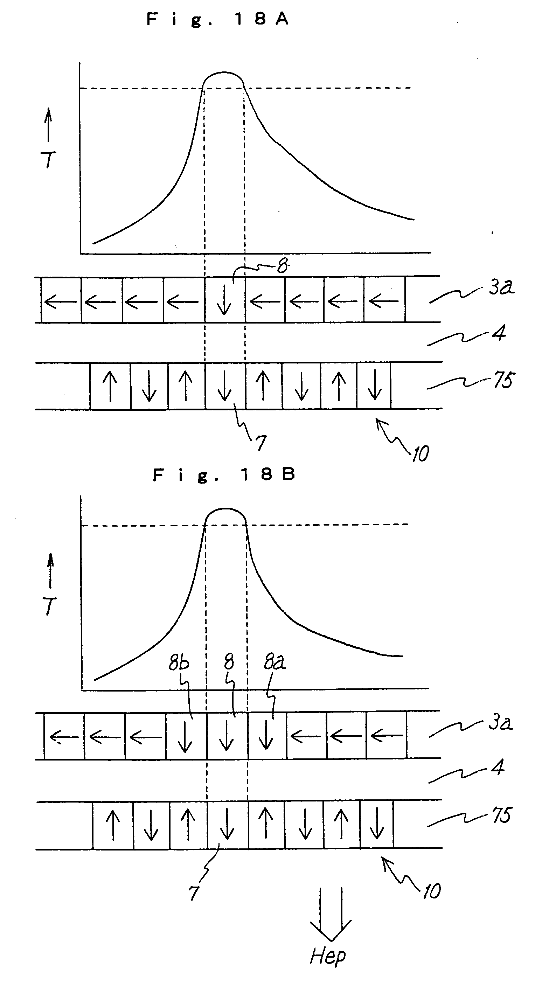

Figs. 18A and 18B explain the principle of reproduction on the magneto-optical recording medium according to the first embodiment (B), wherein Fig. 18A illustrates transfer of magnetization from the recording layer to the reproducing layer, and Fig. 18B illustrates a situation in which a transferred magnetic domain is magnified.

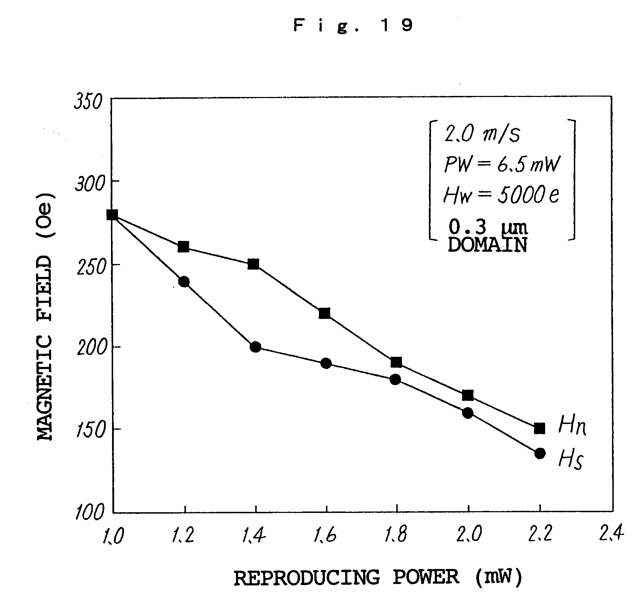

Fig. 19 shows a graph illustrating dependency of Hs and Hn on the power of the reproducing light beam, measured by using the magneto-optical recording medium according to the first embodiment (B).

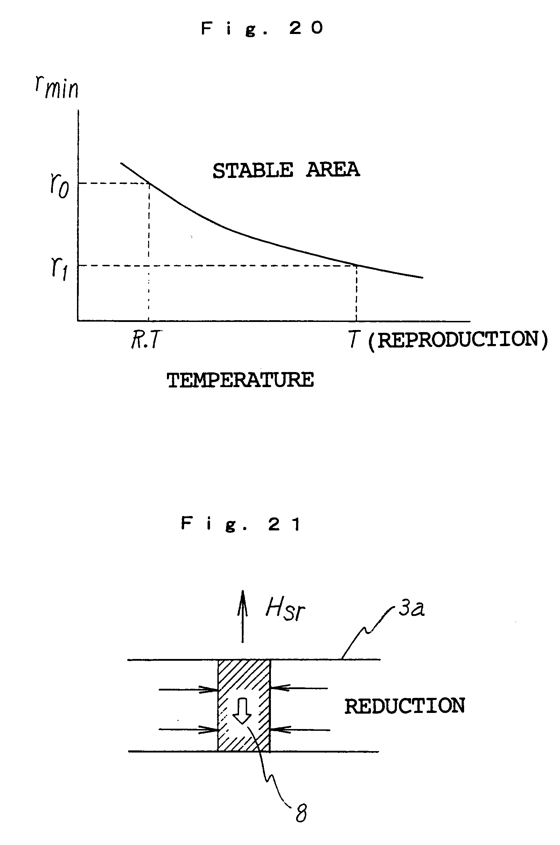

Fig. 20 shows a graph illustrating the minimum stable magnetic domain radius $r_{min}$ of the magnetic domain which can stably exist, with respect to the temperature.

Fig. 21 explains the principle to disappear the magnetic domain magnified on the magneto-optical recording medium according to the first embodiment (B) by applying the reducing magnetic field.

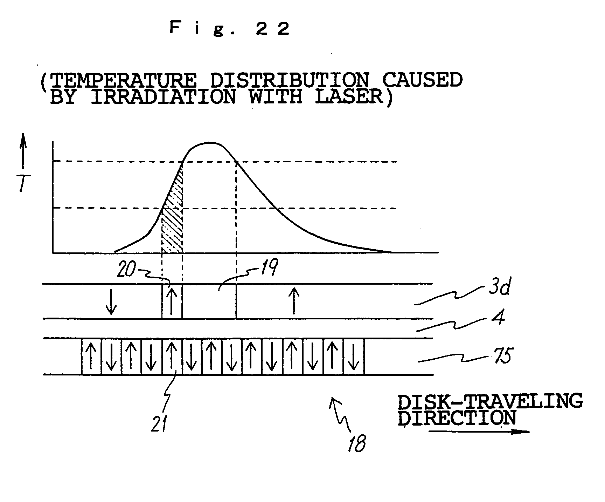

Fig. 22 explains a reproducing system in which a system to cause transfer in a high temperature area at a backward portion in the reproducing light beam spot is combined with a system to cause transfer in a low temperature area at a frontward portion in the reproducing light beam spot.

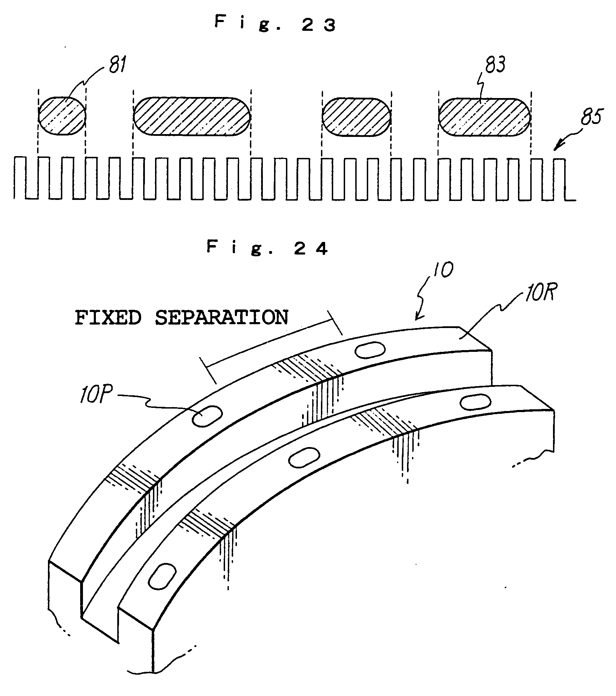

Fig. 23 explains self-synchronization to generate a clock signal which may be used for the apparatuses according to the third and fourth embodiments.

Fig. 24 explains external synchronization to generate a clock signal which may be used by employing a land-groove type magneto-optical recording medium in the apparatuses according to the third and fourth embodiments.

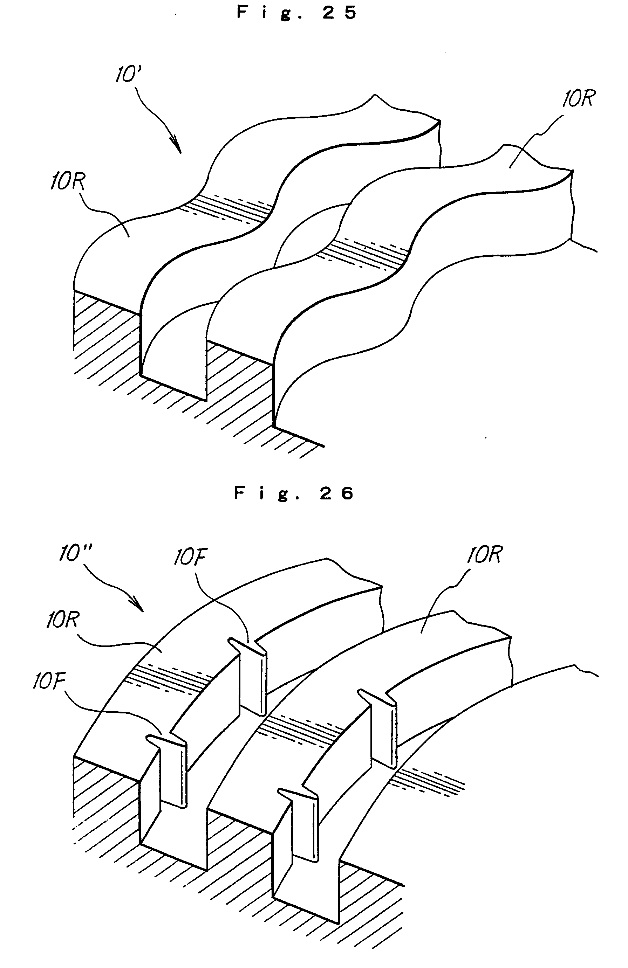

Fig. 25 explains external synchronization to generate a clock signal which may be used by employing a wobble-shaped land-groove type magneto-optical recording medium in the apparatuses according to the third and fourth embodiments.

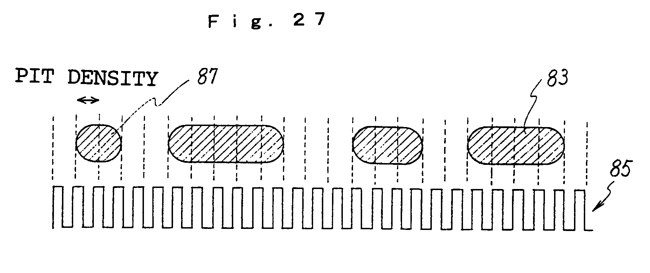

Fig. 26 explains external synchronization to generate a clock signal which may be used by employing a land-groove type magneto-optical recording medium having fine clock marks in the apparatuses according to the third and fourth embodiments.

Fig. 27 explains two-period sampling to generate a clock signal which may be used in the apparatuses according to the third or fourth embodiment.

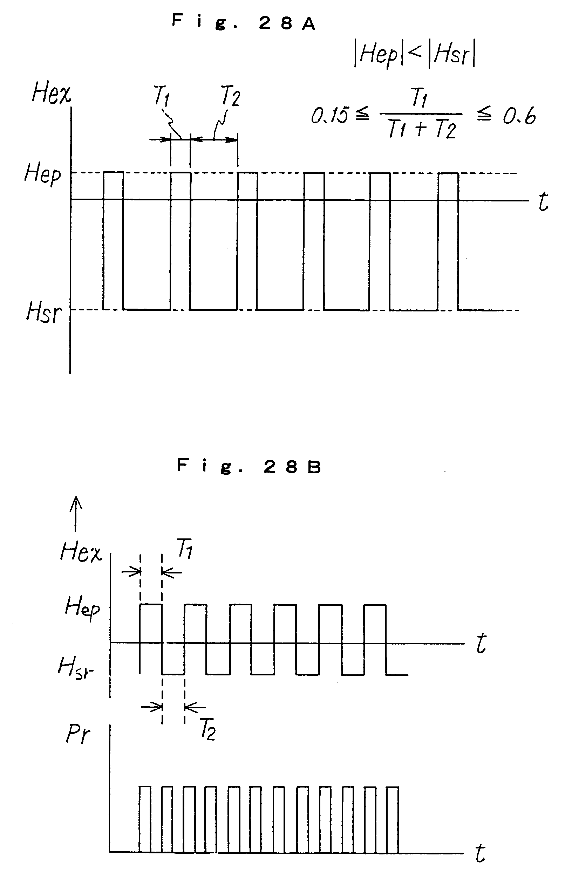

Figs. 28A and 28B show the applicable period of a pulsed laser beam or a pulsed magnetic field, wherein Fig. 28A illustrates a relationship between the periods of magnifying and reducing magnetic fields, and Fig. 28B illustrates the period of the laser beam pulse with respect to the alternating magnetic field.

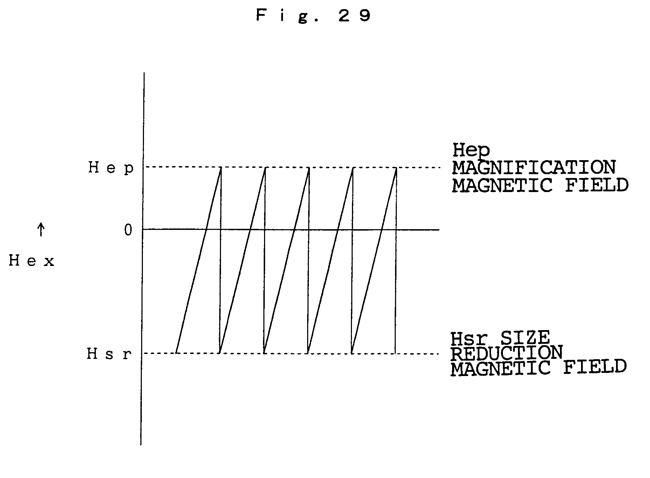

Fig. 29 shows an example of a magnetic field having a triangular waveform which may be used as a magnetic field for magnifying and reducing the magnetic domain.

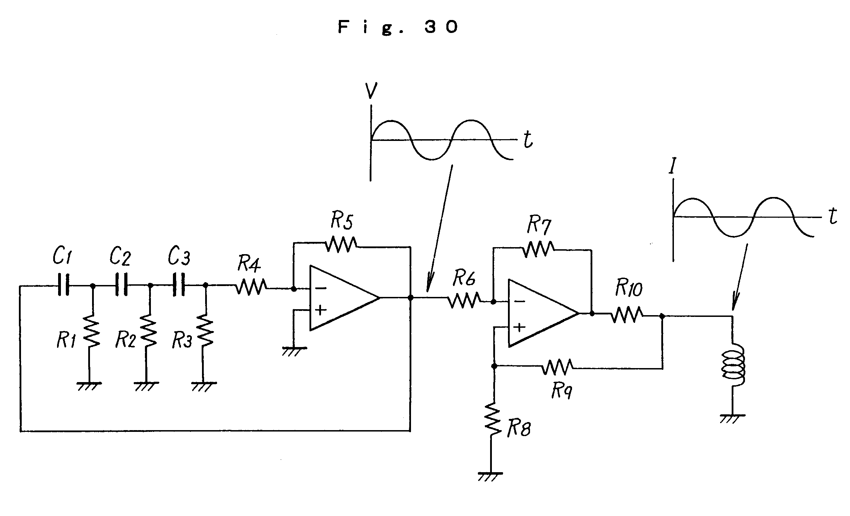

Fig. 30 shows an example of a circuit to generate a sine-wave or sinusoidal waveform which may be used as a magnetic field for magnifying and reducing the magnetic domain.

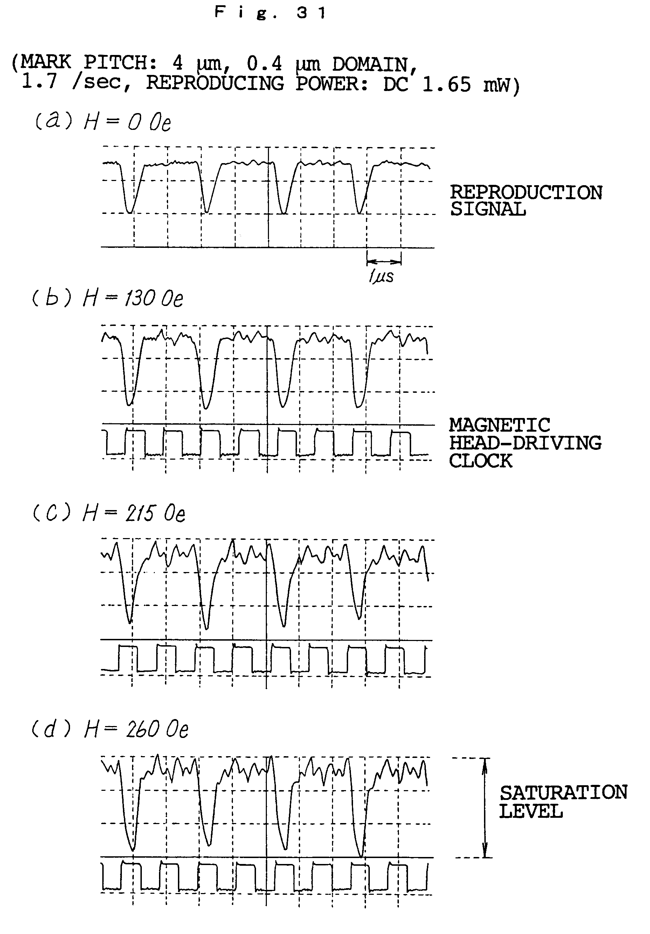

Fig. 31 shows reproduction signals obtained when magnifying and reducing magnetic fields having various intensities are applied to the magneto-optical recording medium according to the first embodiment (B).

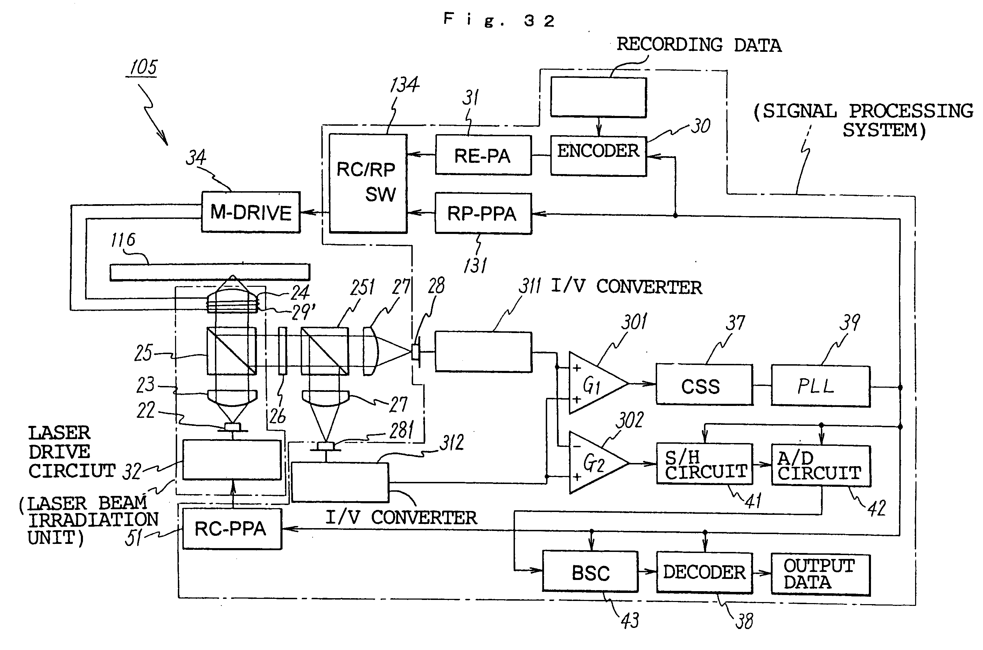

Fig. 32 shows a schematic arrangement illustrating a modified embodiment of the magneto-optical recording and reproducing apparatus shown in Fig. 10.

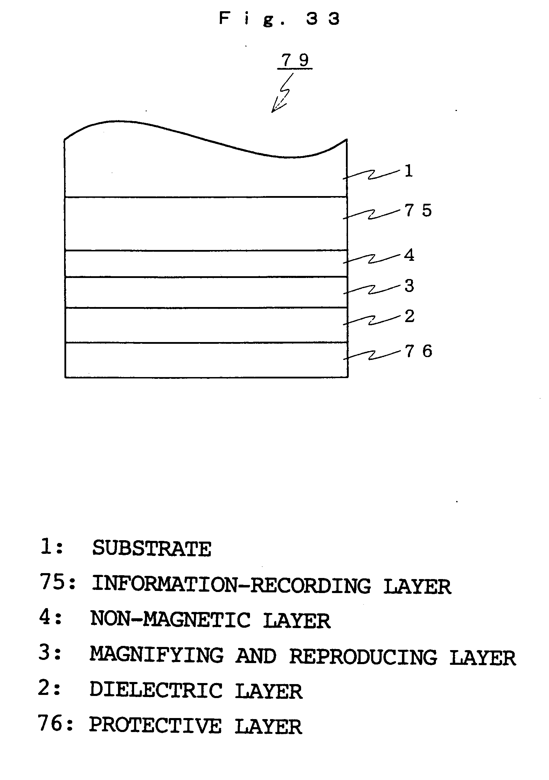

Fig. 33 shows a stacked structure of a magneto-optical recording medium preferably used to perform recording and reproduction by using the magneto-optical recording and reproducing apparatus shown in Fig. 32.

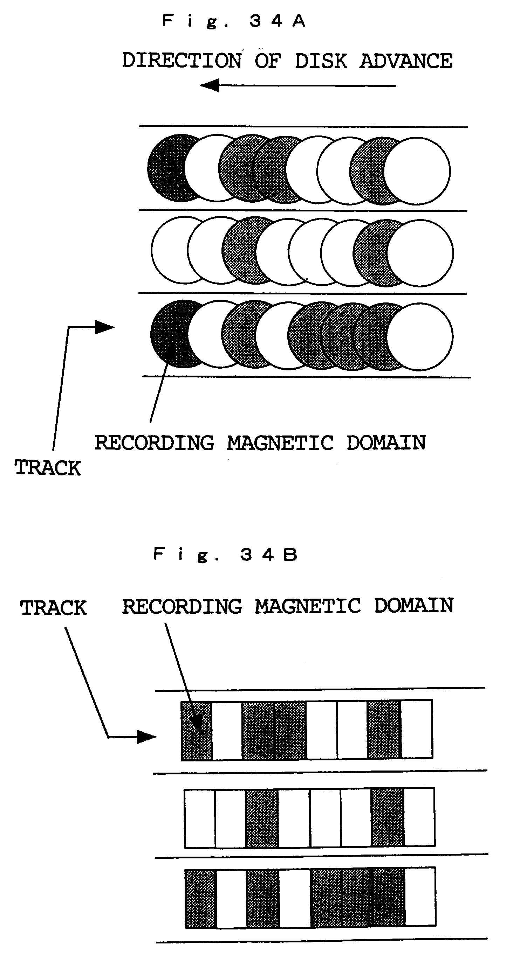

Figs. 34A and 34B show shortest magnetic domain configurations of recording magnetic domains preferably used for magnification and reproduction of the magnetic domains.

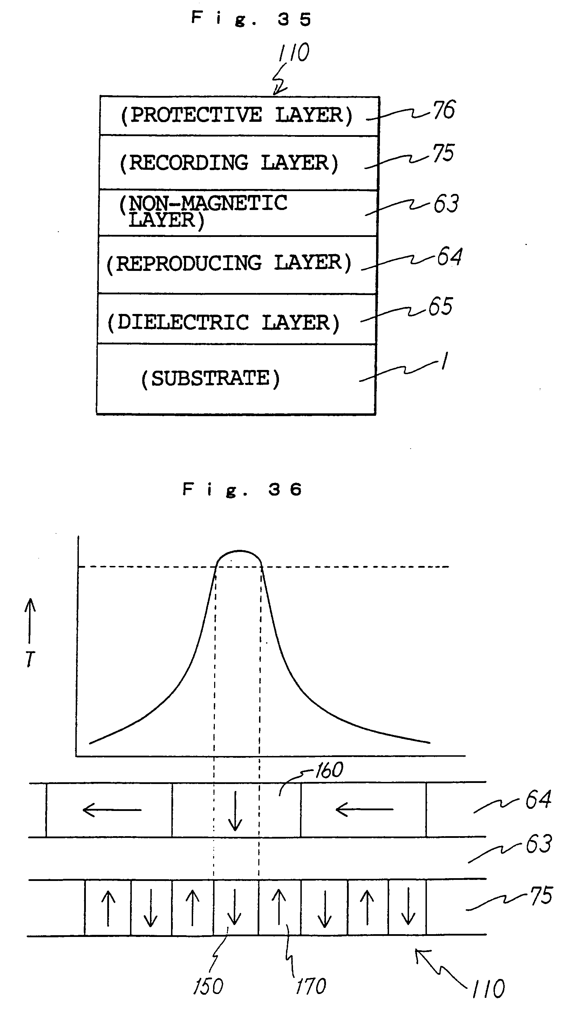

Fig. 35 shows a stacked structure of a magneto-optical recording medium according to a ninth embodiment.

Fig. 36 explains the principle to perform reproduction on the magneto-optical recording medium according to the ninth embodiment.

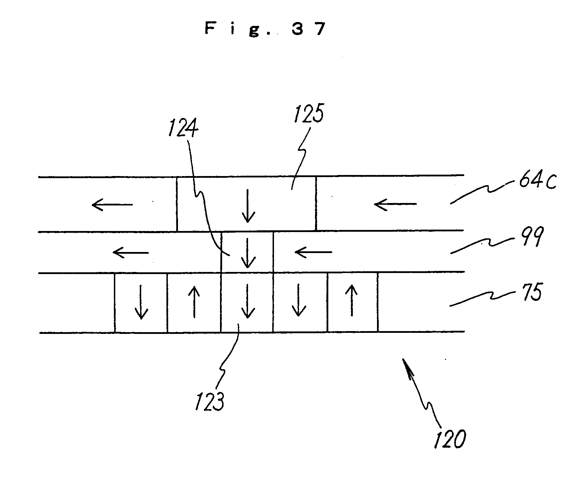

Fig. 37 explains a magnetic domain structure of another magneto-optical recording medium according to the ninth embodiment.

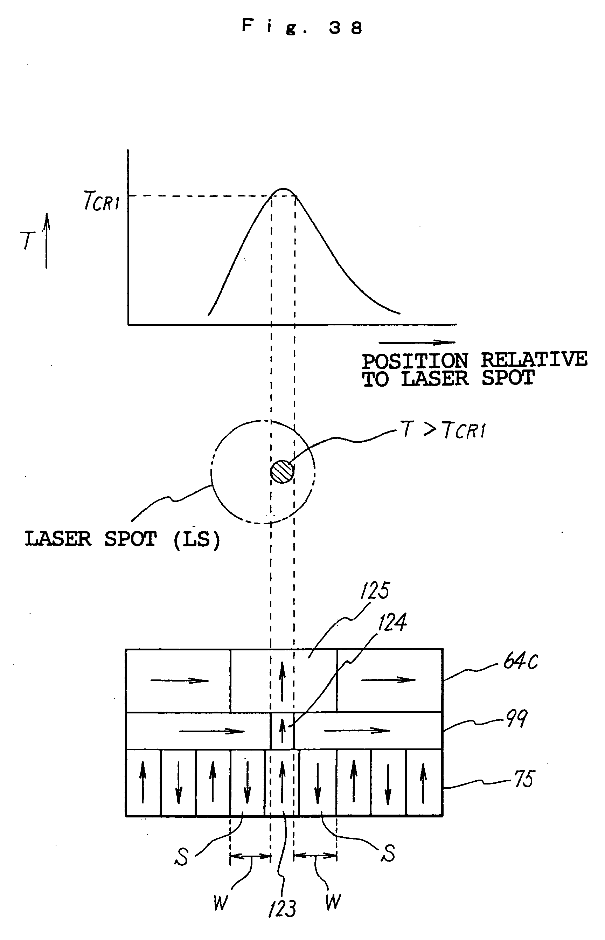

Fig. 38 explains the principle of reproduction on the medium having the magnetic domain structure shown in Fig. 37.

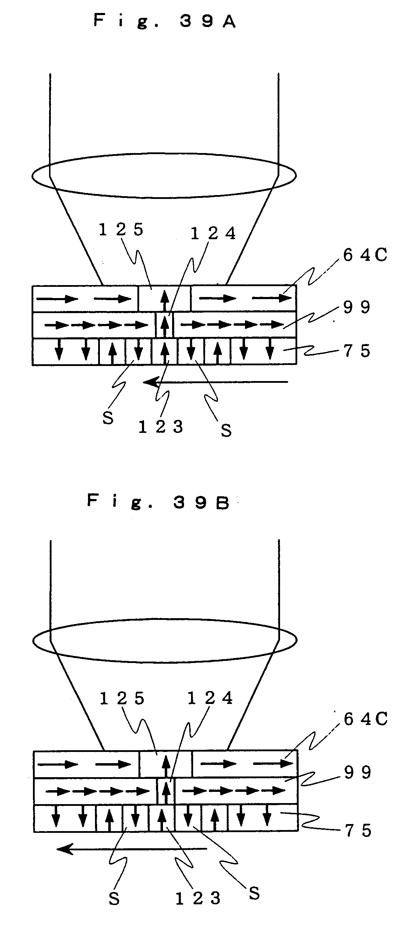

Figs. 39A and 39B explain an advantage obtained when a magnetic domain transferred to an intermediate magnetic layer or a gate layer is smaller than a magnetic domain subjected to recording in a recording layer.

BEST MODE FOR CARRYING OUT THE INVENTION

Embodiments of the magneto-optical recording media according to the first and second aspects of the present invention will be explained with reference to the drawings. Fig. 6 shows an example of the structure of the magneto-optical recording medium according to the second aspect of the present invention. The magneto-optical recording medium according to the first aspect of the present invention is obtained, with reference to Fig. 6, by replacing the gate layer 16, the exchange coupling force control layer 17, and the information-recording layer 18 with the information recording layer (information recording layer 75 shown in Fig. 7), and limiting the thickness of the information-recording layer in accordance with the present invention. Therefore, the following description for the medium structure basically relates to the construction of the magneto-optical recording medium according to the second aspect of the present invention. However, the following description is also applied to the magneto-optical recording medium according to the first aspect provided that the information-recording layer is not limited to the stacked structure composed of the gate layer 16, the exchange coupling force control layer 17, and the information-recording layer 18.

The magneto-optical recording medium 61 is provided as a recording medium which makes it possible to transfer only one of a plurality of minute magnetic domains in the information-recording layer to the magnetic domain-magnifying and reproducing layer 3, and simultaneously magnify and reproduce the transferred magnetic domain in accordance with the principle as described above. The magneto-optical recording medium 61 comprises a dielectric layer 2, a magnetic domain-magnifying and reproducing layer 3, a non-magnetic layer 4, a gate layer 16, an exchange coupling force control layer 17, an information-recording layer 18, and a transparent dielectric layer 6, the layers being successively stacked on a transparent substrate 1. A perpendicularly magnetizable film, in which the magnetic force resistance of the magnetic wall is smaller than the reproducing magnetic field upon irradiation with the reproducing light beam, can be used for the magnifying and reproducing layer 3 as described above. It is possible to use, for example, a rare earth transition metal alloy such as GdFe, GdFeCo, and GdCo; an alloy or an alternately stacked material of a Pd or Pt layer and a Co layer; or a magnetic material of garnet-based oxide.

Preferably, the magnetic domain-magnifying and reproducing layer 3 is constructed to have its compensation temperature of -100 to 50 °C. When the compensation temperature is in the foregoing range, the saturation magnetization (Ms) is small in the vicinity of room temperature, and Ms is large only at a high temperature portion (the coercivity is increased in the vicinity of room temperature, and the coercivity is lowered at a high temperature). Namely, the coercivity Hc is lowered in an area of the magnetic domain-magnifying and reproducing layer 3 in which the temperature is high at the central portion within the laser spot, because Ms is increased. Accordingly, only one recording magnetic domain, which is located in the information-recording layer existing under the high temperature area of the magnetic domain-magnifying and reproducing layer 3, is transferred to the reproducing layer. Thus, only the transferred magnetic domain in the magnetic domain-magnifying and reproducing layer 3 can be magnified by using the reproducing magnetic field. Therefore, the magnification and reproduction for the magnetic domain can be realized by using the simple structure by setting the compensation temperature of the magnetic domain-magnifying and reproducing layer 3 to be -100 to 50 °C.

Several methods are available to transfer, to the gate layer 16, only one magnetic domain of a plurality of magnetic domains in the information-recording layer irradiated with the reproducing laser beam spot. Namely, there are (1) a method in which a magnetic domain in the information-recording layer 18 is transferred to the gate layer 16, the magnetic domain being in an area having a temperature higher than a predetermined temperature in a temperature distribution in the gate layer 16 and the information-recording layer 18 within the reproducing laser beam spot, (2) a method in which a magnetic domain in the information-recording layer 18 is transferred to the gate layer 16, the magnetic domain being in an area having a temperature lower than a predetermined temperature in a temperature distribution in the gate layer 16 and the information-recording layer 18 within the reproducing laser beam spot, and (3) a method in which a magnetic domain in the information-recording layer 18 is transferred to the gate layer 16, the magnetic domain being in an area within a predetermined temperature range in a temperature distribution in the gate layer 16 and the information-recording layer 18 within the reproducing laser beam spot.

The method (1) has been described in the explanation for the principle of the present invention with reference to Fig. 3, which is based on the fact that the coercivity is decreased in only the high temperature area in the gate layer irradiated with the reproducing laser beam spot, and only that portion undergoes the exchange coupling force exerted from the information-recording layer. Namely, the magnetic domain is transferred from the information-recording layer to the gate layer only in the temperature area in which the coercivity of the gate layer is smaller than the exchange coupling force exerted from the information-recording layer. In the method (2), the coercivity of the high temperature portion of the gate layer irradiated with the reproducing laser beam spot is lowered in the same manner as in the method (1), and all of the magnetization of the high temperature portion is aligned to the external magnetic field when the external magnetic field is applied for magnification and reproduction. On the other hand, the magnetic domain in the information-recording layer 18 is transferred to the gate layer 16 at the low temperature portion by the aid of the exchange coupling force of the information-recording layer 18 and the gate layer 16. The film of this type preferably has a structure provided with an intermediate layer between the gate layer and the information-recording layer. It is possible to use, for example, Gd-Fe-Co (gate layer) / Tb-Fe-Co-Al (intermediate layer) / Tb-Fe-Co (information-recording layer). In the method (3), it is convenient to stack the gate layers exhibiting the characteristics as described in the foregoing (1) and (2). For example, a magnetic layer is provided as an upper layer in which the magnetic domain in the information-recording layer is transferred only in a high temperature area, and a magnetic layer is provided as a lower layer in which the magnetic domain in the information-recording layer is transferred only in a low temperature area. Without adopting the stacked structure, a single magnetic layer may be used to construct a magnetic layer in which the magnetic domain in the information-recording layer is transferred only in a predetermined temperature range as well. For example, in the case of the use of a magnetic material in which the compensation temperature $T_{com}$ exists in the vicinity of room temperature, and the magnetization-easy axis is directed in the in-plane direction in the film at a predetermined temperature $T_{CR}$, transfer from the information-recording layer occurs only at a temperature $(T_{com} + \Delta T) \sim T_{CR}$ which is higher to some extent than the compensation temperature depending on the magnetic material.

In general, the Curie temperature of the information-recording layer is usually about 250 °C, considering the power of semiconductor lasers available as products. Therefore, the upper limit of the recording film subjected to the increase in temperature caused by the reproducing light beam spot is about 170 °C, because if the temperature is higher than the above, the coercivity of the information-recording layer is decreased, and hence the recording magnetic domain possibly changes. Therefore, in the method (2) described above, it is preferable to design the respective magnetic layers so that magnetic domains in the information-recording layer 18 in an area at a temperature lower than 170 °C are transferred to the gate layer 16. In general, the temperature in the magneto-optical recording and reproducing apparatus is about 50 °C. Accordingly, in order to make a difference from the critical temperature in the method (1) so that only one magnetic domain in the information-recording layer 18 is distinguished by using the gate layer 16, a margin of 30 °C is necessary at the minimum. Therefore, it is preferable to design the respective magnetic layers in the method (1) so that magnetic domains in the information-recording layer 18 in a high temperature area of not less than 80 °C are transferred to the gate layer 16. Because of the same reason, it is preferable to design the respective magnetic layers of the magneto-optical recording medium in the method (3) so that magnetic domains in the information-recording layer 18 in a temperature range of 80 °C to 170 °C are transferred to the gate layer 16.

In general, the information-recording layer is required to have a characteristic that the coercivity Hc is several times larger than the reproducing magnetic field even at the temperature of the center of the light beam spot during reproduction. Those usable for the information-recording layer include, for example, rare earth transition metal alloys such as TbFeCo, GdTbFeCo, DyFeCo, GdDyFeCo, GdDyTbFeCo, and/or those added with non-magnetic elements such as Cr and Ti as added elements; Pt-Co alloys; Pt/Co two-layered films; and garnet materials. In general, it is necessary for the gate layer that the coercivity Hc is considerably smaller than that of the information-recording layer. Those usable as the gate layer include, for example, rare earth transition metal alloys such as GdFeCo, GdFe, and GdW; Pd-Co alloys; Pt-Co alloys; Pd/Co two-layered films; Pt/Co two-layered films; and garnet. In order to facilitate the control for magnification and reduction of the magnetic domain in the magnetic domain-magnifying and reproducing layer, the thickness (h) of the gate layer + the exchange coupling force control layer + the information-recording layer preferably satisfies (h/r) ≥ 0.5 for the radius (r) of the minimum magnetic domain which has been recorded in the information-recording layer. According to this limitation, the magnetic domain can be reliably transferred by the aid of the leak magnetic field or the magnetic field leakage directed from the information-recording layer toward the magnetic domain-magnifying and reproducing layer. Further, it is possible to obtain a relatively flat distribution of the leak magnetic field in the in-plane direction in the layer. Therefore, it is easy to control magnification and reduction of magnetic domains in the magnetic domain-magnifying and reproducing layer.

In the magneto-optical recording medium of the present invention, as shown in Fig. 6, the non-magnetic layer 4 can be inserted between the magnetic domain-magnifying and reproducing layer 3 and the gate layer 16 (the information-recording layer in the magneto-optical recording medium according to the first aspect). Those usable as a material for the non-magnetic layer include dielectrics such as $SiO_2$, AlN, and SiN; metals such as Al, AlTi, Au, Ag, Cu, AuAl, and AgAl; and structural materials in which metals and dielectrics are stacked. When the non-magnetic layer 4 exists between the magnetic domain-magnifying and reproducing layer 3 and the gate layer or the information-recording layer 5, an advantage is obtained in that the magnetic domain transferred to the magnetic domain-magnifying and reproducing layer 3 is smoothly magnified and reduced by the aid of the reproducing magnetic field. The magnetic domain in the information-recording layer 18 is magnetostatically transferred via the gate layer to the magnetic domain-magnifying and reproducing layer 3 by the aid of the leak magnetic field from the gate layer + the exchange coupling force control layer + the information-recording layer (or simply the information-recording layer). The non-magnetic layer 4 may be constructed by a single layer or a multi-layered film. When the non-magnetic layer 4 exists between the magnetic domain-magnifying and reproducing layer 3 and the gate layer 16 in the magneto-optical recording medium of the present invention, the magnetic domain is transferred in accordance with the magnetostatic coupling between the magnetic domain-magnifying and reproducing layer 3 and the combined magnetic field of the leak magnetic field concerning the magnetic domain transferred to the gate layer 16 and the magnetic domain written in the information-recording layer 18. When the non-magnetic layer 4 does not exist, the magnetic domain transferred from the information-recording layer 18 to the gate layer 16 is magnetically transferred to the magnetic domain-magnifying and reproducing layer 3 by the aid of the exchange coupling magnetic filed of the gate layer 16 and the magnetic domain-magnifying and reproducing layer 3.

In the magneto-optical recording medium 61 shown in Fig. 6, the dielectric layers 2, 6 can be composed of, for example, nitrides and oxides. The interference effect of the reproducing light beam in the dielectric layer makes it possible to increase the apparent Kerr rotation angle. In addition to the layers shown in Fig. 6, it is allowable to form a metal reflective layer composed of, for example, Al alloy, Au alloy, silver alloy, or copper alloy on the non-magnetic layer 4 on the side of the magnetic domain-magnifying and reproducing layer 3 (or as a part of the non-magnetic layer) in order to obtain a uniform temperature distribution in the magnetic domain-magnifying and reproducing layer 3. When the track center of the magnetic domain-magnifying and reproducing layer 3 has a temperature higher than those of outer portions upon application of the reproducing magnetic field, those included in an area not corresponding to the magnetic domain subjected to recording in the information-recording layer tend to be inverted by the reproducing magnetic field. For this reason, it is avoided that only the track center has a high temperature, by allowing the heat to escape owing to the provision of the metal reflective layer. Thus, it is possible to avoid inversion of magnetic domains at unnecessary portions in the reproducing layer when the reproducing magnetic field is applied.

As described above, the portion of (the gate layer 16 + the exchange coupling force control layer 17 + the information-recording layer 18) shown in Fig. 6 may be replaced with the information-recording layer. In this arrangement, the compensation temperature of the magnetic domain-magnifying and reproducing layer 3 or the information-recording layer may be adjusted to be -100 to 50 °C. For example, a rare earth transition metal is used as a magnetic material for the information-recording layer, and the compensation temperature is set to be -100 to 50 °C in the same manner as the magnetic domain-magnifying and reproducing layer so that the leak magnetic field is increased only at a high temperature portion. Thus, it is possible to perform reproduction while magnifying a magnetic domain of 0.3 micron three times.

When the portion of (the gate layer 16 + the exchange coupling force control layer 17 + the information-recording layer 18) is simply replaced with the information-recording layer, it is possible to provide, between the magnetic domain-magnifying and reproducing layer 3 and the gate layer 16, a magnetic layer or an intermediate layer which behaves as an in-plane magnetizable film at room temperature, which makes transition from the in-plane magnetizable film to a perpendicularly magnetizable film within a temperature range of 80 to 150 °C, and which behaves as the perpendicularly magnetizable film at a temperature higher than the above. Owing to the intermediate layer, even when a plurality of magnetic domains exist in the reproducing light beam spot, the focusing effect of the gate layer makes it possible to allow only one minute magnetic domain smaller than the reproducing light beam spot to emerge (or to be transferred) onto the magnetic domain-magnifying and reproducing layer.

First Embodiment (A)

At first, embodiments of the magneto-optical recording medium according to the first aspect of the present invention will be more specifically explained with reference to the drawings. However, the present invention is not limited thereto.

Fig. 7 shows an example of a cross-sectional structure of a magneto-optical recording medium 71 according to the present invention. The magneto-optical recording medium 71 comprises a dielectric layer 2, a magnifying and reproducing layer 3, a non-magnetic layer 4, an information-recording layer 75, and a dielectric layer, the layers being successively stacked on a transparent substrate 1. A polycarbonate substrate having a thickness of 1.2 mm was used as the transparent substrate 1. A silicon nitride material having a film thickness of 70 nm was used as the dielectric layers 2, 6. A GdFeCo alloy having a film thickness of 20 nm, a compensation temperature of -10 °C, and a Curie temperature of 350 °C was used as the magnifying and reproducing layer 3. A silicon nitride material having a film thickness of 15 nm and an Al alloy having a film thickness of 10 nm were used as the non-magnetic layer 4. A TbFeCo alloy having a film thickness of 200 nm, a compensation temperature of -50 °C, and a Curie temperature of 270 °C was used as the information-recording layer 75. Films of these layers were formed by means of sputtering by using a magnetron sputtering apparatus respectively.

Predetermined data was recorded on the magneto-optical recording medium 71 shown in Fig. 7 by using the recording and reproducing apparatus shown in Fig. 2 in accordance with the magneto-optical field modulation system. Details of recording and reproduction based on the magneto-optical field modulation system will be explained in third and fourth embodiments described later on. Alternatively, as explained in another embodiment, the magnetic field modulation system may be used to form recording magnetic domains in the information-recording layer so that the magnetic domain length of the minimum magnetic domain in the widthwise direction of the track is shorter than the length in the linear direction. The optical head shown in Fig. 2 had a laser wavelength of 680 nm, and an optical system having a numerical aperture of 0.55 was used. The effective spot size was 1.2 micron. Therefore, when continuous magnetic domains each having a size of 0.4 micron are recorded on the magneto-optical recording medium 71, two magnetic domains simultaneously exist within the reproducing light beam spot. In the present invention, the two magnetic domains can be separated and reproduced by using the gate layer included in the magneto-optical recording medium.

At first, the reproducing power was set to be 1.0 mV to perform reproduction. However, the recording magnetic domain was not transferred to the magnifying and reproducing layer 3, and no reproduction signal appeared, because of the following reason. Namely, the compensation temperature of the magnifying and reproducing layer 3 of the magneto-optical recording medium 71 was not more than room temperature, and it was impossible to heat the magnifying and reproducing layer 3 up to a temperature sufficient to transfer the recording magnetic domain to the magnifying and reproducing layer 3 by using the reproducing power of 1.0 mW. No reproduction waveform appeared as well even when the reproducing power was 1.8 mW.

Next, when the reproducing power was increased to 2.0 mW, an area having a diameter of about 0.7 micron in the vicinity of the center of the spot on the magnifying and reproducing layer 3 was heated to be not less than 80 °C. Only one magnetic domain having a size of 0.4 micron was transferred to the heated area on the magnifying and reproducing layer 3. Namely, the two magnetic domains in the information-recording layer 5 existing in the spot were successfully distinguished from each other to perform reproduction, because of the following reason. The saturation magnetization at room temperature is smaller than 100 emu/cc in any of the information-recording layer 5 and the magnifying and reproducing layer 3, and hence no magnetic domain in the information-recording layer 5 was transferred to low temperature portions at 80 °C or less in the light beam spot. Namely, the recording magnetic domain of 0.4 micron was successfully transferred only to the area of the magnifying and reproducing layer 3 heated to the temperature higher than 80 °C. A reproduction waveform obtained in this procedure is shown in Fig. 8A. No reproducing magnetic field was applied (H = 0) during the reproduction. A signal of an alternating magnetic field is simultaneously shown in a lower part of Fig. 8A.

Next, the recording data was reproduced from the magneto-optical recording medium 71 under the same condition as described above by applying, to the magnetic head, an alternating magnetic field as the reproducing magnetic field of H = ±215 (Oe) with modulation in synchronization with a recording clock. As a result, a reproduction waveform was obtained as shown in Fig. 8C. In the reproduction signal shown in Fig. 8C, the amplitude of the reproduction signal is increased threefold as compared with the signal obtained with no reproducing magnetic field (Fig. 8A). The amplitude should not be increased if the transferable area for the magnetic domain was merely increased by the aid of the reproducing magnetic field. However, in fact, the amplitude was increased threefold, indicating the occurrence of magnification (and reduction) of the magnetic domain transferred to the magnifying and reproducing layer 3. Fig. 8B shows a waveform obtained when an alternating magnetic field of H = ±130 (Oe) was applied in synchronization with the recording clock. It is understood that the amplitude of the reproduction signal was also increased in this case as compared with the case in which no reproducing magnetic field was applied. Fig. 8D shows a waveform obtained when an alternating magnetic field of H = ±260 (Oe) was applied in synchronization with the recording clock. In this case, the amplitude of the reproduction signal was slightly decreased as compared with the case of H = ±215 (Oe), probably because of the following reason. Namely, magnetic domains in the magnifying and reproducing layer 5 corresponding to an area including no recording magnetic domain were also inverted due to the too large reproducing magnetic field, and the reducing reproducing magnetic field failed to erase the inverted magnetic domains. Namely, the signal amplitude was apparently decreased since the base line of the signal level was raised when the reducing magnetic field was applied.

Reproduction was performed while changing the film thickness from 200 nm to 70 nm for the information-recording layer 5 composed of TbFeCo of the magneto-optical recording medium 71, under the same reproducing condition as that used when the alternating magnetic field of H = ±215 (Oe) was applied. In this case, the reproduction waveform was instantaneously increased by the alternating reproducing magnetic field, however, magnetic domains were immediately linked with adjacent magnetic domains, and it was impossible to detect individual magnetic domains, probably because of the following reason. Namely, the film thickness of TbFeCo of the information-recording layer 3 was thin as compared with the size of the recording magnetic domain, and hence the leak magnetic field thereof was insufficient. According to experiments performed by the present inventors, it has been revealed that the information-recording layer has its film thickness which is required to be at least 100 nm or more in order to magnify and reproduce the magnetic domain of 0.4 micron. Therefore, it is preferable that the ratio (h/r) of the thickness (h) of the recording layer to the length radius (r) in the linear direction (the track direction) of the minimum recording magnetic domain is not less than 0.5.

First Embodiment (B)

This embodiment illustrates another specified embodiment of the magneto-optical recording medium having a structure equivalent to that of the magneto-optical recording medium shown in Fig. 7A. This specified embodiment of the magneto-optical recording medium corresponds to the third aspect of the present invention. With reference to Fig. 7B, the magneto-optical recording medium 72 has a structure comprising a dielectric layer 2 composed of SiN, a magnifying and reproducing layer (hereinafter abbreviated as "magnifying layer") 3 composed of GdFeCo, a non-magnetic layer 4 composed of SiN/AlTi, an information-recording layer (hereinafter abbreviated as "recording layer") 75 composed of TbFeCo, and a protective layer 76 composed of SiN, the layers being successively stacked on a light-transmissive substrate 1 made of, for example, glass or polycarbonate. The film thickness of the dielectric layer 2 may be adjusted to be 600 to 800 angstroms (hereinafter indicated by "A"). The film thickness of the reproducing layer 3 may be adjusted to be 50 to 100 A. The film thickness of the non-magnetic layer 4 may be adjusted to be 50 to 300 A. The film thickness of the recording layer 75 may be adjusted to be 500 to 3000 A. The film thickness of the protective layer 1 may be adjusted to be 500 to 1000 A. The respective layers can be formed by means of the magnetron sputtering method by using Ar as a sputtering gas.

In the stacked structure shown in Fig. 7A, the reproducing layer 3 is not limited to GdFeCo, which may be GdFe, GdCo, or TbCo, or a magnetic film composed of one element selected from Ho, Gd, Tb, and Dy, and one element selected from Fe, Co, and Ni. In place of SiN/AlTi, the non-magnetic layer 4 may be composed of AlN, TiN, $SiO_2$, $Al_2O_3$, SiC, TiC, ZnO, SiAlON, ITO, or $SnO_2$. The recording layer 75 is not limited to the TbFeCo alloy, which may be a single-layered magnetic film or a multi-layered magnetic film composed of an element selected from Tb, Dy, and Nd, and an element selected from Fe, Co, and Ni. The recording layer 75 may be a single-layered magnetic film or a multi-layered magnetic film composed of an element selected from Pt and Pd, and an element selected from Fe, Co, and Ni. Further, it is also possible to use other materials which can be used for the reproducing layer, the recording layer, and the non-magnetic layer as disclosed herein.

The principle of the magneto-optical recording medium of the present invention will be explained with reference to Fig. 17 and Figs. 18A and 18B. In the case of the magneto-optical recording medium 72 of this specified embodiment, a minute magnetic domain 7 in the recording layer 75 is firstly transferred to the reproducing layer 3 in accordance with magnetostatic coupling by radiating the reproducing laser beam, and then the transferred magnetic domain is magnified and reproduced. When the magneto-optical recording medium is irradiated with the reproducing laser beam, the temperature distribution usually occurs on the medium as shown in Fig. 17. Fig. 17 shows a graph illustrating the relationship of the temperature with respect to the position in the track direction, obtained when the magneto-optical disk is irradiated with the reproducing light beam in a spot form. A high temperature area exists at the backward position from the spot center of the reproducing light beam. This temperature distribution can be utilized to transfer only magnetization of the recording layer 75 in a specified temperature area to the reproducing layer 3.

With reference to Fig. 18A, explanation will be made for the process in which magnetization of the recording layer 75 is transferred to the reproducing layer 3a only at the central portion (high temperature portion) of the reproducing light beam spot. For convenience of explanation, only the recording layer 75, the non-magnetic layer 4, and the reproducing layer 3a are shown in Fig. 18A, over which the temperature distribution, obtained when the magneto-optical recording medium is irradiated with the reproducing light beam spot, is simultaneously shown. When the magneto-optical recording medium is irradiated with the reproducing light beam spot, only a magnetic domain 7 in the recording layer 75 in the high temperature area having a temperature not less than a predetermined temperature is transferred to the reproducing layer 3 via the non-magnetic layer 4. A magnetic domain 8, which has the same magnetization as that of the magnetic domain 7 in the recording layer 75, appears in the reproducing layer 3a. In this case, the magnetic domain is transferred from the recording layer 75 to the reproducing layer 3a via the non-magnetic layer 4. Accordingly, the transfer is effected by the magnetostatic coupling rather than by the exchange coupling force. In order to perform this type of transfer, it is preferable to use, as the reproducing layer 3a, a magnetic film which behaves as an in-plane magnetizable film at room temperature, and which behaves as a perpendicularly magnetizable film at a temperature not less than a predetermined temperature (critical temperature). The critical temperature is usually within a range of 100 to 170 °C. It is preferable to use a magnetic film which quickly changes from an in-plane magnetizable film to a perpendicularly magnetizable film when it arrives at a temperature within the foregoing range. An index to indicate the degree of quick change from the in-plane magnetizable film to the perpendicularly magnetizable film is exemplified by the temperature coefficient C of the Kerr rotation angle. The magneto-optical recording medium according to this embodiment uses a magnetic film having a temperature coefficient C of not less than 8.0. When the magnetic film, which behaves as an in-plane magnetizable film at room temperature, and which behaves as a perpendicularly magnetizable film at a temperature not less than the critical temperature, is used as the reproducing layer in the magneto-optical recording media according to the various aspects (the first to fourth aspects) of the present invention, it is preferable to use the magnetic film having a temperature coefficient C of not less than 8.0. For details of the calculating method for the temperature coefficient C, reference may be made to "Washimi et al, Proceedings of 43th Lecture Meeting of Applied Physics Society Association, 27p-PD-26 (1996)".

In order to carry out the transfer of the type shown in Fig. 18A, it is appropriate to use GdFeCo, GdFe, and GdCo for the magnetic film to be used for the reproducing layer 3a. The materials described in this embodiment can be used as materials for constructing the non-magnetic layer 4 and the recording layer 75.

After the magnetization of the magnetic domain 7 is transferred as the magnetic domain 8 to the reproducing layer 3a, an external magnetic field Hep is applied to magnify the magnetic domain 8 as shown in Fig. 18B. An alternating magnetic field is used as the external magnetic field Hep to be applied. When the polarity of the alternating magnetic field is identical with that of the magnetization of the magnetic domain 8 transferred to the reproducing layer 3a, magnetic domains 8a, 8b having the same direction as that of the magnetization of the magnetic domain 8 appear in both areas adjacent to the magnetic domain 8. Thus, the transferred magnetic domain 8 is magnified. The moment the transferred magnetic domain 8 is magnified, it is detected as a reproduction signal by the reproducing apparatus described later on.

The magnitude Hep of the magnifying reproducing magnetic field applied upon the reproduction, and the relationship between the foregoing magnetic field and the size of the mark (magnetic domain) appearing on the reproducing layer 3a have been exactly explained in the foregoing section of the explanation for the principle with reference to the hysteresis curve shown in Fig. 5A.

Fig. 19 shows dependency of Hn and He measured by using the magneto-optical recording medium 72 shown in Fig. 7B, on the reproducing power. The reproducing laser beam had a wavelength of 830 nm. When the reproducing laser beam power is in a range of 1.0 to 2.2 mW, a distinct difference exists between He and Hn. Therefore, the external magnetic field Hep may be determined between Hs and Hn determined depending on the respective reproducing powers. For example, when the reproducing laser beam power is 1.4 mW, the external magnetic field Hep may be set between 200 and 250 (Oe). According to Fig. 19, the external magnetic field Hep can be decreased in accordance with increase in the reproducing laser beam power. The frequency of the alternating magnetic field can be within a range of 0.5 to 2 MHz.

After transferring the magnetic domain to the reproducing layer 3a and magnifying and reproducing the magnetic domain by the aid of the external magnetic field, it is necessary to once erase the magnified magnetic domain in order to transfer, magnify, and reproduce the next magnetic domain. Two methods are available to erase the magnetic domain. One method is based on the use of the minimum stable magnetic domain radius determined depending on the type of the magnetic film. The size of the recorded magnetic domain provides different stabilities depending on the atmospheric temperature, and it is difficult for minute magnetic domains to stably exist at a low temperature. Fig. 20 shows the minimum stable magnetic domain radius $r_{min}$ of the magnetic domain which can be stably exist as defined in the expression (1) described above, with respect to the temperature. The minimum stable magnetic domain radius $r_{min}$ decreases as the temperature of the magnetic film increases. In the case of GdFeCo used for the reproducing layer 3, $r_{min}$ at room temperature is 0.5 to 0.6 $\mu$m, and $r_{min}$ at 120 °C is 0.1 $\mu$m. Namely, magnetic domains of not less than 0.1 $\mu$m can stably exist at 120 °C. However, magnetic domains having a size of 0.1 $\mu$m cannot stably exist no longer, and such magnetic domains disappear. Therefore, the magnetic domain behaves as follows on the basis of this principle. Namely, the magnetic domain in the recording layer is transferred to the reproducing layer at the central portion (high temperature area) within the reproducing light beam spot, and it is magnified by the aid of the magnifying reproducing magnetic field. After that, when the magnetic domain enters the low temperature portion within the reproducing light beam spot, the minimum stable magnetic domain radius becomes large with respect to the transferred and magnified magnetic domain. Accordingly, the magnetic domain spontaneously disappears. The method for erasing the magnified magnetic domain is not limited to this embodiment, which is applicable to the magneto-optical recording media and the reproducing methods therefor according to all of the aspects of the present invention.

Another method for erasing the magnetic domain transferred to the reproducing layer 3 and magnified therein is based on the application of a magnetic field Hsr having a direction opposite to that of the external magnetic field Hep applied when the magnetic domain is magnified, as explained in relation to Fig. 5B in the foregoing explanation for the principle. Fig. 21 conceptually shows the neighborhood of the magnetic domain 8 in the reproducing layer 3a shown in Fig. 18B, illustrating a situation in which the magnified magnetic domains 8a, 8b are reduced by applying the magnetic field Hsr in the direction opposite to that of the external magnetic field Hep. The magnetic field Hsr used to reduce the magnetic domain can be determined on the basis of the hysteresis curve shown in Fig. 4B. The principle of reducing the magnetic domain has been already explained in relation to Fig. 5B, which will not be described again.

The wavelength of the laser beam used to transfer and magnify the magnetic domain, i.e., used for reproduction is preferably 300 to 830 nm. The objective lens for collecting the laser beam may have a numerical aperture of 0.55 (allowable error: ±0.05). The spot size of the laser beam may be 1.0 $\mu$m (allowable error: ±0.1).

In this specified embodiment, explanation has been made for the case in which the minute magnetic domain in the recording layer 75 existing in the high temperature area at the central portion within the reproducing light beam spot is transferred to the reproducing layer 3. Besides, it is allowable to use a method for transferring a magnetic domain existing in a backward high temperature area or in a frontward low temperature area within the reproducing light beam spot. In the case of the magneto-optical recording medium of the former type, a perpendicularly magnetizable film is used for the reproducing layer, and it is necessary to apply an initializing magnetic field in order to align the magnetization direction of the reproducing layer 3 before being irradiated with the reproducing laser beam. When the medium is irradiated with the laser beam, magnetization of a magnetic domain having a temperature raised to a predetermined temperature or higher is transferred from the recording layer 75 to a magnetic domain in the reproducing layer 3 via the non-magnetic layer 4 in accordance with magnetostatic coupling. After that, the operation is performed for magnifying (and erasing) the magnetic domain as shown in Fig. 18B. Those preferably used for the reproducing layer appropriate for the system to perform transfer by using the high temperature area at the backward portion within the reproducing light beam spot include a magnetic film composed of an alloy containing one or more rare earth metals such as Tb, Dy, and Gd, and one or more transition metals such as Fe, Co, and Ni. It is preferable to use, for example, GdFeCo, GdFe, GdCo, and TbCo. Those used for the non-magnetic layer 4 and the recording layer 75 may be selected from those described above.

In the method for transferring the magnetic domain existing in the frontward low temperature area within the reproducing light beam spot, a perpendicularly magnetizable film is used for the reproducing layer. The perpendicularly magnetizable film is based on the use of a magnetic layer having such a property that magnetization is erased when it is irradiated with the reproducing laser beam to raise the temperature to be not less than a predetermined temperature (Curie temperature). In this case, the direction of magnetization of the recording layer 75 is coincident with that of the reproducing layer 3 when the signal is recorded. When the reproducing laser beam is radiated, and the temperature of the reproducing layer 3 is raised to be not less than a predetermined temperature, then the magnetization in such an area is erased.

Therefore, the area having the temperature not less than the predetermined temperature is in a state in which no signal is recorded. Transfer is performed only at the frontward portion having a lower temperature within the laser beam, and the signal is reproduced. After that, the operation for magnifying (erasing) the magnetic domain is performed as shown in Fig. 18A. Those appropriately used as the reproducing layer 3 based on this method include a magnetic film-composed of TbCo, Dy, and an element selected from Fe, Co, and Ni. Those usable for the non-magnetic layer 4 and the recording layer 75 may be selected from the materials described above.

With reference to Fig. 22, it is possible to combine the system for causing transfer at the backward high temperature area within the reproducing light beam spot and the system for causing transfer at the frontward low temperature area within the reproducing light beam spot. Fig. 22 shows a recording layer 75, a non-magnetic layer 4, and a reproducing layer 3d of a magneto-optical recording medium of this type, and a temperature distribution thereof. In the case of the magneto-optical recording medium of this type, the reproducing layer 3d is magnetized in a certain direction by using an initializing magnetic field (not shown) before being subjected to reproduction. After that, when the magneto-optical recording medium is irradiated with the laser beam, the magnetization is erased at a high temperature portion 19 in the reproducing layer 3d. A magnetic domain 20, which is located frontward from the high temperature portion 19 (at a frontward position in the disk-traveling direction), is magnetized in the same direction as that of a magnetic domain 21 in the recording layer 75, and hence it can be reproduced by magnifying the magnetic domain 20. A magnetic film used for the reproducing layer 3d has the following characteristics, assuming that it undergoes a temperature at which magnetization is transferred from the recording layer 75 and a temperature at which or higher than which magnetization is erased. Namely, the temperature for transferring magnetization is preferably within a range of 80 to 120 °C, and the temperature for erasing magnetization is preferably within a range of 130 to 170 °C. The initializing magnetic field, which is used before beginning the reproducing operation, preferably has a magnitude of not more than 1 k (Oe). Those appropriately used as the reproducing layer 3d include a magnetic film composed of TbCo, Dy, and an element selected from Fe, Co, and Ni. Those usable for the non-magnetic layer 4 and the recording layer 75 may be selected from the materials described above.

Second Embodiment

In the first embodiment, the simple structure comprising the magnifying and reproducing layer 3 and the information-recording layer is successfully used to transfer the minute magnetic domain from the information-recording layer to the magnetic domain-magnifying and reproducing layer and magnify and reduce the transferred magnetic domain. This second embodiment illustrates a magneto-optical recording medium provided with a gate layer which makes it possible to select only one of a plurality of magnetic domains in the information-recording layer existing within the reproducing light beam spot. This magneto-optical recording medium corresponds to the magneto-optical recording medium according to the second aspect of the present invention.

As shown in Fig. 9, the magneto-optical recording medium 91 of this embodiment has a structure in which the information-recording layer 5 of the magneto-optical recording medium 71 of the first embodiment (A) is replaced with a gate layer 93 + exchange coupling force control layers 95, 97 + an information-recording layer 99. A magnetic layer composed of GdFeCo having a compensation temperature of -50 °C, a Curie temperature of 350 °C, and a film thickness of 100 nm was used as the gate layer 93. A magnetic layer composed of TbFeCo having a compensation temperature of -80 °C, a Curie temperature of 160 °C, and a film thickness of 20 nm was used as the first exchange coupling force control layer 95. A magnetic layer composed of GdFeCo having a compensation temperature of 90 °C, a Curie temperature of 200 °C, and a film thickness of 10 nm was used as the second exchange coupling force control layer 97. A magnetic layer composed of TbFeCo having a compensation temperature of -50 °C, a Curie temperature of 270 °C, and a film thickness of 70 nm was used as the information-recording layer 99. The first exchange coupling force control layer 95 is a layer to control transfer of magnetic domains in the information-recording layer 99 in an area having a temperature of not less than 70 °C to the gate layer 93. The second exchange coupling force control layer 97 is a layer to control transfer of magnetic domains in the information-recording layer 99 in an area having a temperature of not more than 160 °C to the gate layer 93. The arrangement as described above makes it possible to transfer, to the magnifying and reproducing layer 3, the recording magnetic domain in the information-recording layer 99 within a temperature range of not less than 70 °C and not more than 160 °C. Films of these layers were formed by using the magnetron sputtering apparatus in the same manner as described in the first embodiment.

The magneto-optical recording medium 91 was subjected to recording and reproduction under the same condition as that used in the first embodiment. The magnetic domain transferred to the magnifying and reproducing layer 3 was magnified by using a reproducing magnetic field (alternating magnetic field) H = ±200 (Oe). It was confirmed that the amplitude of the reproduction signal was increased fourfold. It was found that the magnetic domain of 0.3 micron was reliably transferred by using the magneto-optical recording medium 91.

The magnetic layer composed of GdFeCo having the thickness of 100 nm is used as the gate layer 93, which is thicker than the thickness of the magnetic wall of the magnetic domain formed in the GdFeCo magnetic layer. Accordingly, twisting of magnetic spin in the magnetic wall is permitted upon inversion of the magnetization transferred from the information-recording layer 99 to the gate layer 93.

Third Embodiment

This embodiment explains an illustrative arrangement of an apparatus, and a recording and reproducing method preferably used for recording and reproduction on the magneto-optical recording media specifically explained in the first embodiments (A) and (B) and the second embodiment. The apparatus 101 shown in Fig. 10 principally comprises a laser beam-radiating unit for irradiating the magneto-optical disk 1 with a light beam pulsed at a constant period synchronized with code data, a magnetic field-applying unit for applying a controlled magnetic field to the magneto-optical disk 100 during recording and reproduction, and a signal-processing system for detecting and processing a signal supplied from the magneto-optical disk 100. In the laser beam-radiating unit, a laser 22 is connected to a laser-driving circuit 32 and a recording pulse width/phase-adjusting circuit 51 (RC-PPA). The laser-driving circuit 32 receives a signal from the recording pulse width/phase-adjusting circuit 51 and controls the laser pulse width and the phase of the laser 22. The recording pulse width/phase-adjusting circuit 51 receives a clock signal described later on from a PLL circuit 39, and it generates a first synchronization signal to adjust the phase and the pulse width of the recording light beam.

In the magnetic field-applying unit, a magnetic coil 29 for applying the magnetic field is connected to a magnetic coil-driving circuit (M-DRIVE) 34. During recording, the magnetic coil-driving circuit 34 receives input data from an encoder 30 into which data is inputted, via a phase-adjusting circuit (RE-PA) 31 to control the magnetic coil 29. During reproduction, the magnetic coil-driving circuit 34 receives a clock signal described later on from a PLL circuit 39 to generate a second synchronization signal for adjusting the phase and the pulse width, via a reproducing pulse width/phase-adjusting circuit (RP-PPA) 131. The magnetic coil 29 is controlled on the basis of the second synchronization signal. In order to switch the signal to be inputted into the magnetic coil-driving circuit 34 between the recording and reproduction operations, a recording/reproduction changeover switch (RC/RP SW) 134 is connected to the magnetic coil-driving circuit 34.

In the signal-processing system, a first deflecting prism 25 is arranged between the laser 22 and the magneto-optical disk 100. A second deflecting prism 251 and detectors 28, 281 are arranged on a side of the first deflecting prism 25. Both of the detectors 28, 281 are connected to a subtracter 302 and an adder 301 via I/V converters 311, 312 respectively. The adder 301 and is connected to the PLL circuit 39 via a clock extraction circuit (CSS) 37. The subtracter 302 is connected to a decoder 38 via a sample/hold (S/H) circuit 41 for holding the signal in synchronization with the clock, an A/D conversion circuit 42 for performing analog-digital conversion in synchronization with the clock in the same manner as described above, and a binary signal-processing circuit (BSC) 43.

In the apparatus constructed as described above, the light beam emitted from the laser 22 is converted into a parallel light beam by the aid of a collimator lens 23. The light beam passes through the deflecting prism 25, and it is condensed onto the magneto-optical disk 21 by the aid of an objective lens 24. A reflected light beam from the disk 100 is directed toward a direction to arrive at the deflecting prism 251 by the aid of the deflecting prism 25. The light beam passes through a half-wavelength plate 26, and then it is divided into those directed to two directions by the aid of the deflecting prism 251. The divided light beams are collected by detector lenses 27 respectively, and they are introduced into photodetectors 28, 281. Now, pits for generating a tracking error signal and for generating a clock signal are formed beforehand on the magneto-optical disk 100. A signal, which represents a reflected light beam from the pits for generating the clock signal, is detected by the detectors 28, 281, and then it is extracted by the clock extraction circuit 37. After that, a data channel clock is generated by the PLL circuit 39 connected to the clock extraction circuit 37.

Upon data recording, the laser 22 is modulated with a constant frequency by the aid of the laser-driving circuit 32 to make synchronization with the data channel clock. The laser 22 radiates a continuous pulse beam having a narrow width so that the data-recording area of the rotating magneto-optical disk 100 is locally heated at equal intervals. The data channel clock is used to control the encoder 30 in the magnetic field-applying unit so that a data signal having a reference clock period is generated. The data signal is supplied to the magnetic coil-driving unit 34 via the phase-adjusting circuit 31. The magnetic coil-driving unit 34 controls the magnetic coil 29 so that the magnetic field having a polarity corresponding to the data signal is applied to a heated portion in the data-recording area on the magneto-optical disk 100.

The recording and reproducing characteristic of the magneto-optical recording medium prepared in the second embodiment was measured by using the magneto-optical recording and reproducing apparatus 101. The optical head of the apparatus 101 had a laser wavelength of 685 nm, and the objective lens had a numerical aperture NA of 0.55. Data were recorded by using the magneto-optical field modulation system to perform recording at a linear velocity of 5.0 m/sec by modulating the external magnetic field at ±300 (Oe) while radiating the laser beam in a pulsed manner at a constant period, in which the laser beam pulse had a duty ratio of 50 %. Fig. 11 shows a timing chart illustrating the recording laser beam pulse and the recording external magnetic field with respect to the recording clock. Fig. 11 shows, at its upper part, a pattern of minute magnetic domains formed by the recording performed as described above. The minute magnetic domains were formed with a size of 0.4 micron.

Next, the magneto-optical recording medium, on which the minute magnetic domains had been recorded, was subjected to reproduction as follows by using the apparatus shown in Fig. 10. The power of the reproducing laser beam was set to be 2.0 mW. The reproducing clock was synchronized with the recorded magnetic domains one by one. The magnetic field was modulated into a pulsed form and applied so that it was synchronized with the reproducing clock. Fig. 12 shows a timing chart illustrating the reproducing external magnetic field and the reproduced signal with respect to the reproducing clock. The pulsed magnetic field had an intensity of 150 (Oe) ($H_E$) in the recording direction and an intensity of 250 (Oe) ($H_S$) in the erasing direction, in the vicinity of the center of the magnetic domain. The duty ratio of the magnetic field in the recording direction was 25 %. The sample-hold timing for the reproduction signal was coincident with the modulation timing for the magnetic field.

As clarified from the reproduction waveform (waveform reproduced with the pulsed magnetic field) shown in Fig. 12, independent reproduction signals were obtained from the respective minute magnetic domains. For the purpose of comparison, Fig. 12 also shows a reproduction signal (signal reproduced with DC magnetic field) obtained when the magnetic field was not modulated, i.e., when the signal was reproduced in the same manner as described above by applying a DC magnetic field of 200 (Oe) in the recording direction. In the case of the DC magnetic field, reproduction signal waveforms obtained from adjacent magnetic domains are joined with each other, and it was impossible to separately reproduce each of the minute magnetic domains. Fig. 12 shows, at its lowest part, a sample-hold pulse in synchronization with the clock, and a reproduction signal obtained with the pulsed magnetic field after sample-hold. It was revealed that the amplitude of the analog reproduction signal after the sample-hold was greatly increased as compared with that obtained without applying any reproducing magnetic field. Fig. 13 shows a relationship between the recording mark length and the error rate, obtained by 1-7 modulation recording, while comparing a result obtained when the pulsed magnetic field was used as the reproducing magnetic field with a result obtained when the DC magnetic field was used. According to the result shown in Fig. 13, it is understood that when reproduction is performed by using the pulsed magnetic field, the error rate is improved, and it is sufficiently possible to reproduce data even with a recording mark length of 0.25 μm. Therefore, it is possible to realize high density recording and reproduction therefrom by performing reproduction by applying the pulsed magnetic field to the magneto-optical recording medium according to the present invention.

In this embodiment, the duty ratio of the magnetic field is 25 % in the recording direction, concerning the reproducing magnetic field used for the reproducing operation. However, the duty ratio can be appropriately changed within a range of 15 % to 90 %, preferably within a range of 15 % to 60 %. Namely, it is desirable to adjust the duty ratio of the magnetic field in the recording direction for the reproducing magnetic field so that the magnetic domain is most appropriately magnified in the reproducing layer.

Fourth Embodiment

This embodiment illustrates a modified embodiment of the recording and reproducing apparatus described in the third embodiment. A recording and reproducing apparatus 103 shown in Fig. 14 includes the components of the apparatus shown in Fig. 10, and it further comprises a reproducing pulse width/phase-adjusting circuit (RP-PPA) 53 for pulse-modulating the reproducing light beam in synchronization with the PLL clock, and a recording/reproduction changeover switch (RC/RP SW) 55 for switching the recording pulse and the reproducing pulse during recording and reproduction. The other respective components are the same as those of the recording and reproducing apparatus 101 explained in the third embodiment. Accordingly, corresponding components are designated by the same reference numerals, explanation of which will be omitted.

The recording and reproducing characteristic of the magneto-optical recording medium prepared in the third embodiment was measured by using the recording and reproducing apparatus 103. The laser 22 of the recording and reproducing apparatus 103 had a wavelength of 685 nm, and the objective lens 24 had a numerical aperture NA of 0.55. Data was recorded by using the magneto-optical field modulation system to perform recording at a linear velocity of 5.0 m/sec by modulating the external magnetic field at ±300 (Oe) while radiating the laser beam in a pulsed manner at a constant period, in which the laser beam pulse had a duty ratio of 50 %. The timing of the recording laser beam pulse and of the recording external magnetic field with respect to the recording clock was the same as that illustrated in the timing chart shown in Fig. 11. The minute magnetic domains were formed with a size of 0.4 micron.

The magneto-optical recording medium, on which the minute magnetic domains had been recorded as described above, was subjected to reproduction as follows by using the apparatus shown in Fig. 14. The intensity of the reproducing laser beam was modulated at a constant period in synchronization with the recording clock. The reproducing laser beam had a peak power ($P_R$) of 4.5 mW and a bottom power ($P_B$) of 0.5 mW. The peak duty ratio was set to be 33 %. The reproducing magnetic field was modulated in synchronization with the reproducing clock with respect to the recorded magnetic domains one by one, in the same manner as described in the third embodiment. The pulsed magnetic field had an intensity of 150 (Oe) ($H_E$) in the recording direction and an intensity of 250 (Oe) ($H_S$) in the erasing direction, in the vicinity of the center of the magnetic domain. The duty ratio in the recording direction was 25 %. The sample-hold timing for the reproduction signal was coincident with the modulation timing for the magnetic field. Fig. 15 shows a timing chart illustrating the reproducing external magnetic field and the reproduced signal with respect to the reproducing clock. As shown in Fig. 15, reproduction was performed while allowing the dropping or fall of the reproducing laser beam pulse to coincide with the dropping or fall of the reproducing magnetic field pulse.

As clarified from the reproduction waveform (waveform reproduced with the pulsed light beam and the pulsed magnetic field) shown in Fig. 15, independent reproduction signals were obtained from the respective minute magnetic domains. For the purpose of comparison, Fig. 15 also shows a reproduction signal (signal reproduced with DC light beam and DC magnetic field) obtained when the signal was reproduced in the same manner as described above by applying a DC light beam having a laser power of 1.5 mW and a DC magnetic field of 200 (Oe) in the recording direction. In the case of the DC light beam and the DC magnetic field, reproduction signal waveforms obtained from adjacent magnetic domains are joined with each other, and it was impossible to separately reproduce each of the minute magnetic domains. Fig. 15 shows, at its lowest part, a sample-hold pulse in synchronization with the clock, and a reproduction signal obtained with the pulsed magnetic field after sample-hold. In this embodiment, the magnetization at the portion of the magnetic domain-magnifying and reproducing layer in which no magnetic domain to be transferred exists can be effectively prevented from inversion by modulating the reproducing light beam. Fig. 16 shows a relationship between the recording mark length and the error rate, obtained when 1-7 modulation recording was performed, while comparing a result obtained when the pulsed laser beam was used as the reproducing light beam with a result obtained when the continuous light beam (DC light beam) was used. According to the result shown in Fig. 16, it is understood that when reproduction is performed by using the pulsed light beam, the error rate is improved.

It is noted that the timing and the duty ratio of the reproducing light beam pulse, the timing and the duty ratio of the reproducing magnetic field pulse, and the polarity of the reproducing magnetic field pulse may be changed depending on the structure and the composition of the medium. For example, as explained in embodiments described later on, when the reproducing alternating magnetic field is used, the duty ratio of the magnetic field in the recording direction may be controlled to be within a range of 15 % to 90 %.

Fifth Embodiment

In the third embodiment, the clock signal is outputted from the PLL circuit 39 to the phase-adjusting circuit 31 and the reproducing pulse width/phase-adjusting circuit 131 for driving the magnetic coil, as well as to the recording pulse width/phase-adjusting circuit 51 for driving the laser. The clock signal in the third embodiment is generated by the embedded clock extraction circuit 37 by detecting the reflected light beam from the pits formed on the substrate of the magneto-optical recording medium 10 (100). In the fourth embodiment, the clock signal is outputted from the PLL circuit 39 to the phase-adjusting circuit 31 and the reproducing pulse width/phase-adjusting circuit 131 for driving the magnetic coil, as well as to the recording pulse width/phase-adjusting circuit 51 and the reproducing pulse width/phase-adjusting circuit 53 for driving the laser. The clock signal in the fourth embodiment is generated by the embedded clock extraction circuit 37 (external clock) by detecting the reflected light beam from the pits formed on the substrate of the magneto-optical recording medium. This embodiment illustrates various methods for generating the clock, which are especially effective to pulse-modulate the reproducing external magnetic field and the reproducing light beam in the reproducing apparatus (the recording and reproducing apparatus) according to the present invention.

The method for generating the reproducing clock includes the following three methods. The first method is based on self PLL synchronization, the second method is based on external PLL synchronization, and the third method is based on two-period sampling. As for the construction of the apparatus, in order to realize the first and third methods, it is preferable to use a signal-processing system in which the embedded clock extraction circuit 37 is omitted in the apparatuses shown in Figs. 10 and 14. On the other hand, in order to realize the second method, the signal-processing system of the apparatuses shown in Figs. 10 and 14 may be used as it is.

Fig. 23 explains the concept of the self PLL synchronization as the first method. In Fig. 23, recorded magnetic domains (magnetic marks) 81, 83 are detected, followed by being processed by the adder 301 and PLL 29 shown in Fig. 10 (or Fig. 14). Thus, a clock 85 is generated.

The external PLL synchronization method as the second method will be explained with reference to Figs. 24 to 26. Fig. 24 shows a partial enlarged view of a magneto-optical recording medium 10 obtained when the magneto-optical recording medium is designed to have a land-groove structure. Pits 10P are provided at a constant period at a land 10R (or at a groove) of the magneto-optical recording medium 10. The pits 10P are optically detected to generate a clock in conformity with the detected period. In this embodiment, those provided at the land 10R at a constant period are not limited to the pits 10P, which may be those optically detected such as projections and any change in material quality such as crystal states. Fig. 25 shows a partial enlarged view of a magneto-optical recording medium 10' obtained when the magneto-optical recording medium is designed to have a wobble-type land-groove structure. In the case of the wobble-type land-groove structure, a period of the wobble is detected, and thus a reproducing clock signal can be generated on the basis of the detected period.

Fig. 26 shows a partial enlarged view of a magneto-optical recording medium 10" provided with fine clock marks 10F in place of the pits, in which the magneto-optical recording medium is designed to have a land-groove type structure. The fine clock marks 10F can be provided at a spacing distance which is approximately the same as the spacing distance with which the pits 10P shown in Fig. 24 are formed. When one fine clock mark 10F is regarded as a single waveform, the wavelength (length in the track direction) may be adjusted to be 1/300 to 1/50 of the spacing distance between the fine clock marks 10F, and the amplitude (amount of variation in the widthwise direction of the track) may be adjusted to be 100 to 300 nm. Fig. 26 shows the structure in which the fine clock marks 10F are formed on the wall on only one side of the land 10R. However, the fine clock marks 10F may be formed on walls on both sides of the land 10R. The fine clock marks 10F may be detected by using a photodetector whose detection area is divided into four, in which when a sum signal from each divided detection area is observed, a waveform is obtained, resembling the shape of the fine clock mark 10F shown in Fig. 26. The reproduction waveform thus obtained may be compared with a predetermined reference value to obtain a binary signal. A clock signal for external synchronization can be generated by making synchronization with the rise timing of the binary signal. The magneto-optical recording medium having the wobble-type land-groove structure as shown in Fig. 25 may be provided with the fine clock marks 10F as shown in Fig. 26. A clock signal for modulating the reproducing external magnetic field and/or the reproducing light beam may be extracted from the fine clock marks 10F, and a data channel clock for recording may be detected from the wobbling period.

Fig. 27 explains the concept of the two-period sampling which is the third method. In Fig. 27, a recorded unit recording magnetic domain (a shortest recording domain or a unit bit) 87 is subjected to reproduction, followed by being processed by the adder 301 and PLL 39 shown in Fig. 10 (or Fig. 14) to generate a clock 85. During this process, the PLL circuit 39 is designed to produce the clock 85 of one period or more for the unit recording magnetic domain 87. It is possible to generate the clock having a frequency higher than that obtained from a repeating period of the unit recording magnetic domain 87.

In the present invention, when the reproducing light beam and/or the reproducing external applying magnetic field is pulse-modulated, it is allowable to generate a first synchronization signal and/or a second synchronization signal on the basis of a reproducing clock generated by using any one of the foregoing three methods. When the recording external applying magnetic field and/or the recording light beam is pulse-modulated, it is also allowable to use a reproducing clock generated by using any one of the foregoing three methods.

Sixth Embodiment

As explained in the embodiments described above, when the magneto-optical recording medium 10 (100, 101) is subjected to reproduction, the external magnetic field is applied, and the reproducing laser beam is radiated by using the apparatus shown in Fig. 10 or 14. This embodiment illustrates investigations on the condition for applying the magnetic field most preferable for reproduction based on magnification of the magnetic domain.

In the reproducing method for the magneto-optical recording medium according to the present invention, any one of the "continuous (DC)" and the "pulsed" can be selected for the magnetic field and the laser beam respectively. Therefore, the following four combinations are considered.

(1) laser beam: continuous light beam, magnetic field: continuous magnetic field;
(2) laser beam: continuous light beam, magnetic field: pulsed magnetic field;
(3) laser beam: pulsed light beam, magnetic field: continuous magnetic field; and
(4) laser beam: pulsed light beam, magnetic field: pulsed magnetic field.

Of the foregoing four combinations, it is necessary for the combinations (2) to (4) to adjust the magnitude of the pulsed laser beam or the pulsed magnetic field or of the both and the timing to be applied. In the case of the combination (2), reference is made to Fig. 28A, in which the external magnetic field Hep applied during the process to magnify the magnetic domain has a magnitude which is different from that of the external magnetic field Hsr applied during the process to erase the magnetic domain. It is assumed that the magnetic domain-magnifying and reproducing layer has a coercivity of Hc1, and the leak magnetic field exerted on the reproducing layer by the recording magnetic domain in the recording layer is Hst. A magnetic field

H = Hc1 + Hst is required to erase the transferred magnetic domain. On the other hand, it is sufficient to use the magnetic field Hc1 in order to magnify the transferred magnetic domain. On the other hand, it is desirable that no influence of magnification and reproduction remains when adjacent magnetic domains are subjected to reproduction. For this reason, the time T1 (the duty of the magnetic field in the recording direction) required to magnify the magnetic domain is shorter than the time T2 required to erase the magnetic domain, which is preferably within a range of $0.15 \leq T1/(T1 + T2) \leq 0.9$. This range is also preferred from a viewpoint to avoid overshoot in the waveform of the reproducing magnetic field as described later on. More preferably, $0.15 \leq T1/(T1 + T2) \leq 0.6$ is satisfied. An optimum value is selected for the time T1 on the basis of various factors such as magnetization characteristics of the magnetic layers for constructing the magneto-optical recording medium.

In the case of the combination (3), it takes a long time to adjust the condition under which the magnetic domain is magnified by transferring the magnetic domain in the recording layer to the reproducing layer to give a wide temperature distribution. Accordingly, the duty of the pulse of the laser beam is preferably within a range of 20 to 70 %. In the case of the combination (4), reference is made to Fig. 28B which shows a relationship between the applied magnetic fields (Hex, Hsr) and the period of the laser pulse. As shown in Fig. 28B, the laser beam (the laser power is represented by Pr in Fig. 28B) is preferably radiated such that the laser beam is turned ON/OFF once during the time T1 to magnify the magnetic domain and during the time T2 to erase the magnetic domain respectively. In the present invention, it is possible to use any one of the methods based on the combinations (1) to (4) described above. However, in order to most reliably magnify the magnetic domain, it is necessary not to cause any change of magnetic domain magnification at the portion of the reproducing layer located just over the portion of the recording layer in which no recording magnetic domain is recorded. For this purpose, it is necessary to locally lower the film temperature of the reproducing layer at such a position. Considering such a demand, it is preferable to use pulsed beam irradiation. Further, it is preferable to perform reproduction with the pulsed magnetic field which enables reliable magnification and reduction of the magnetic domain. According to the foregoing facts, it is most appropriate to perform reproduction under the condition of (4).

In Figs. 28A and 28B, the magnetic field having the rectangular or square waveform is used as the alternating magnetic field to be applied. However, any magnetic field having any arbitrary waveform may be used provided that the waveform does not substantially cause overshoot, because of the following reason. Namely, if there is overshoot in the waveform of the magnetic field, i.e., if there is a steep rise in the waveform of the magnetic field, and the maximum (peak) magnetic field intensity of the rise has a value exceeding, for example, Hn in the hysteresis curve shown in Fig. 5A, then the magnetic domain in the reproducing layer, which is located over a portion of the information-recording layer, is inverted, and it is read as a signal, even when the portion of the information-recording layer contains no recording magnetic domain. In order to avoid the overshoot, it is possible to use a waveform of a triangular wave as shown in Fig. 29. The use of a magnetic field having such a waveform makes it possible to mitigate the change in magnetic field during magnification and facilitate magnification of the magnetic domain. The waveform is not limited to the triangular wave. It is possible to use arbitrary waveforms provided that the magnetic field is gradually increased by using the waveform such as a sine wave or sinusoidal waveform. Rectangular or square waves may be used on condition that the overshoot does not occur. Fig. 30 shows an example of a circuit for generating a sinusoidal or sine wave appropriate to be used as the waveform of the reproducing magnetic field. A reproducing magnetic field having a sine-wave or sinusoidal waveform can be generated by incorporating the circuit as shown in Fig. 30 into the magnetic coil-driving circuit 34 of the recording and reproducing apparatus 101 (103) shown in Fig. 10 (Fig. 14).

Figs. 31A to 31D shows the dependency, on the applied magnetic field, of the reproduction signal (amplitude) obtained when the foregoing condition (2) was used, namely when reproduction was performed with the continuous laser light beam and with the pulsed magnetic field. The magneto-optical recording medium shown in Fig. 7B was used. The laser beam had a wavelength of 830 nm and a power of 1.65 mW. The linear velocity was 1.7 m/sec. Recording was performed for domains of 0.4 $\mu$m at equal intervals. The external magnetic field was H = 0 in Fig. 31A, H = 130 (Oe) in Fig. 31B, H = 215 (Oe) in Fig. 31C, and H = 260 (Oe) in Fig. 31D. The duty of the magnetic field pulse was T1/T2 = 1. As for the waveform of the magnetic field, an alternating magnetic field having a waveform similar to the sinusoidal or sine wave was used. The detected signal intensity was increased as the external applying magnetic field was increased. The intensity arrived at a saturation level at H = 260 (Oe). The increase in the reproduction signal caused by applying the external magnetic field indicates that the magnetic domain transferred from the recording layer to the reproducing layer is magnified.

Seventh Embodiment

Fig. 32 shows a modified embodiment of the recording and reproducing apparatus 101 shown in Fig. 10. In the recording and reproducing apparatus 101 shown in Fig. 10, the external magnetic field is applied from the position over the magneto-optical recording medium 100, and the recording light beam and the reproducing light beam are radiated from the position under the magneto-optical recording medium 100, i.e., from the side of the substrate. In a recording and reproducing apparatus 105 for the magneto-optical recording medium shown in Fig. 32, it is possible to apply the external magnetic field and the recording and reproducing light beams from an identical direction. In order to realize such an arrangement, the recording and reproducing apparatus 105 comprises a magnetic coil wound around an objective lens 24 for collecting the reproducing light beam.

Fig. 33 shows a medium structure of a magneto-optical recording medium 79 preferably used for the recording and reproducing apparatus 105. The magneto-optical recording medium 79 has a medium structure different from the structure shown in Fig. 7B. Namely, the magneto-optical recording medium 79 has a structure comprising an information-recording layer 75, a non-magnetic layer 4, a magnifying and reproducing layer 3, a dielectric layer 2, and a protective layer 76, the layers being stacked on a substrate 1. When the magneto-optical recording medium 79 is subjected to recording and reproduction, the light beam is radiated and the magnetic field is applied not from the side of the substrate 1 but from the side of the protective layer 76 (from the side of the magnifying and reproducing layer 3). Accordingly, it is not necessary for the substrate 1 to use a transparent material. The substrate 1 may be composed of an opaque material including, for example, metal materials such as aluminum. Further, a magneto-optical recording medium capable of double-sided recording, i.e., recording on both sides may be designed by stacking, outside the substrate 1, one more stacking structure on the stacking structure shown in Fig. 33 so that the two structures are symmetrical in relation to the substrate. The magneto-optical recording medium capable of double-sided recording has a twofold recording density as compared with the conventional magneto-optical recording medium. Especially, when the magneto-optical recording medium capable of double-sided recording is subjected to recording and reproduction by using the recording and reproducing apparatus having the structure shown in Fig. 32, the magneto-optical recording medium may be turned upside down every time when recording or reproduction is completed for one side. Therefore, the recording and reproducing apparatus 105 makes it possible to increase the recording capacity of the magneto-optical recording medium. It is noted that the design of the magneto-optical head for applying the magnetic field and the light beam from an identical direction is applicable to the recording and reproducing apparatus shown in Fig. 14.

Eighth Embodiment

In the embodiments described above, the recording signal is recorded on the magneto-optical recording medium by using the magneto-optical field modulation system or the optical magnetic field modulation system. However, it is possible to perform recording by using the magnetic field modulation system. When recording is performed in accordance with any one of the systems, it is preferable that the recording magnetic domain has a shape of the shortest magnetic domain (the magnetic domain or magnetic mark having the shortest length in the linear direction) so that the length of the magnetic domain in the widthwise direction of the track is longer than the length in the linear direction. More preferably, a configuration is desirable, in which the rear part of the magnetic domain is concave toward the inside of the magnetic domain. The shortest magnetic domain as described above is preferably exemplified by crescent-shaped magnetic domains as shown in Fig. 34A and rectangular magnetic domains as shown in Fig. 34B. Besides, arrow-shaped or arrow wing-shaped magnetic domains (the arrow is directed in a direction opposite to the disk rotation direction) are also preferred as the shape of the shortest magnetic domain. When recording is performed with the magnetic domain formed such that the length of the magnetic domain in the widthwise direction of the track is longer than the length in the linear direction (the track direction), it is effective to use the magnetic domain modulation system. The configuration of, for example, the arrow wing-shaped magnetic domain can be adjusted by changing the configuration of the groove and the land of the substrate.

The shape of the magnetic domain as described above facilitates magnification of the magnetic domain transferred from the reproducing layer because of the following reason. For example, it is assumed that the crescent-shaped magnetic domains shown in Fig. 34A are subjected to recording in the recording layer of the magneto-optical recording medium of the present invention. When the magneto-optical recording medium is subjected to reproduction, the magneto-optical recording medium is heated by the reproducing light beam, and the crescent-shaped magnetic domains are transferred to the reproducing layer by the aid of magnetostatic coupling or exchange coupling. In the reproducing layer, the portion corresponding to the center of the reproducing light beam spot (or its backward portion) has a high temperature. Thermodynamically, the magnetic wall is stable at a high temperature. Therefore, a stable state is given when the concave portion of the crescent-shaped magnetic domain is moved toward its backward high temperature portion (the central portion of the circle having the common circular arc with the crescent). The magnetic wall is stable when its length is short. Therefore, a stable state is given when a half moon-shaped or semicircular magnetic domain is provided as if the concave portion of the crescent-shaped magnetic domain is expanded, because the magnetic wall is short. Therefore, the magnetic domain is easily magnified on the reproducing layer, in accordance with the temperature distribution and the configuration of the magnetic domain as described above. Further, the crescent-shaped magnetic domain or similar is preferred because of the following reason. Considering the leak magnetic field or the magnetic field leakage directed from the recording magnetic domain toward the reproducing layer, the leak magnetic field is maximized at the portion corresponding to the center of the crescent (the central portion of the circle having the common circular arc with the crescent), in the reproducing layer located over the crescent-shaped magnetic domain. Therefore, the magnetic domain transferred to the reproducing layer can easily be magnified by the aid of the leak magnetic field.

Ninth Embodiment

This embodiment illustrates a magneto-optical recording medium according to the fourth aspect of the present invention. In the first embodiments (A, B) and the second embodiment, the magneto-optical recording medium has been illustrated, in which the magnetic domain transferred from the recording layer to the reproducing layer is magnified and reproduced by applying the external magnetic field. However, this embodiment illustrates an example of the magneto-optical recording medium in which the magnetic domain transferred from the recording layer to the reproducing layer can be magnified and reproduced without applying any external magnetic field.

Fig. 35 shows a stacked structure of the magneto-optical recording medium according to this embodiment. The magneto-optical recording medium 110 has a structure comprising a dielectric layer 65 composed of SiN, a reproducing layer 64 composed of GdCo, a non-magnetic layer 63 composed of SiN, a recording layer 75 composed of TbFeCo, and a protective layer 76 composed of SiN, the layers being successively stacked on a light-transmissive substrate 1 composed of, for example, glass or polycarbonate. A magnetic film used for the reproducing layer 64 is made of a material in which the minimum stable magnetic domain radius defined in the foregoing expression (1) is larger than the magnetic domain subjected to recording in the recording layer 75. Therefore, when the magnetization in the recording layer 75 is transferred to the reproducing layer 64 via the non-magnetic layer 64, the magnetic domain in the recording layer 75 can be reproduced as a large magnetic domain even when the magnetic domain is not magnified by applying any external magnetic field. Alternatively, the magneto-optical recording medium according to this embodiment may have a structure in which an intermediate magnetic layer composed of GdFeCo is inserted between the non-magnetic layer 63 and the reproducing layer 64. The respective layers are formed by means of the magnetron sputtering method by using Ar as a sputtering gas.

With reference to Fig. 36, explanation will be made for the principle of reproduction based on the use of the magneto-optical recording medium 110. In Fig. 36, the magneto-optical recording medium 110 comprises the recording layer 75 in which a signal is recorded, the non-magnetic layer 63, and the reproducing layer 64 which behaves as an in-plane magnetizable film at room temperature and which behaves as a perpendicularly magnetizable film at a temperature not less than a predetermined temperature (critical temperature). When the magneto-optical recording medium 110 is irradiated with the laser beam, magnetization of a magnetic domain 15 subjected to recording in an area at a temperature raised to be not less than the predetermined temperature is transferred to a magnetic domain 160 in the reproducing layer 64 via the non-magnetic layer 63. In this case, transfer from the magnetic domain 150 to the magnetic domain 160 is performed in accordance with magnetostatic coupling. As a result, the entire magnetic domain 160 in the reproducing layer 64 is magnetized in the downward direction. Therefore, the magnetic domain is transferred from the recording layer 75 to the reproducing layer 64, and the magnetic domain in the recording layer can be transferred to the reproducing layer in the form of magnified magnetic domain, without involving the process to magnify the magnetic domain by applying any external magnetic field. After the magnetic domain 150 is reproduced, the radiating position of the laser beam is moved to a position of a magnetic domain 170 to be subsequently reproduced. At this time, the effective perpendicular magnetic anisotropy of the magnetic domain 160 is decreased, and the magnetization of the magnetic domain 160 is directed in the in-plane direction. When the magnetic domain 170 to be subsequently reproduced and an area in the magnetic domain 160 located over the magnetic domain 170 arrive at a temperature not less than the predetermined temperature, the effective perpendicular magnetic anisotropy of the magnetic domain 160 is increased. Thus, magnetization directed upward is transferred, and a signal of the magnetic domain 170 is reproduced. After the reproduction, the temperature is lowered, and magnetization of the magnetic domain 160 is directed in the in-plane direction. This process is repeated, and thus the respective magnetic domains subjected to recording in the recording layer 75 are reproduced.

A magnetic film used for the reproducing layer 64 may be composed of a material which behaves as an in-plane magnetizable film at room temperature, and which behaves as a perpendicularly magnetizable film at a temperature not less than a predetermined temperature, wherein the minimum stable magnetic domain radius is larger than the magnetic domain subjected to recording in the recording layer 75. It is appropriate to use a magnetic film composed of Gd and an element selected from Fe, Co, and Ni. The recording layer 75 may be a single-layered magnetic film or a multi-layered magnetic film composed of TbFeCo, an element selected from Tb, Dy, and Nd, and an element selected from Fe, Co, and Ni. The recording layer 75 may be a single-layered magnetic film or a multi-layered magnetic film composed of an element of Pt or Pd and an element selected from Fe, Co, and Ni.

The predetermined temperature, at which the reproducing layer 64 changes from the in-plane magnetizable film to the perpendicularly magnetizable film, is within a range of 140 to 180 °C. Preferably, the temperature coefficient C, which represents steepness or quickness of the change from the in-plane magnetizable film to the perpendicularly magnetizable film, is not less than 8.0 in the same manner as described in the first embodiment (B).

The magneto-optical recording medium 110 is not limited to the structure shown in Fig. 36, which may have a structure inserted with a magnetic film which behaves as an in-plane magnetizable film at room temperature, and which behaves as a perpendicularly magnetizable film at a temperature not less than a predetermined temperature, in place of the non-magnetic layer 63. Fig. 37 conceptually shows a structure which uses, in place of the non-magnetic layer 63 of the magneto-optical recording medium shown in Fig. 36, an intermediate magnetic film 99 which behaves as an in-plane magnetizable film at room temperature, and which changes from the in-plane magnetizable film to a perpendicularly magnetizable film at a critical temperature $T_{CR1}$. The reproducing layer is indicated as 64C. The intermediate magnetic layer 99 has a minimum stable magnetic domain radius which is in the same degree as that of the recording layer 75. GdFeCo, GdFe, and GdCo are appropriate for the intermediate magnetic film 99. The reproducing layer 64 also changes from an in-plane magnetizable film to a perpendicularly magnetizable film at a temperature not less than a critical temperature $T_{CR2}$. However, its temperature region is within a range of 100 to 170 °C. In the magneto-optical recording medium having this structure, the steep or quick change of the intermediate magnetic layer 65 from the in-plane magnetizable film to the perpendicularly magnetizable film determines the reproducing characteristic. Therefore, the magnetic film used for the intermediate magnetic layer 65 preferably has a temperature coefficient C of not less than 8.0. It is desirable that the intermediate layer 65 has a thickness which is not less than a thickness of the magnetic wall formed between a magnetic domain 124 in the intermediate magnetic layer 65 and magnetic domains of in-plane magnetization adjacent thereto, in order to enable magnetization of the intermediate layer 65 to make rotation.

When the magneto-optical recording medium 125 shown in Fig. 37 is irradiated with a laser beam, and the temperature of an area corresponding to the magnetic domain 123 in the recording layer 75 is raised, then the magnetization of the magnetic domain 123 is transferred to the magnetic domain 124 in the intermediate magnetic layer 65 by the aid of exchange coupling force, which is further transferred to the magnetic domain 125 in the reproducing layer 64C. Accordingly, the minute magnetic domain 123 in the recording layer 75 is reproduced as the large magnetic domain 125 in the reproducing layer 64C. The use of the intermediate magnetic layer 99 makes it unnecessary to apply any external magnetic field, when either an in-plane magnetizable film or a perpendicularly magnetizable film is used for the reproducing layer.

In order to perform reproduction on the magneto-optical recording medium shown in this embodiment, it is sufficient to radiate only the laser beam. Methods for radiating the laser beam include a method for radiating a continuous light beam and a method for radiating a pulsed light beam. In the case of the pulsed light beam, the duty is within a range of 20 to 70 %.

In Fig. 37, it is preferable that the recording magnetic domain 123 in the recording layer 75 is transferred to the intermediate magnetic layer 99 while being reduced as shown in a lower part of Fig. 38. The reason thereof will be explained with reference to Fig. 38. Fig. 38 shows, in its upper part, a temperature distribution obtained when the magneto-optical recording medium having the structure shown in Fig. 37 is heated by a reproducing laser spot (LS). Fig. 38 also shows, in its middle part, a temperature distribution in relation to the laser spot (LS) on the magneto-optical recording medium as viewed from a position over the reproducing layer 64C. If the size or magnitude of the magnetic domain 124 (magnetization in the direction ↑) transferred to the intermediate magnetic layer 99 is equivalent to or larger than the size or magnitude of the recording magnetic domain 123, then the magnetic domain 124 in the intermediate magnetic layer 99 is magnetically affected by magnetic domains S having magnetization in the direction ↓ adjacent to the recording magnetic domain 123, and the magnetic domain 124 becomes unstable. It is necessary for the magnetic domain 124 transferred to the intermediate magnetic domain 99 to play a role to transmit magnetization information of the recording magnetic domain 124 to the reproducing layer 64C having the function to magnify the magnetic domain. Therefore, the magnetic domain 124 is required to be magnetically stable. Accordingly, the influence exerted by the magnetic domains S adjacent to the recording magnetic domain 123 on the magnetic domain 124 in the intermediate magnetic layer 99 can be decreased by reducing and transferring the magnetic domain from the recording magnetic domain 123 to the intermediate magnetic layer 99. Thus, it is possible to stabilize the magnetization of the magnetic domain 124 in the intermediate magnetic layer 99. Especially, since the magneto-optical recording medium is usually subjected to reproduction in a state of rotation, the magnetic domains in the recording layer 75 of the magneto-optical recording medium are moved one after another with respect to the reproducing light beam spot as shown in Figs. 39A and 39B. On the other hand, the temperature area at a temperature exceeding $T_{CR1}$ in the intermediate layer 99 exists at a constant position relative to the reproducing light beam spot. When the temperature area at the temperature exceeding $T_{CR1}$ in the intermediate layer 99 has the same size as that of the recording magnetic domain 123, only one recording magnetic domain in movement exists only instantaneously in the temperature area. During the other period of time, a part of one recording magnetic domain and a part of another magnetic domain adjacent thereto exist in the temperature area. Therefore, it is extremely difficult to read only magnetization information of a single recording magnetic domain from the temperature area at the temperature exceeding $T_{CR1}$ in the intermediate layer 99. However, when the temperature area at the temperature exceeding $T_{CR1}$ in the intermediate layer 99 has a size smaller than the size of the recording magnetic domain 123, the period of time during which the temperature area exists over only one single recording magnetic domain is relatively long. Accordingly, it is possible to reliably transfer magnetization information from the only one single recording magnetic domain to the intermediate magnetic layer 99. The foregoing reason is appropriate when the intermediate layer behaves as a perpendicularly magnetizable film at a temperature not lower than room temperature. Namely, when a magnetic material, which exhibits perpendicular magnetization at a temperature not lower than room temperature, is used for the intermediate magnetic layer, it is also effective to perform transfer so that the magnetic domain transferred from the recording layer to the intermediate magnetic layer is reduced.

In order to make the size of the magnetic domain in the intermediate layer 99 smaller than the size of the recording magnetic domain 123, the laser power and $T_{CR1}$ of the intermediate layer 99 may be adjusted so that the temperature area at a temperature exceeding $T_{CR1}$ of the intermediate layer 99 is smaller than the size (width) of the recording magnetic domain 123 in the recording layer 75 as shown in Fig. 38. The fact that the size of the magnetic domain 124 transferred to the intermediate magnetic layer 99 is smaller than the recording magnetic domain 123 in the recording layer 75 can be verified, for example, in accordance with the following method. The substrate 1 is removed from the magneto-optical recording medium on which information has been recorded. The dielectric film 65 and the reproducing layer 64 are eliminated, for example, by means of sputtering etching. After that, the surface of the intermediate magnetic layer 99 is heated to the reproducing temperature, and it may be observed by using a light-optic microscope or the like.

In the case of the illustrative arrangement shown in Fig. 38, the recording magnetic domain 123 in the recording layer 75 is reduced and transferred as the magnetic domain 124 to the intermediate magnetic layer 99 during reproduction. The magnetic domain 124 is magnified and transferred as the magnetic domain 125 to the reproducing layer 64C.

It is unnecessary to apply any magnetic field to the magneto-optical recording medium described in this embodiment during reproduction of information. Therefore, reproduction may be executed without applying any reproducing magnetic field by using the reproducing method and the recording and reproducing apparatus explained in the third or fourth embodiment. Namely, an apparatus for performing reproduction on the magneto-optical recording medium explained in this embodiment may be constructed by omitting the magnetic field-applying unit and a part of the signal-processing system relating thereto (the apparatus according to the ninth aspect of the present invention), from the apparatus shown in Fig. 10 or 14. Alternatively, it is also available that the magnetic field-applying unit of the apparatus shown in Fig. 10 or 14 is not operated during reproduction on the magneto-optical recording medium explained in this embodiment. When the light beam is pulse-modulated, it is possible to apply the clock-generating method explained in the fifth embodiment. The method for recording with the shortest magnetic domain configuration explained in the eighth embodiment is also effective in the magneto-optical recording medium of this embodiment (the magneto-optical recording medium according to the fourth aspect of the present invention).

Tenth Embodiment

The magneto-optical recording medium of the present invention can be applied as a magneto-optical recording medium of the land-groove type. Especially, the present invention is effectively used for constructing a magneto-optical recording medium of the land-groove type in which the land width is narrower than the groove width, and information is recorded on the land. Namely, even when minute recording magnetic domains are formed at the narrow land, then the recording magnetic domains are magnified, and information is read via the reproducing layer. Accordingly, a reproduction signal with excellent C/N is obtained even from the minute magnetic domains recorded at the narrow land. The present invention makes it possible to design and use the medium having the novel structure as described above.

The present invention has been specifically explained with reference to the embodiments. However, the present invention is not limited thereto, which may include modifications and improvements thereof. For example, as for the materials for constructing the magneto-optical recording medium, various materials can be used provided that they realize the present invention. An arbitrary intermediate layer is allowed to intervene at arbitrary positions such as over or under the magnetic domain-magnifying and reproducing layer and over and under the information-recording layer or the gate layer.

Alternatively, it is also possible to process the surface of the layer. For example, in the case of production of the magneto-optical recording media shown in the first embodiment (B) and in the ninth embodiment, the reproducing layer is formed after forming the dielectric layer composed of SiN on the substrate. However, the surface of the dielectric layer may be made flat by means of etching before forming the reproducing layer, and then the reproducing layer may be formed. As for the etching condition, the power may be adjusted within a range of 0.05 to 0.20 W/cm$^2$, and the sputtering time may be adjusted within a range of 15 to 30 minutes in the magnetron sputtering method based on the use of Ar gas. By doing so, it is possible to form a magnetic film having large anisotropy, and it is possible to further improve the reproducing characteristic of the magneto-optical recording medium.

In the magneto-optical recording medium according to any one of the first to fourth aspects, the reproducing layer of the magneto-optical recording medium may be either a magnetic layer having perpendicular magnetization or a magnetic layer in which a predetermined area undergoes transition from in-plane magnetization to perpendicular magnetization upon being irradiated with the reproducing light beam. In the third and fourth embodiments, information is recorded in accordance with the optical magnetic field recording system. However, the present invention is not limited thereto. It is also possible to use the optical modulation system and the magnetic field modulation system.

INDUSTRIAL APPLICABILITY

In the magneto-optical recording medium of the present invention, the thickness of the information-recording layer is adjusted with respect to the size of the magnetic domain. Accordingly, it is possible to reliably perform magnification and reproduction of the magnetic domain by the aid of the reproducing magnetic field, and it is possible to easily control the reproducing magnetic field. In the magneto-optical recording medium of the present invention, it is possible to select one magnetic domain of a plurality of magnetic domains in the information-recording layer irradiated with the reproducing light beam spot, i.e., only one single minute magnetic domain having a length not more than 1/2 of the spot size of the reproducing light beam spot, by the aid of the gate layer or the intermediate layer, and it is possible to magnify and reproduce the selected magnetic domain. Accordingly, it is possible to perform recording with minute magnetic domains and achieve high sensitive reproduction therefrom. Therefore, the magneto-optical recording medium of the present invention is preferably used as a large capacity recording medium directed to the present and next generation multimedia systems, because the magneto-optical recording medium of the present invention makes it possible to record information at a high density and reproduce information subjected to high density recording.

According to the magneto-optical recording medium according to the third aspect of the present invention, magnetization is transferred from the recording layer to the reproducing layer in accordance with magnetostatic coupling. Therefore, the magnetic domain can be magnified in the reproducing layer without being limited by the size of the magnetic domain in the recording layer. In the magneto-optical recording medium according to the fourth aspect of the present invention, the magnetic film comprising magnetic domains larger than those in the recording layer is used for the reproducing layer. Accordingly, the magnetic domain in the recording layer can be magnified and reproduced without using any external magnetic field. When the magnetic film, which steeply or quickly changes from the in-plane magnetizable film to the perpendicularly magnetizable film at a predetermined temperature, and which involves magnetic domains larger than those in the recording layer, is used for the reproducing layer, then the magnetic domain can be reliably transferred to the reproducing layer, an amplified reproduction signal is obtained, and thus it is possible to improve the reproducing characteristic.

According to the magneto-optical recording and reproducing method of the present invention, a plurality of minute magnetic domains existing within the reproducing light beam spot can be independently reproduced at high S/N and at a low error rate by applying the reproducing magnetic field and/or the reproducing light beam modulated in synchronization with the reproducing clock, to the magneto-optical recording medium including the magnifying and reproducing layer and the information-recording layer. The magneto-optical recording and reproducing apparatus of the present invention is extremely effective for the magneto-optical recording and reproducing method of the present invention for applying the modulated reproducing magnetic field and/or the modulated reproducing light beam to the magneto-optical recording medium. The present invention has created, for the magneto-optical recording medium having the novel structure, the reproducing apparatus provided with the magneto-optical head capable of applying the reproducing light beam and the reproducing magnetic field in an identical direction, which makes it possible to increase the storage capacity of the magneto-optical recording medium several times.

As explained above, it is expected to construct an magneto-optical recording and reproducing system which enables the next generation super high density recording by using the magneto-optical recording medium and the reproducing apparatus according to the present invention.

**Claims**

1.  A magneto-optical recording medium comprising, on a substrate, an information-recording layer, and a magnetic domain-magnifying and reproducing layer capable of magnifying and reproducing a magnetic domain transferred from the information-recording layer, by applying an external magnetic field having a polarity identical with that of magnetization of the magnetic domain, characterized in that:

the information-recording layer has a thickness h which satisfies h/d > 0.5 for a length d of a minimum magnetic domain subjected to recording in the information-recording layer.

2. The magneto-optical recording medium according to claim 1, wherein:

the external magnetic field has its absolute value Hr which satisfies a relationship of He < Hr < Hn for an absolute value He of the magnetic field at an initial rising point of an initial magnetization curve of a hysteresis curve obtained when the external magnetic field is applied in a direction to magnify the magnetic domain transferred to the magnetic domain-magnifying and reproducing layer, and an absolute value Hn of the magnetic field at a rising point of a major loop of the hysteresis curve, Hn having the same polarity as that of the magnetic field of He; and
the magnetic domain transferred to the magnetic domain-magnifying and reproducing layer has a size which is magnified depending on a magnitude of the external magnetic field applied during reproduction.

3. The magneto-optical recording medium according to claim 2, wherein:

the external magnetic field has its absolute value Hr which satisfies Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and
the size of the magnified magnetic domain is reduced depending on the magnitude of the external magnetic field in the opposite direction applied during reproduction.

4. The magneto-optical recording medium according to claim 1, further comprising at least one non-magnetic layer for magnetostatically coupling the information-recording layer to the magnetic domain-magnifying and reproducing layer, provided between the information-recording layer and the magnetic domain-magnifying and reproducing layer.

5. The magneto-optical recording medium according to claim 4, comprising a dielectric layer, the magnetic domain-magnifying and reproducing layer, the non-magnetic layer, and the information-recording layer, the layers being successively stacked on the substrate.

6. The magneto-optical recording medium according to claim 4, comprising at least the information-recording layer, the non-magnetic layer, and the magnetic domain-magnifying and reproducing layer, the layers being successively stacked on the substrate, wherein a reproducing light beam and the external magnetic field are applied during reproduction from a side of the magnetic domain-magnifying and reproducing layer.

7. The magneto-optical recording medium according to claim 1, further comprising an intermediate magnetic layer for making magnetic coupling between the magnetic domain-magnifying and reproducing layer and the information-recording layer.

8. The magneto-optical recording medium according to claim 7, comprising a dielectric layer, the magnetic domain-magnifying and reproducing layer, the intermediate magnetic layer, and the information-recording layer, the layers being successively stacked on the substrate.

9. The magneto-optical recording medium according to claim 7, comprising at least the information-recording layer, the intermediate magnetic layer, and the magnetic domain-magnifying and reproducing layer, the layers being successively stacked on the substrate, wherein a reproducing light beam and the external magnetic field are applied during reproduction from a side of the magnetic domain-magnifying and reproducing layer.

10. The magneto-optical recording medium according to claim 9, wherein the intermediate magnetic layer is composed of a magnetic layer which behaves as an in-plane magnetizable film at room temperature, which makes transition from the in-plane magnetizable film to a perpendicularly magnetizable film in a temperature range of 80 to 200 °C, and which behaves as the perpendicularly magnetizable film at a temperature exceeding 200 °C.

11. The magneto-optical recording medium according to any one of claims 1 to 9, wherein a magnetic force resistance of a magnetic wall of the magnetic domain-magnifying and reproducing layer is smaller than the magnetic field applied during reproduction when the magnetic domain-magnifying and reproducing layer is irradiated with a reproducing light beam.

12. The magneto-optical recording medium according to any one of claims 1 to 9, wherein the magnetic domain-magnifying and reproducing layer is composed of a rare earth transition metal, and the rare earth transition metal has a compensation temperature within a range of -100 to 100 °C.

13. The magneto-optical recording medium according to any one of claims 1 to 9, wherein the information-recording layer is composed of a rare earth transition metal, and the rare earth transition metal has a compensation temperature within a range of -100 to 50 °C.

14. The magneto-optical recording medium according to any one of claims 1 to 9, wherein the magnetic domain-magnifying and reproducing layer is composed of a GdFeCo alloy, and the information-recording layer is composed of a TbFeCo alloy.

15. The magneto-optical recording medium according to any one of claims 1 to 9, wherein an alternating magnetic field is used as the external magnetic field while irradiating the magneto-optical recording medium with a reproducing light beam, a magnetic field having one polarity of the alternating magnetic field is used to magnify the magnetic domain transferred from the information-recording layer to the magnetic domain-magnifying and reproducing layer, and a magnetic field having the other polarity in an opposite direction is used to reduce the magnified magnetic domain to perform reproduction.

16. The magneto-optical recording medium according to any one of claims 7 to 10, wherein the intermediate magnetic layer has a thickness which is thicker than a thickness of a magnetic wall of the intermediate magnetic layer.

17. The magneto-optical recording medium according to any one of claims 7 to 10, wherein the intermediate magnetic layer has a thickness which exceeds 10 nm.

18. The magneto-optical recording medium according to any one of claims 7 to 10, wherein the magnetic domain is reduced and transferred from the information-recording layer to the intermediate magnetic layer.

19. The magneto-optical recording medium according to any one of claims 7 to 10, wherein a shortest recording magnetic domain subjected to recording in the information-recording layer has a length in a widthwise direction of a track, the length being longer than a length in a linear direction.

20. The magneto-optical recording medium according to claim 19, wherein the shortest recording magnetic domain has a shape selected from the group consisting of crescent-shaped, arrow wing-shaped, and rectangular configurations.

21. A magneto-optical recording medium comprising at least an information-recording layer, for reproducing information by irradiating the magneto-optical recording medium with a reproducing light beam, characterized in that:

the magneto-optical recording medium comprises a magnetic domain-magnifying and reproducing layer, a gate layer, and the information-recording layer in this order;
only one magnetic domain of a plurality of magnetic domains, subjected to recording in the information-recording layer and existing within a spot of the reproducing light beam, is transferred to the gate layer from the information-recording layer on the basis of a temperature distribution in the gate layer generated within the reproducing light beam spot when the magneto-optical recording medium is irradiatetwith the reproducing light beam spot; and
the magnetic domain-magnifying and reproducing layer enables the magnetic domain transferred from the gate layer to be magnified by applying an external magnetic field having a polarity identical with that of magnetization of the magnetic domain.

22. The magneto-optical recording medium according to claim 21, wherein:

the external magnetic field has its absolute value Hr which satisfies He < Hr < Hn for an absolute value He of the magnetic field at an initial rising point of an initial magnetization curve of a hysteresis curve obtained when the external magnetic field is applied in a direction to magnify the magnetic domain transferred to the magnetic domain-magnifying and reproducing layer, and an absolute value Hn of the magnetic field at a rising point of a major loop of the hysteresis curve, Hn having the same polarity as that of the magnetic field of He; and
the magnetic domain transferred to the magnetic domain-magnifying and reproducing layer has a size which is magnified depending on a magnitude of the external magnetic field applied during reproduction.

23. The magneto-optical recording medium according to claim 22, wherein:

the external magnetic field has its absolute value Hr which satisfies Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and

the size of the magnified magnetic domain is reduced depending on the magnitude of the external magnetic field applied during reproduction.

24. The magneto-optical recording medium according to claim 21, wherein a magnetic force resistance of a magnetic wall of the magnetic domain-magnifying and reproducing layer is smaller than the magnetic field applied during reproduction when the magnetic domain-magnifying and reproducing layer is irradiated with the reproducing light beam.

25. The magneto-optical recording medium according to claim 21, wherein the magnetic layers other than the magnetic domain-magnifying and reproducing layer have a total thickness h which satisfies h/d > 0.5 for a length d of a minimum magnetic domain in the information-recording layer.

26. The magneto-optical recording medium according to claim 21, comprising, on a substrate, the magnetic domain-magnifying and reproducing layer, the gate layer, and the information-recording layer in this order.

27. The magneto-optical recording medium according to claim 21, comprising, on a substrate, at least the information-recording layer, the gate layer, and the magnetic domain-magnifying and reproducing layer in this order, wherein the reproducing light beam and the external magnetic field are applied during reproduction from a side of the magnetic domain-magnifying and reproducing layer.

28. The magneto-optical recording medium according to claim 27, comprising, on each of both sides of the substrate, at least the information-recording layer, the gate layer, and the magnetic domain-magnifying and reproducing layer in this order, wherein the reproducing light beam and the external magnetic field are applied during reproduction from the side of the magnetic domain-magnifying and reproducing layer.

29. The magneto-optical recording medium according to any one of claims 21 to 27, further comprising at least one non-magnetic layer for magnetostatically coupling the magnetic domain-magnifying and reproducing layer to the gate layer.

30. The magneto-optical recording medium according to any one of claims 21 to 27, wherein the magnetic domain in the information-recording layer is transferred to the gate layer, in an area at a temperature higher than a predetermined temperature in the temperature distribution in the gate layer generated within the reproducing light beam spot, the magnetic domain transferred to the gate layer is transferred to the magnifying and reproducing magnetic layer, the magnetic domain transferred to the magnifying and reproducing magnetic layer is magnified by applying the external magnetic field having the polarity identical with the magnetization of the magnetic domain, and thus a reproduction signal is enhanced.

31. The magneto-optical recording medium according to any one of claims 21 to 27, wherein the magnetic domain in the information-recording layer is transferred to the gate layer, in an area at a temperature lower than a predetermined temperature in the temperature distribution in the gate layer generated within the reproducing light beam spot, the magnetic domain transferred to the gate layer is transferred to the magnifying and reproducing magnetic layer, the magnetic domain transferred to the magnifying and reproducing magnetic layer is magnified by applying the external magnetic field having the polarity identical with the magnetization of the magnetic domain, and thus a reproduction signal is enhanced.

32. The magneto-optical recording medium according to any one of claims 21 to 27, wherein the magnetic domain in the information-recording layer is transferred to the gate layer, in an area at a temperature within a predetermined temperature range in the temperature distribution in the gate layer generated within the reproducing light beam spot, the magnetic domain transferred to the gate layer is transferred to the magnifying and reproducing magnetic layer, the magnetic domain transferred to the magnifying and reproducing magnetic layer is magnified by applying the external magnetic field having the polarity identical with the magnetization of the magnetic domain, and thus a reproduction signal is enhanced.

33. The magneto-optical recording medium according to any one of claims 21 to 27, wherein at least one magnetic layer capable of controlling magnetic exchange coupling force of the gate layer and the information-recording layer is provided between the both magnetic layers.

**34.** The magneto-optical recording medium according to any one of claims 21 to 27, wherein the magnetic domain-magnifying and reproducing layer is composed of a rare earth transition metal, and the rare earth transition metal has a compensation temperature within a range of -100 to 100 °C.

**35.** The magneto-optical recording medium according to any one of claims 21 to 27, further comprising, between the magnetic domain-magnifying and reproducing layer and the gate layer, a magnetic layer which behaves as an in-plane magnetizable film at room temperature, which makes transition from the in-plane magnetizable film to a perpendicularly magnetizable film in a temperature range of 80 to 200 °C, and which behaves as the perpendicularly magnetizable film at a temperature exceeding 200 °C.

**36.** The magneto-optical recording medium according to any one of claims 21 to 27, wherein the magnetic domain-magnifying and reproducing layer is composed of GdFeCo, and the information-recording layer is composed of a TbFeCo layer.

**37.** The magneto-optical recording medium according to any one of claims 19 to 27, comprising the information-recording layer composed of TbFeCo, a first exchange coupling force control layer composed of GdFeCo, a second exchange coupling force control layer composed of TbFeCo, the gate layer composed of GdFeCo, and the magnetic domain-magnifying and reproducing layer composed of GdFeCo.

**38.** The magneto-optical recording medium according to any one of claims 21 to 27, further comprising a metal reflective layer between the non-magnetic layer and the magnetic domain-magnifying and reproducing layer.

**39.** The magneto-optical recording medium according to any one of claims 21 to 27, wherein an alternating magnetic field is used as the external magnetic field during reproduction while irradiating the magneto-optical recording medium with the reproducing light beam, a magnetic field having one polarity of the alternating magnetic field is used to magnify the magnetic domain transferred from the gate layer to the magnetic domain-magnifying and reproducing layer, and a magnetic field having the other polarity is used to reduce the magnified magnetic domain to perform reproduction.

**40.** The magneto-optical recording medium according to any one of claims 21 to 27, wherein the gate layer has a thickness which is thicker than a thickness of a magnetic wall of the gate layer.

**41.** The magneto-optical recording medium according to any one of claims 21 to 27, wherein the gate layer has a thickness which exceeds 10 nm.

**42.** The magneto-optical recording medium according to any one of claims 21 to 27, wherein the magnetic domain is reduced and transferred from the information-recording layer to the gate layer.

**43.** The magneto-optical recording medium according to any one of claims 21 to 27, wherein a shortest recording magnetic domain subjected to recording in the information-recording layer has a length in a widthwise direction of a track, the length being longer than a length in a linear direction.

**44.** The magneto-optical recording medium according to claim 43, wherein the shortest recording magnetic domain has a shape selected from the group consisting of crescent-shaped, arrow wing-shaped, and rectangular configurations.

**45.** A magneto-optical recording medium comprising a recording layer for recording information therein, a non-magnetic layer, and a reproducing layer, characterized in that:

> magnetization is transferred from the recording layer to the reproducing layer in accordance with magnetostatic coupling by heating the magneto-optical recording medium to a predetermined temperature, and a magnetic domain having the transferred magnetization is magnified for reproduction to be larger than a magnetic domain subjected to recording in the recording layer under a reproducing external magnetic field.

**46.** The magneto-optical recording medium according to claim 45, wherein the reproducing layer behaves as an in-plane magnetizable film at room temperature, and behaves as a perpendicularly magnetizable film at a temperature not less than the predetermined temperature.

**47.** The magneto-optical recording medium according to claim 46, wherein the reproducing layer has a temperature coefficient of not less than 8.0 to change from the in-plane magnetizable film to the perpendicularly magnetizable form.

**48.** The magneto-optical recording medium according to claim 45, wherein the reproducing layer is a perpendicularly magnetizable film.

**49.** The magneto-optical recording medium according to claim 45, wherein the reproducing layer has a minimum stable magnetic domain radius which is larger than the magnetic domain subjected to recording in the recording layer.

50. The magneto-optical recording medium according to claim 45, wherein the non-magnetic layer is composed of at least one selected from the group consisting of SiN, AIN, TiN, $SiO_2$, $Al_2O_3$, SiC, TiC, ZnO, SiAlON, ITO, and $SnO_2$.

51. The magneto-optical recording medium according to claim 45, wherein a shortest recording magnetic domain subjected to recording in the recording layer has a length in a linear direction, the length being not more than 1/2 of a size of a reproducing light beam spot.

52. The magneto-optical recording medium according to any one of claims 45 to 51, wherein a shortest recording magnetic domain subjected to recording in the information-recording layer has a length in a widthwise direction of a track, the length being longer than a length in a linear direction.

53. The magneto-optical recording medium according to claim 52, wherein the shortest recording magnetic domain has a shape selected from the group consisting of crescent-shaped, arrow wing-shaped, and rectangular configurations.

54. The magneto-optical recording medium according to any one of claims 45 to 51, wherein an alternating magnetic field is used as the external magnetic field during reproduction while irradiating the magneto-optical recording medium with a reproducing light beam, a magnetic field having one polarity of the alternating magnetic field is used to magnify the magnetic domain transferred from the recording layer to the reproducing layer, and a magnetic field having the other polarity is used to reduce the magnified magnetic domain to perform reproduction.

55. A magneto-optical recording medium comprising a recording layer for recording information therein, an intermediate layer, and a reproducing layer, for reproducing information by detecting a magnetization state of a magnetic domain transferred from the recording layer to the reproducing layer, characterized in that:

a minimum stable magnetic domain radius in the reproducing layer is larger than a size of a magnetic domain subjected to recording in the recording layer.

56. The magneto-optical recording medium according to claim 55, wherein the magnetic domain subjected to recording in the recording layer is magnified and transferred to the reproducing layer.

57. The magneto-optical recording medium according to claim 55, wherein the intermediate layer is a magnetic layer.

58. The magneto-optical recording medium according to claim 57, wherein the intermediate layer as the magnetic layer behaves as an in-plane magnetizable film at room temperature, and behaves as a perpendicularly magnetizable film at a temperature not less than a predetermined temperature.

59. The magneto-optical recording medium according to claim 58, wherein the intermediate magnetic layer has a temperature coefficient of not less than 8.0 to change from the in-plane magnetizable film to the perpendicularly magnetizable form.

60. The magneto-optical recording medium according to claim 55, wherein the intermediate layer as a magnetic layer has a thickness which is not less than a thickness of a magnetic wall in the intermediate layer.

61. The magneto-optical recording medium according to claim 55, wherein the intermediate layer as a magnetic layer has a thickness which exceeds 10 nm.

62. The magneto-optical recording medium according to claim 55, wherein the magnetic domain magnetically transferred from the recording layer to the intermediate layer has a size which is smaller than a size of the magnetic domain subjected to recording.

63. The magneto-optical recording medium according to claim 55, wherein the intermediate layer is a non-magnetic layer.

64. The magneto-optical recording medium according to claim 63, wherein the non-magnetic layer is composed of at least one selected from the group consisting of SiN, AIN, TiN, $SiO_2$, $Al_2O_3$, SiC, TiC, ZnO, SiAlON, ITO, and $SnO_2$.

65. The magneto-optical recording medium according to claim 63, wherein the non-magnetic layer has a film thickness within a range of 50 to 300 A.

66. The magneto-optical recording medium according to claim 55, wherein the predetermined temperature is a temperature within a range of 100 to 170 °C.

67. The magneto-optical recording medium according to any one of claims 55 to 66, wherein the recording layer is a single-layered magnetic film or a multi-layered magnetic film composed of at least one element selected from the group consisting of Tb, Dy, and Nd, and at least one element selected from the group consisting of Fe, Co, and Ni, or a single-layered magnetic film or a multi-layered magnetic film composed of one element of Pt and Pd, and at least one element selected from the group consisting of Fe, Co, and Ni.

68. The magneto-optical recording medium according to any one of claims 55 to 66, wherein the recording layer is a magnetic layer composed of TbFeCo.

69. The magneto-optical recording medium according to any one of claims 55 to 66, wherein the reproducing layer is a magnetic film composed of at least one element selected from the group consisting of Ho, Gd, Tb, and Dy, and at least one element selected from the group consisting of Fe, Co, and Ni.

70. The magneto-optical recording medium according to any one of claims 55 to 66, wherein the recording layer has a film thickness within a range of 500 to 3000 A.

71. The magneto-optical recording medium according to any one of claims 55 to 66, wherein the recording layer has a film thickness within a range of 50 to 1000 A.

72. The magneto-optical recording medium according to any one of claims 55 to 66, wherein a shortest recording magnetic domain subjected to recording in the reproducing layer has a length in a linear direction, the length being not more than 1/2 of a size of a reproducing light beam spot.

73. The magneto-optical recording medium according to any one of claims 55 to 66, wherein a shortest recording magnetic domain subjected to recording in the information-recording layer has a length in a widthwise direction of a track, the length being shorter than a length in a linear direction.

74. The magneto-optical recording medium according to claim 73, wherein the shortest recording magnetic domain has a shape selected from the group consisting of crescent-shaped, arrow wing-shaped, and rectangular configurations.

75. A reproducing method for reproducing information recorded on the magneto-optical recording medium as set forth in claim 1, comprising the steps of transferring a magnetic domain subjected to recording in an information-recording layer to a magnetic domain-magnifying and reproducing layer by irradiating the magneto-optical recording medium with a reproducing light beam, and magnifying the transferred magnetic domain to be larger than a size of the magnetic domain subjected to recording in the information-recording layer to perform reproduction by applying a reproducing magnetic field having a polarity identical with that of magnetization of the transferred magnetic domain.

76. The reproducing method for the magneto-optical recording medium according to claim 75, wherein an alternating magnetic field modulated on the basis of the reproducing clock is used as the reproducing magnetic field, the transferred magnetic domain is magnified by using the magnetic field having the polarity identical with that of magnetization of the magnetic domain subjected to recording in the information-recording layer, and the magnified magnetic domain is reduced by using a magnetic field having a polarity opposite thereto.

77. The reproducing method for the magneto-optical recording medium according to claim 75, wherein a power of the reproducing light beam is modulated on the basis of a reproducing clock.

78. The reproducing method for the magneto-optical recording medium according to claim 75, wherein one recording magnetic domain of a plurality of recording magnetic domains in the information-recording layer capable of being included within a spot of the reproducing light beam is transferred to the magnetic domain-magnifying and reproducing layer, and the transferred magnetic domain is magnified to be larger than a size of the magnetic domain subjected to recording in the information-recording layer to perform reproduction by applying the reproducing magnetic field having the polarity identical with that of the magnetization of the transferred magnetic domain.

79. The reproducing method for the magneto-optical recording medium according to any one of claims 75 to 78, wherein:

the reproducing magnetic field has its absolute value Hr which satisfies a relationship of He < Hr < Hn for an absolute value He of the magnetic field at a rising point of an initial magnetization curve of a hysteresis curve obtained when the external magnetic field is applied in a direction to magnify the magnetic domain transferred to the magnetic domain-magnifying and reproducing layer, and an absolute value Hn of the magnetic field at a rising point of a major loop of the hysteresis curve, Hn having the same polarity as that of the magnetic field of He; and
the magnetic domain transferred to the magnetic domain-magnifying and reproducing layer has a size which is capable of being magnified depending on a magnitude of the external magnetic field applied during reproduction.

80. The reproducing method for the magneto-optical recording medium according to claim 79, wherein:

the reproducing magnetic field has its absolute value Hr which satisfies a relationship of Hs < Hr < Hn for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer, and an absolute value Hn of the magnetic field at a dropping point of the major loop of the hysteresis curve, Hn having the same polarity as that of the magnetic field of Hs; and
the size of the magnified magnetic domain is capable of being reduced depending on the magnitude of the external magnetic field applied during reproduction.

81. The reproducing method for the magneto-optical recording medium according to claim 79, wherein:

the reproducing magnetic field has its absolute value Hr which satisfies a relationship of Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and
the magnified magnetic domain is capable of being erased depending on the magnitude of the external magnetic field applied during reproduction.

82. The reproducing method for the magneto-optical recording medium according to any one of claims 75 to 81, wherein the magnetic domain subjected to recording in the information-recording layer is subjected to recording so that a length of the magnetic domain in a widthwise direction of a track is longer than a length of the magnetic domain in a linear direction.

83. A reproducing method for reproducing information recorded on the magneto-optical recording medium as set forth in claim 21, comprising the steps of transferring a magnetic domain subjected to recording in an information-recording layer to a magnetic domain-magnifying and reproducing layer via a gate magnetic layer by irradiating the magneto-optical recording medium with a reproducing light beam, and magnifying the transferred magnetic domain to be larger than a size of the magnetic domain subjected to recording in the information-recording layer to perform reproduction by applying a reproducing magnetic field having a direction identical with that of magnetization of the transferred magnetic domain.

84. The reproducing method for the magneto-optical recording medium according to claim 83, wherein a plurality of recording magnetic domains in the information-recording layer included within a spot of the reproducing light beam are individually generated in the gate layer, one generated magnetic domain is transferred to the magnetic domain-magnifying and reproducing layer, and the transferred magnetic domain is magnified to be larger than the size of the magnetic domain subjected to recording in the information-recording layer to perform reproduction by applying the reproducing magnetic field having the direction identical with that of magnetization of the transferred magnetic domain.

85. The reproducing method for the magneto-optical recording medium according to claim 83, wherein an alternating magnetic field modulated on the basis of a reproducing clock is used as the reproducing magnetic field, the transferred magnetic domain is magnified by using a magnetic field having a polarity identical with that of magnetization of the magnetic domain subjected to recording in the information-recording layer, and the magnified magnetic domain is reduced by using a magnetic field having a polarity opposite thereto.

86. The reproducing method for the magneto-optical recording medium according to claim 83, wherein a power of the reproducing light beam is modulated on the basis of a reproducing clock.

87. The reproducing method for the magneto-optical recording medium according to any one of claims 83 to 86, wherein:

the reproducing magnetic field has its absolute value Hr which satisfies a relationship of He < Hr < Hn for an absolute value He of the magnetic field at an initial rising point of an initial magnetization curve of a hysteresis curve obtained when the external magnetic field is applied in a direction to magnify the magnetic domain transferred to the magnetic domain-magnifying and reproducing layer, and an absolute value Hn of the magnetic field at a rising point of a major loop of the hysteresis curve, Hn having the same polarity as that of the magnetic field of He; and

the magnetic domain transferred to the magnetic domain-magnifying and reproducing layer has a size which is capable of being magnified depending on a magnitude of the external magnetic field applied during reproduction.

88. The reproducing method for the magneto-optical recording medium according to claim 87, wherein:

the reproducing magnetic field has its absolute value Hr which satisfies a relationship of Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and
the size of the magnified magnetic domain is capable of being reduced depending on the magnitude of the external magnetic field applied during reproduction.

89. The reproducing method for the magneto-optical recording medium according to claim 87, wherein:

the reproducing magnetic field has its absolute value Hr which satisfies a relationship of Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and
the magnified magnetic domain is capable of being erased depending on the magnitude of the external magnetic field applied during reproduction.

90. A reproducing method for a magneto-optical recording medium, for reproducing information recorded on the magneto-optical recording medium by the aid of a magneto-optical effect, characterized in that:

a magneto-optical recording medium comprising, on a substrate, an information-recording layer, and a magnetic domain-magnifying and reproducing layer for transferring a magnetic domain in the information-recording layer thereto and magnifying the transferred magnetic domain by the aid of an external magnetic field is used as the magneto-optical recording medium; and
the magnetic domain transferred from the information-recording layer to the magnetic domain-magnifying and reproducing layer is magnified to be larger than a size of the magnetic domain subjected to recording in the information-recording layer to perform reproduction by applying at least one of a reproducing magnetic field modulated on the basis of a reproducing clock and a reproducing light beam modulated on the basis of the reproducing clock, to the magneto-optical recording medium.

91. The reproducing method for the magneto-optical recording medium according to claim 90, wherein information is reproduced by irradiating the magneto-optical recording medium with a continuous reproducing light beam while applying the reproducing magnetic field modulated on the basis of the reproducing clock.

92. The reproducing method for the magneto-optical recording medium according to claim 90, wherein information is reproduced by applying a continuous magnetic field while irradiating the magneto-optical recording medium with the reproducing light beam modulated on the basis of the reproducing clock.

93. The reproducing method for the magneto-optical recording medium according to claim 90, wherein information is reproduced by applying the reproducing magnetic field modulated on the basis of the reproducing clock while irradiating the magneto-optical recording medium with the reproducing light beam modulated on the basis of the reproducing clock.

94. The reproducing method for the magneto-optical recording medium according to claim 90, wherein an alternating magnetic field is used as the reproducing magnetic field, and an amplified reproduction signal is detected from each of magnified magnetic domains by repeating a process comprising magnifying the magnetic domain in the magnetic domain-magnifying and reproducing layer to be larger than the size of the magnetic domain subjected to recording in the information-recording layer by using a magnetic field having a polarity in a direction identical with that of magnetization of the magnetic domain subjected to recording in the information-recording layer, and then reducing the magnified magnetic domain in the magnetic domain-magnifying and reproducing layer by using a magnetic field having a polarity opposite thereto.

95. The reproducing method for the magneto-optical recording medium according to claim 90, wherein the magneto-optical recording medium further comprises an intermediate magnetic layer provided between the information-recording layer and the magnetic domain-magnifying and reproducing layer, and wherein the magnetic domain subjected to recording in the information-recording layer is reduced and transferred to the intermediate magnetic layer by irradiating the magneto-optical recording medium with the reproducing light beam, the magnetic domain is transferred from the intermediate magnetic layer to the magnetic domain-magnifying and reproducing layer, and the transferred magnetic domain is magnified to be larger than the size of the magnetic domain subjected to recording in the information-recording layer to perform reproduction by applying the reproducing magnetic field having a polarity identical with that of magnetization of the magnetic domain transferred to the magnetic domain-magnifying and reproducing layer.

96. The reproducing method for the magneto-optical recording medium according to claim 90, wherein:

the magneto-optical recording medium comprises at least the information-recording layer, an intermediate magnetic layer, and the magnetic domain-magnifying and reproducing layer, the layers being successively stacked on the substrate, and wherein:
the magnetic domain subjected to recording in the information-recording layer is transferred to the magnetic domain-magnifying and reproducing layer by irradiating the magneto-optical recording medium with the reproducing light beam from a side of the magnetic domain-magnifying and reproducing layer, and the transferred magnetic domain is magnified to be larger than the size of the magnetic domain subjected to recording in the information-recording layer to perform reproduction by applying, from the side of the magnetic domain-magnifying and reproducing layer, the reproducing magnetic field having a polarity identical with that of magnetization of the transferred magnetic domain.

97. The reproducing method for the magneto-optical recording medium according to any one of claims 90 to 96, wherein:

the reproducing magnetic field has its absolute value Hr which satisfies a relationship of He < Hr < Hn for an absolute value He of the magnetic field at an initial rising point of an initial magnetization curve of a hysteresis curve obtained when the external magnetic field is applied in a direction to magnify the magnetic domain transferred to the magnetic domain-magnifying and reproducing layer, and an absolute value Hn of the magnetic field at a rising point of a major loop of the hysteresis curve, Hn having the same polarity as that of the magnetic field of He; and
the magnetic domain transferred to the magnetic domain-magnifying and reproducing layer has a size which is capable of being magnified depending on a magnitude of the external magnetic field applied during reproduction.

98. The reproducing method for the magneto-optical recording medium according to claim 97, wherein:

the reproducing magnetic field has its absolute value Hr which satisfies a relationship of Hs < Hr for an absolute value Hs of the magnetic field at an initial dropping point of the initial magnetization curve of the hysteresis curve obtained when the external magnetic field is applied in a direction opposite to the direction to magnify the magnetic domain transferred to the magnetic domain-magnifying and reproducing layer; and
the size of the magnified magnetic domain is capable of being reduced depending on the magnitude of the external magnetic field applied during reproduction.

99. The reproducing method for the magneto-optical recording medium according to claim 90, wherein the information-recording layer comprises a gate layer, an exchange coupling force control layer, and a magnetic layer for recording information.

100. A reproducing apparatus for reproducing information recorded on a magneto-optical recording medium, characterized in that:

the reproducing apparatus comprises;
a magnetic head for applying a reproducing magnetic field to the magneto-optical recording medium,
an optical head for irradiating the magneto-optical recording medium with a reproducing light beam,
a clock-generating unit for generating a reproducing clock, and
a control unit for controlling at least one of the magnetic head and the optical head to perform pulse modulation for at least one of the reproducing magnetic field and the reproducing light beam on the basis of the reproducing clock.

101. The reproducing apparatus for the magneto-optical recording medium according to claim 100, wherein:

the magneto-optical recording medium comprises a recording layer and a reproducing layer for transferring magnetization from the recording layer thereto; and

the reproducing apparatus reproduces information by magnifying a magnetic domain transferred to the reproducing layer.

102. The reproducing apparatus for the magneto-optical recording medium according to claim 100, further comprising an optical head-driving unit, and a first synchronization signal-generating circuit for generating a first synchronization signal for pulse-modulating the reproducing light beam on the basis of the reproducing clock, wherein the optical head-driving unit is controlled by the first synchronization signal.

103. The reproducing apparatus for the magneto-optical recording medium according to claim 102, wherein the first synchronization signal-generating circuit controls a pulse period, a pulse width, and a phase of the reproducing light beam.

104. The reproducing apparatus for the magneto-optical recording medium according to claim 100, wherein the reproducing apparatus has a function for recording information on the magneto-optical recording medium, and it further comprises a control circuit for switching and controlling a pulse period, a pulse width, and a phase of a recording light beam, and a pulse period, a pulse width, and a phase of the reproducing light beam respectively.

105. The reproducing apparatus for the magneto-optical recording medium according to claim 100, further comprising a magnetic head-driving unit, and a second synchronization signal-generating circuit for generating a second synchronization signal for pulse-modulating the reproducing magnetic field on the basis of the reproducing clock, wherein the magnetic head-driving unit is controlled by the second synchronization signal.

106. The reproducing apparatus for the magneto-optical recording medium according to claim 105, wherein the second synchronization signal-generating circuit is capable of controlling a pulse period, a pulse width, and a phase of the reproducing magnetic field.

107. The reproducing apparatus for the magneto-optical recording medium according to claim 105, wherein the reproducing apparatus has a function for recording information on the magneto-optical recording medium, and it further comprises a control circuit for switching and controlling a pulse period, a pulse width, and a phase of a recording magnetic field, and a pulse period, a pulse width, and a phase of the reproducing magnetic field respectively.

108. The reproducing apparatus for the magneto-optical recording medium according to claim 100, further comprising:

an optical head-driving unit, a first synchronization signal-generating circuit for generating a first synchronization signal for pulse-modulating the reproducing light beam on the basis of the reproducing clock, a magnetic head-driving unit, and a second synchronization signal-generating circuit for generating a second synchronization signal for pulse-modulating the reproducing magnetic field on the basis of the reproducing clock, wherein:
the optical head-driving unit is controlled by the first synchronization signal, and the magnetic head-driving unit is controlled by the second synchronization signal.

109. The reproducing apparatus for the magneto-optical recording medium according to any one of claims 100 to 108, wherein the reproducing clock is generated from a signal detected by the optical head.

110. The reproducing apparatus for the magneto-optical recording medium according to any one of claims 100 to 108, wherein the reproducing clock is generated on the basis of a signal detected from one selected from the group consisting of a pit, a fine clock mark, and a wobble-shaped groove formed on the magneto-optical recording medium.

111. The reproducing apparatus for the magneto-optical recording medium according to any one of claims 100 to 108, wherein the reproducing clock is generated from a signal detected by the optical head, and it has a period of not less than one period per unit bit.

112. The reproducing apparatus for the magneto-optical recording medium according to any one of claims 100 to 108, wherein the pulse-modulated magnetic field has a duty ratio within a range of 0.15 to 0.9.

113. The reproducing apparatus for the magneto-optical recording medium according to claim 112, wherein the pulse-modulated magnetic field has a duty ratio within a range of 0.15 to 0.6.

114. The reproducing apparatus for the magneto-optical recording medium according to claim 108, wherein the pulse-modulated reproducing light beam has a frequency which is twofold a frequency of the pulse-modulated reproducing magnetic field.

115. The reproducing apparatus for the magneto-optical recording medium according to any one of claims 100 to 108, wherein the optical head and the magnetic head are installed on an identical side with respect to the magneto-optical recording medium.

116. The reproducing apparatus for the magneto-optical recording medium according to any one of claims 100 to 108, wherein the optical head and the magnetic head are integrated into one unit by winding a magnetic coil around an objective lens for constructing the optical head.

117. The reproducing apparatus for the magneto-optical recording medium according to any one of claims 100 to 108, further comprising a control circuit for generating a magnetic field waveform having substantially no overshoot from the magnetic head.

118. The reproducing apparatus for the magneto-optical recording medium according to claim 117, wherein the control circuit is a circuit for generating, from the magnetic head, a magnetic field pulse waveform in which intensity of the magnetic field is gradually increased.

119. The reproducing apparatus for the magneto-optical recording medium according to claim 118, wherein the magnetic field pulse waveform is a triangular wave or a sinusoidal wave.

120. A reproducing apparatus for a magneto-optical recording medium, for reproducing information recorded on the magneto-optical recording medium, characterized in that:

the reproducing apparatus comprises;
an optical head for irradiating the magneto-optical recording medium with a reproducing light beam,
an optical head-driving unit for driving the optical head,
a clock-generating unit for generating a reproducing clock, and
a control unit for controlling the optical head-driving unit to perform pulse modulation for the reproducing light beam on the basis of the reproducing clock, wherein
the magneto-optical recording medium comprises a recording layer for recording information therein, an intermediate layer, and a reproducing layer, the reproducing layer has a minimum stable magnetic domain radius which is larger than a size of a magnetic domain subjected to recording in the recording layer, and the information is reproduced by detecting a magnetization state of the magnetic domain magnified and transferred from the recording layer to the reproducing layer.

Fig. 1A

RECORDING
LIGHT BEAM

11

*13* (MAGNETIC DOMAIN-MAGNIFYING AND REPRODUCING LAYER)
*19*
*3*
*4* (INTERMEDIATE LAYER)
*16* (GATE LAYER)
*17* (EXCHANGE COUPLING FORCE CONTROL LAYER)
*18* (INFORMATION-RECORDING LAYER)
*313b*

*15* (RECORDING MAGNETIC FIELD)

(TRAVELING DIRECTION OF MEDIUM)

Fig. 1B

*12* (INITIALIZING MAGNETIC FIELD)

*3*
*4*
*16*
*17*
*18*

*313a*
*313b*

*12*

EP 0 915 462 A1

Fig. 2

Fig. 3

REPRODUCING
LIGHT BEAM

314

3

4

16

17

18

313a     313b

316 (TRANSFERRED RECORDING
MAGNETIC DOMAIN)

313a

315

311

Fig. 4 A

REPRODUCING
LIGHT BEAM

419
3
4
16
17 } 5
18
313a
313b

411 (MAGNIFYING
REPRODUCING
311 MAGNETIC
FIELD)

413 (MAGNIFIED
MAGNETIC DOMAIN)

Fig. 4 B

REPRODUCING
LIGHT BEAM

3
4
16
17
18

415
(REDUCING
REPRODUCING
MAGNETIC FIELD)

311

417
(DISAPPEARED
MAGNETIC DOMAIN)

Fig. 5A

MAGNETIC DOMAIN-MAGNIFYING
REPRODUCING MAGNETIC FIELD

(INITIAL MAGNETIZATION CURVE)

Fig. 5B

MAGNETIC DOMAIN-REDUCING
REPRODUCING MAGNETIC FIELD

## Fig. 6

6
18
17
16
4
3
2
1

61

6: (DIELECTRIC LAYER)

18: (INFORMATION-RECORDING LAYER)

17: (EXCHANGE COUPLING FORCE CONTROL LAYER)

16: (GATE LAYER)

4: (NON-MAGNETIC LAYER)

3: (MAGNIFYING AND REPRODUCING LAYER)

2: (DIELECTRIC LAYER)

1: (SUBSTRATE)

Fig. 7A

71

6 (DIELECTRIC LAYER)

75 (INFORMATION-
RECORDING LAYER)

4 (NON-MAGNETIC LAYER)

3 (MAGNIFYING AND
REPRODUCING LAYER)

2 (DIELECTRIC LAYER)

1 (SUBSTRATE)

Fig. 7B

72

| PROTECTIVE LAYER | 76 |
| INFORMATION-
RECORDING LAYER | 75 |
| NON-MAGNETIC LAYER | 4 |
| MAGNIFYING AND
REPRODUCING LAYER | 3 |
| DIELECTRIC LAYER | 2 |
| SUBSTRATE | 1 |

EP 0 915 462 A1

## F i g. 8 A

H = 0

REPRODUCTION
SIGNAL

REPRODUCTION
SIGNAL
INTENSITY
(ARBITRARY
SCALE)

CLOCK

→ t

## F i g. 8 B

H = 130

REPRODUCTION
SIGNAL
INTENSITY

→ t

## F i g. 8 C

H = 215

REPRODUCTION
SIGNAL
INTENSITY

→ t

## F i g. 8 D

H = 260

REPRODUCTION
SIGNAL
INTENSITY

↑ MAGNIFY

↓ ERASE

→ t

F i g .  9

_91_

| | |
|---|---|
| | 6 |
| TbFeCo | 99 |
| GdFeCo | 97 |
| TbFeCo | 95 |
| GdFeCo | 93 |
| | 4 |
| | 3 |
| | 2 |
| | 1 |

6: (DIELECTRIC LAYER)
99: (INFORMATION-RECORDING LAYER)
97: (SECOND EXCHANGE COUPLING FORCE CONTROL LAYER)
95: (FIRST EXCHANGE COUPLING FORCE CONTROL LAYER)
93: (GATE LAYER)
4: (NON-MAGNETIC LAYER)
3: (MAGNIFYING AND REPRODUCING LAYER)
2: (DIELECTRIC LAYER)
1: (SUBSTRATE)

Fig. 10

Fig. 11

Fig. 12

SERVO AREA · RECORDING AREA

TRACKING EMBEDDED — MAGNETO-OPTICAL RECORDING
  PITS   CLOCK PIT — MAGNETIC DOMAINS

REPRODUCING
  CLOCK

REPRODUCING EXTERNAL MAGNETIC FIELD
$H_E$
$0$
$H_S$

DC MAGNETIC FIELD REPRODUCING SIGNAL

AMPLITUDE

PULSED MAGNETIC FIELD REPRODUCING WAVEFORM

AMPLITUDE

SAMPLE-HOLD PULSE SYNCHRONISED WITH CLOCK AND
PULSED MAGNETIC FIELD REPRODUCING
WAVEFORM AFTER SAMPLE-HOLD

AMPLITUDE

SAMPLE-HOLD

# F i g. 1 3

Fig. 14

Fig. 15

SERVO AREA | RECORDING AREA

TRACKING PITS  EMBEDDED CLOCK PIT  MAGNETO-OPTICAL RECORDING MAGNETIC DOMAINS

REPRODUCING CLOCK

REPRODUCING LASER BEAM PULSE

$P_R$
$P_B$

REPRODUCING EXTERNAL MAGNETIC FIELD

$H_E$
$O$
$H_S$

DC LIGHT BEAM AND DC MAGNETIC FIELD REPRODUCING SIGNAL

AMPLITUDE

PULSED LIGHT BEAM AND PULSED MAGNETIC FIELD REPRODUCING WAVEFORM

AMPLITUDE

SAMPLE-HOLD PULSE SYNCHRONISED WITH CLOCK AND PULSED LIGHT BEAM AND PULSED MAGNETIC FIELD REPRODUCING WAVEFORM AFTER SAMPLE-HOLD

SAMPLE-HOLD

Fig. 16

RECORDING MARK LENGTH (μm)

Fig. 17

TEMPERATURE →

REPRODUCING
LASER BEAM

DISK-TRAVELING
DIRECTION

SPOT CENTER

DISK POSITION

# Fig. 18A

# Fig. 18B

Fig. 19

Fig. 20

Fig. 21

F i g . 2 2

(TEMPERATURE DISTRIBUTION CAUSED
BY IRRADIATION WITH LASER)

DISK-TRAVELING
DIRECTION

Fig. 23

Fig. 24

FIXED SEPARATION

Fig. 25

Fig. 26

Fig. 27

PIT DENSITY 87 83

85

F i g . 2 8 A

$$|Hep| < |Hsr|$$

$$0.15 \leqq \frac{T_1}{T_1 + T_2} \leqq 0.6$$

F i g . 2 8 B

## F i g .   2 9

EP 0 915 462 A1

# Fig. 30

Fig. 31

(MARK PITCH: 4 μm, 0.4 μm DOMAIN,
1.7 /sec, REPRODUCING POWER: DC 1.65 mW)

(a) H = 0 Oe

REPRODUCTION
SIGNAL

$l \mu s$

(b) H = 130 Oe

MAGNETIC
HEAD-DRIVING
CLOCK

(C) H = 215 Oe

(d) H = 260 Oe

SATURATION
LEVEL

Fig. 32

EP 0 915 462 A1

F i g. 3 3

<u>7 9</u>

1

7 5

4

3

2

7 6

1: SUBSTRATE

75: INFORMATION-RECORDING LAYER

4: NON-MAGNETIC LAYER

3: MAGNIFYING AND REPRODUCING LAYER

2: DIELECTRIC LAYER

76: PROTECTIVE LAYER

## Fig. 34A

DIRECTION OF DISK ADVANCE

RECORDING MAGNETIC DOMAIN

TRACK

## Fig. 34B

TRACK    RECORDING MAGNETIC DOMAIN

Fig. 35

110

| (PROTECTIVE LAYER) | ~76 |
| (RECORDING LAYER) | ~75 |
| (NON-MAGNETIC LAYER) | ~63 |
| (REPRODUCING LAYER) | ~64 |
| (DIELECTRIC LAYER) | ~65 |
| (SUBSTRATE) | ~1 |

Fig. 36

Fig. 37

Fig. 38

## Fig. 39A

125  124

64C

99

75

S  123  S

## Fig. 39B

125  124

64C

99

75

S  123  S

## INTERNATIONAL SEARCH REPORT

| | International application No. |
|---|---|
| | PCT/JP97/02420 |

**A. CLASSIFICATION OF SUBJECT MATTER**

Int. Cl$^6$ G11B11/10

According to International Patent Classification (IPC) or to both national classification and IPC

**B. FIELDS SEARCHED**

Minimum documentation searched (classification system followed by classification symbols)

Int. Cl$^6$ G11B11/10

Documentation searched other than minimum documentation to the extent that such documents are included in the fields searched

| | |
|---|---|
| Jitsuyo Shinan Koho | 1955 - 1997 |
| Kokai Jitsuyo Shinan Koho | 1971 - 1997 |
| Toroku Jitsuyo Shinan Koho | 1994 - 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 6-295479, A (Canon Inc.), October 21, 1994 (21. 10. 94) & EP, 619577, A1 | 45, 46, 48-50, 52, 53, 56-58, 62, 67-69, 71, 73, 74, 100-102, 120 |
| A | | 1-44, 75 |
| Y | JP, 4-325948, A (Seiko Epson Corp.), | 100-102, 120 |
| A | November 16, 1992 (16. 11. 92)(Family: none) | 77 |
| Y | JP, 2-23523, A (Canon Inc.), September 18, 1990 (18. 09. 90)(Family: none) | 74, 82 |
| P | JP, 9-81979, A (Sharp Corp.), March 28, 1997 (28. 03. 97)(Family: none) | 78 |
| A | JP, 7-73519, A (Mitsubishi Chemical Corp.), March 17, 1995 (17. 03. 95)(Family: none) | 110 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| October 2, 1997 (02. 10. 97) | October 21, 1997 (21. 10. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP97/02420 |

### C (Continuation). DOCUMENTS CONSIDERED TO BE RELEVANT

| Category* | Citation of document, with indication, where appropriate, of the relevant passages | Relevant to claim No. |
| --- | --- | --- |
| A V | JP, 3-203051, A (Fuji Xerox Co., Ltd.), September 4, 1991 (04. 09. 91)(Family: none) | 115, 116 |

Form PCT/ISA/210 (continuation of second sheet) (July 1992)